# EUROPÄISCHE PATENTSCHRIFT

(11) **EP 2 413 711 B1**
(45) Veröffentlichungstag und Bekanntmachung des Hinweises auf die Patenterteilung: **06.08.2014**
(21) Anmeldenummer: 10710031.5
(22) Anmeldetag: 22.03.2010
(51) Int. Cl.: A23K 1/165, A23K 1/17, A23K 1/18, A23K 1/16

(54) **DIPEPTIDE ALS FUTTERMITTELADDITIVE**
DIPEPTIDE AS FEEDSTUFF ADDITIVE
DIPEPTIDES UTILISÉS COMME ADDITIFS POUR L'ALIMENTATION ANIMALE

(30) Priorität: 31.03.2009 DE 102009002044
(43) Veröffentlichungstag der Anmeldung: 08.02.2012
(73) Patentinhaber: Evonik Degussa GmbH, 45128 Essen (DE)
(72) Erfinder: KOBLER, Christoph, 63755 Alzenau (DE); HÄUSSNER, Thomas, 63619 Bad Orb (DE); KELM, Katja, 63843 Niedernberg (DE); WECKBECKER, Christoph, 63584 Gründau-Lieblos (DE)
(86) Internationale Anmeldenummer: PCT/EP2010/053722
(87) Internationale Veröffentlichungsnummer: WO 2010/112365

(56) Entgegenhaltungen:
- WO-A1-89/06497
- US-A- 3 980 653
- US-A- 4 056 658
- US-A- 5 167 957
- US-A- 5 525 350
- US-A1- 2003 099 689
- BAKER D H ET AL: "METHIONINE PEPTIDES AS POTENTIAL FOOD SUPPLEMENTS EFFICACY AND SUSCEPTIBILITY TO MAILLARD BROWNING" JOURNAL OF NUTRITION, WISTAR INSTITUTE OF ANATOMY AND BIOLOGY, PHILADELPHIA, PA, US, Bd. 114, Nr. 2, 1. Januar 1984 (1984-01-01), Seiten 292-297, XP002564018 ISSN: 0022-3166

## Beschreibung

### Einleitung

Die vorliegende Erfindung betrifft neue Methionin gebundene nichtnatürliche und natürliche Dipeptide von essentiellen, limitierenden Aminosäuren wie z.B. Lysin, Threonin und Tryptophan, den schwefelhaltigen Aminosäuren Cystein und Cystin, sowie deren Synthese und Verwendung als Futtermitteladditive für die Ernährung von Nutztieren wie Hühnern, Schweinen, Wiederkäuern, insbesondere aber auch von Fischen und Krustentieren aus Aquakulturen.

### Stand der Technik

Die essentiellen Aminosäuren (EAA) Methionin, Lysin, Threonin, Tryptophan, Histidin, Valin, Leucin, Isoleucin, Phenylalanin und Arginin, sowie die beiden schwefelhaltigen Aminosäuren Cystein und Cystin sind sehr wichtige Bestandteile in Futtermitteln und spielen bei der wirtschaftlichen Aufzucht von Nutztieren wie z.B. Hühnern, Schweinen und Wiederkäuern eine bedeutende Rolle. Dabei ist vor allem eine optimale Verteilung und ausreichende Versorgung mit EAAs entscheiden. Da Futter aus natürlichen Eiweißquellen wie z.B. Soja, Mais und Weizen meist in bestimmten EAAs defizitär ist, ermöglicht die gezielte Supplementierung mit synthetischen EAAs wie beispielsweise DL-Methionin, L-Lysin, L-Threonin oder L-Tryptophan zum einen ein schnelleres Wachstum der Tiere bzw. eine höhere Milchproduktion bei Hochleistungsmilchkühen, zum anderen aber auch die effizientere Verwertung des gesamten Futters. Dies stellt einen sehr großen wirtschaftlichen Vorteil dar. Die Märkte für Futtermitteladditive sind von großer industrieller und wirtschaftlicher Bedeutung. Zudem sind sie starke Wachstumsmärkte, was nicht zuletzt auf die steigende Bedeutung von Ländern wie beispielsweise China und Indien zurückzuführen ist.

L-Methionin ((*S*)-2-Amino-4-methylthiobuttersäure) stellt für viele Tierarten die erste limitierende Aminosäure aller EAAs dar und spielt daher in der Tierernährung und als Futtermitteladditiv eine der bedeutendsten Rollen (Rosenberg et al., J. Agr. Food Chem. 1957, 5, 694-700). Bei der klassischen chemischen Synthese fällt Methionin jedoch als Racemat, eine 50:50-Mischung aus D- und L-Methionin, an. Dieses racemische DL-Methionin kann jedoch direkt als Futtermitteladditiv eingesetzt werden, da bei einigen Tierarten unter *in vivo*-Bedingungen ein Umwandlungsmechanismus besteht, der das unnatürliche D-Enantiomer von Methionin in das natürliche L-Enantiomer überführt. Dabei wird das D-Methionin zuerst mit Hilfe einer unspezifischen D-Oxidase zu α-Keto-Methionin desaminiert und anschließend mit einer L-Transaminase zu L-Methionin weiter umgewandelt (Baker, D.H. in "Amino acids in farm animal nutrition", D'Mello, J.P.F. (ed.), Wallingford (UK), CAB International, 1994, 37-61). Dadurch wird die verfügbare Menge an L-Methionin im Organismus erhöht, die dann dem Tier zum Wachstum zur Verfügung stehen kann. Die enzymatische Umwandlung von D- zu L-Methionin wurde bei Hühnern, Schweinen und Kühen, insbesondere aber auch bei Fischen, Shrimps und Prawns festgestellt. So konnte beispielsweise Sveier et al. (Aquacult. Nutr. 2001, 7 (3), 169-181) und Kim et al. (Aquaculture 1992, 101 (1-2), 95-103) zeigen, dass die Umwandlung von D- in L-Methionin bei carnivoren atlantischen Lachsen und Regenbogenforellen möglich ist. Gleiches konnte von Robinson et al. (J. Nutr. 1978, 108 (12), 1932-1936) und Schwarz et al. (Aquaculture 1998, 161, 121-129) für omnivore Fischarten wie zum Beispiel Catfish und Karpfen zeigen. Darüber hinaus konnten Forster und Dominy (J. World Aquacult. Soc. 2006, 37 (4), 474-480) in Fütterungsversuchen von omnivoren Shrimps der Art *Litopenaeus vannamei* zeigen, dass DL-Methionin die gleiche Wirksamkeit wie L-Methionin besitzt. 2007 wurden weltweit über 700.00 t kristallines DL-Methionin bzw. racemisches, flüssiges Methionin-Hydroxy-Analog (MHA, *rac*-2-Hydroxy-4-(methylthio)butansäure (HMB)) und festes Calcium-MHA produziert und erfolgreich bei monogastrischen Tieren wie z.B. Geflügel und Schweinen direkt als Futtermitteladditiv eingesetzt.

Im Gegensatz zu Methionin können von Lysin, Threonin und Tryptophan nur jeweils die L-Enantiomere als Futtermitteladditive verwendet werden, da die jeweiligen D-Enantiomere dieser drei essentiellen und limitierenden Aminosäuren von Organismus unter physiologischen Bedingungen nicht zu den entsprechenden L-Enantiomeren umgewandelt werden können. So lag allein der Weltmarkt für L-Lysin, die erstlimitierende Aminosäure beispielsweise bei Schweinen, für das Jahr 2007 bei über einer Million Tonnen. Für die beiden anderen limitierenden essentiellen Aminosäuren L-Threonin und L-Tryptophan lag der Weltmarkt 2007 bei über 100.000 t bzw. knapp unter 3000 t.

Bei monogastrischen Tieren wie z.B. Geflügel und Schweinen wird üblicherweise DL-Methionin, MHA, aber auch L-Lysin, L-Threonin und L-Tryptophan direkt als Futtermitteladditiv verwendet. Im Gegensatz dazu ist die Supplementierung des Futters mit EAAs wie Methionin, Lysin, Threonin oder auch MHA bei Wiederkäuern nicht effektiv, da die Hauptmenge im Pansen der Wiederkäuer durch Mikroben abgebaut wird. Aufgrund dieses Abbaus gelangt daher nur ein Bruchteil der supplementierten EAAs in den Dünndarm des Tiers, wo im Allgemeinen die Absorption ins Blut erfolgt. Unter den EAAs spielt vor allem Methionin bei Wiederkäuern eine entscheidende Rolle, da nur bei optimaler Versorgung eine hohe Milchproduktion gewährleistet ist. Damit dem Wiederkäuer Methionin mit hoher Effizienz zur Verfügung stehen kann, muss eine pansenstabile geschützte Form eingesetzt werden. Dabei gibt es mehrere Möglichkeiten DL-Methionin bzw. *rac*-MHA diese Eigenschaften zu verleihen. Eine Möglichkeit besteht darin, durch Anbringung einer geeigneten Schutzschicht bzw. Verteilung des Methionins in einer Schutzmatrix eine hohe Pansenstabiliät zu erreichen. Dadurch kann Methionin den Pansen praktisch ohne Verlust passieren. Im weiteren Verlauf wird die Schutzschicht dann z. B. im Labmagen durch saure Hydrolyse entfernt und das freiwerdende Methionin kann dann im Dünndarm vom Wiederkäuer absorbiert werden. Kommerziell erhältliche Produkte sind z.B. Mepron^{®} der Firma Evonik Degussa und Smartamine™ der Firma Adisseo. Die Herstellung bzw. die Beschichtung von Methionin stellt meist ein technisch kompliziertes und aufwendiges Verfahren dar und ist daher teuer. Zudem kann die oberflächliche Beschichtung der fertigen Pellets leicht durch mechanische Belastung und Abrieb während der Futterverarbeitung beschädigt werden, was zur Verminderung bzw. bis zum vollständigen Verlust des Schutzes führen kann. Deshalb ist es auch nicht möglich, die geschützten Methioninpellets in ein größeres Mischfutterpellet zu verarbeiten, da dadurch wiederum die schützende Schicht durch die mechanische Beanspruchung aufbrechen würde. Dies schränkt die Verwendung solcher Produkte ein. Eine weitere Möglichkeit zur Erhöhung der Pansenstabilität ist die chemische Derivatisierung von Methionin bzw. MHA. Dabei werden die funktionellen Gruppen des Moleküls mit geeigneten Schutzgruppen derivatisiert. Dies kann z.B. durch Veresterung der Carbonsäurefunktion mit Alkoholen erfolgen. Dadurch kann der Abbau im Pansen durch Mikroorganismen verringert werden. Ein kommerziell erhältliches Produkt mit chemischem Schutz ist beispielsweise Metasmart™, der racemische *iso*-Propylester von MHA (HMBi). In WO00/28835 wurde eine Biowertigkeit von mindestens 50% für HMBi bei Wiederkäuern veröffentlicht. Der Nachteil der chemischen Derivatisierung von Methionin bzw. MHA besteht oft in der schlechteren Bioverfügbarkeit und dem vergleichsweise niedrigen Wirkstoffgehalt.

Neben der Problematik des Abbaus im Pansen von supplementiertem EAAs wie Methionin, Lysin oder Threonin bei Wiederkäuern kann es aber auch bei Fischen und Krustentieren zu unterschiedlichen Problemen bei der Supplementierung von EAAs zum Futter geben. Durch die rasante wirtschaftliche Entwicklung der Fisch- und Krustentierzucht in hoch industrialisierten Aquakulturen gewinnt eine optimale, wirtschaftliche und effiziente Supplementierungsmöglichkeit von essentiellen und limitierenden Aminosäuren gerade in diesem Bereich in den letzten Jahren eine immer bedeutendere Rolle (Food and Agriculture Organization of the United Nation (FAO) Fisheries Department "State of World Aquaculture 2006", 2006, Rome. International Food Policy Research Institute (IFPRI) "Fish 2020: Supply and Demand in Changing Markets", 2003, Washington, D.C.). Dabei kann es im Gegensatz zu Hühnern und Schweinen bei der Verwendung von kristallinen EAAs als Futtermitteladditiv jedoch bei bestimmten Fisch- und Krustentiersorten zu unterschiedlichen Problemen kommen. So berichten Rumsey und Ketola (J. Fish. Res. Bd. Can. 1975, 32, 422-426), dass die Verwendung von Sojamehl in Verbindung mit einzeln supplementierten, kristallinen Aminosäuren zu keiner Wachstumssteigung bei Regenbogenforellen führte. Murai et al. (Bull. Japan. Soc. Sci. Fish. 1984, 50 (11), 1957) konnte zeigen, dass die tägliche Fütterung von Fischdiäten mit hohen Raten an supplementierten, kristallinen Aminosäuren bei Karpfen dazu führten, dass über 40% der freien Aminosäuren über die Kiemen und Nieren ausgeschieden werden. Aufgrund der schnellen Resorption von supplementierten Aminosäuren kurz nach der Futteraufnahme, kommt es zu einem sehr schnellen Anstieg der Aminosäurenkonzentration im Blutplasma des Fisches (Fast-Response). Zu dieser Zeit befinden sich aber die anderen Aminosäuren aus den natürlichen Proteinquellen wie z.B. Sojamehl noch nicht im Plasma, was zur Asynchronität der gleichzeitigen Verfügbarkeit aller wichtigen Aminosäuren führen kann. Ein Teil der hochkonzentrierten Aminosäuren wird in Folge dessen schnell ausgeschieden bzw. im Organismus schnell metabolisiert und z.B. als reine Energiequelle genutzt. Dadurch kommt es beim Karpfen nur zu einer geringen bzw. keiner Wachstumssteigerung bei der Verwendung von kristallinen Aminosäuren als Futtermitteladditive (Aoe et al., Bull. Jap. Soc. Sci. Fish. 1970, 36, 407-413). Bei Krustentieren kann die Supplementierung von kristallinen EAAs noch zu weiteren Problemen führen. Durch das langsame Fressverhalten von bestimmten Krustentieren wie z.B. Shrimps der Art *Litopenaeus Vannamei* kommt es, aufgrund der langen Verweilzeit des Futters unter Wasser, zum Herauslösen der supplementierten, wasserlöslichen EAAs (Leaching), was zur Eutrophierung des Gewässers und nicht zu einer Wachstumssteigerung der Tiere führt (Alam et al., Aquaculture 2005, 248, 13-16). Die effektive Versorgung von Fischen und Krustentieren, die in Aquakulturen gehalten werden, erfordert somit für bestimmte Arten und Anwendungen eine spezielle Produktform der EAAs wie z.B. eine entsprechend chemisch oder physikalisch geschützte Form. Dabei ist das Ziel zum einen, dass das Produkt während der Fütterung in der wässrigen Umgebung hinreichend stabil bleibt und nicht aus dem Futter herausgelöst wird. Zum anderen, dass das schließlich vom Tier aufgenommene Aminosäureprodukt im tierischen Organismus optimal und mit hoher Effizienz verwertet werden kann.

In der Vergangenheit wurden viele Anstrengungen unternommen, um geeignete Futtermitteladditive, im Besonderen auf der Basis der essentiellen Aminosäuren Methionin- und Lysin, für Fische und Krustentiere zu entwickeln. So wird beispielsweise in WO8906497 die Verwendung von Di- und Tripeptiden als Futtermitteladditiv für Fisch- und Krustentieren beschrieben. Dadurch soll das das Wachstum der Tiere gefördert werden. Dabei kamen aber bevorzugt Di- und Tripeptide aus nicht essentiellen und auch nicht limitierenden Aminosäuren wie z.B. Glycin, Alanin und Serin zum Einsatz, die in vielen pflanzlichen Proteinquellen mehr als ausreichend vorhanden sind. Als methioninhaltige Dipeptide wurde nur DL-Alanyl-DL-Methionin und DL-Methionyl-DL-Glycin beschrieben. Dadurch sind im Dipeptid aber nur effektiv 50% Wirkstoff (mol/mol) enthalten, was unter wirtschaftlichen Gesichtspunkten als sehr nachteilig einzustufen ist. In WO02088667 wird die enantioselektive Synthese und Anwendung von Oligomeren aus MHA und Aminosäuren wie z.B. Methionin als Futtermitteladditive, unter anderem auch für Fische und Krustentiere, beschrieben. Dadurch soll ein schnelleres Wachstum erzielt werden können. Die beschriebenen Oligomere werden durch eine enzymkatalysierte Reaktion aufgebaut und weisen eine sehr breite Verteilung der Kettenlänge der einzelnen Oligomere auf. Dadurch wird das Verfahren unselektiv, teuer und aufwendig in der Durchführung und Aufreinigung. Dabrowski et al. beschreibt in US20030099689 die Verwendung von synthetischen Peptiden als Futtermitteladditive zur Wachstumsförderung für aquatische Tiere. Dabei können die Peptide einen Gewichtsanteil von 6-50% der gesamten Futterformulierung ausmachen. Die synthetischen Peptide bestehen bevorzugt aus EAAs. Die enantioselektive Synthese solcher synthetischer Oligo- und Polypeptide ist jedoch sehr aufwendig, teuer und großtechnisch schwer umsetzbar. Zudem ist die Wirksamkeit von Polypeptiden einer einzelnen Aminosäure umstritten, da diese oft nur sehr langsam oder gar nicht unter physiologischen Bedingungen zu freien Aminosäuren umgesetzt werden. So beschreibt beispielsweise Baker et al. (J. Nutr. 1982, 112, 1130-1132), dass Poly-L-Methionin aufgrund der absoluten Unlöslichkeit in Wasser keine Biowertigkeit bei Hühnern aufweist, da eine Resorption vom Organismus nicht möglich ist.

Neben dem Einsatz neuer chemischer Derivate von EAAs wie z.B. methioninhaltige Peptide und Oligomere wurden auch verschiedene physikalische Schutzmöglichkeiten wie z.B Coatings bzw. die Einbettung einer EAA in einer Schutzmatrix untersucht. So konnten beispielsweise Alam et al. (Aquacult. Nutr. 2004, 10, 309-316 und Aquaculture 2005, 248, 13-19) zeigen, dass gecoatetes Methionin und Lysin im Gegensatz zu nicht gecoatetem einen sehr positiven Einfluss auf das Wachstum von jungen Kuruma Shrimps besitzt. Obwohl die Verwendung eines speziellen Coatings das Leaching von Methionin und Lysin aus dem Futterpellet unterdrücken konnte, gibt es einige gravierende Nachteile. Die Herstellung bzw. die Beschichtung von Aminosäuren stellt meist ein technisch kompliziertes und aufwendiges Verfahren dar und ist daher teuer. Zudem kann die oberflächliche Beschichtung der fertig gecoateten Aminosäure leicht durch mechanische Belastung und Abrieb während der Futterverarbeitung beschädigt werden, was zur Verminderung bzw. bis zum vollständigen Verlust des physikalischen Schutzes führen kann. Hinzukommt, dass durch ein Coating oder Verwendung einer Matrixsubstanz der Gehalt der Aminosäure verringert und damit oft unwirtschaftlich wird.

### Aufgabe der Erfindung

Eine generelle Aufgabe war es, ein Futtermittel bzw. einen Futtermittelzusatzstoff für die Tierernährung auf Basis eines neuen methioninhaltigen Ersatzstoffes bereitzustellen, bei dem Methionin kovalent an eine essentielle und limitierende Aminosäure wie z.B. L-Lysin, L-Threonin und L-Tryptophan gebunden ist und welcher als Futtermitteladditive für die Ernährung von Nutztieren wie Hühnern, Schweinen, Wiederkäuern, insbesondere aber auch von Fischen und Krustentieren aus Aquakulturen verwendet werden kann.

Vor dem Hintergrund der Nachteile des Standes der Technik war es vor allem die Aufgabe, ein chemisch geschütztes Produkt aus der kovalent gebundenen Kombination aus DL-Methionin plus EAA wie z.B. L-Lysin, L-Threonin oder L-Tryptophan für verschiedene Nutztiere wie Hühner, Schweine und Wiederkäuer, aber auch für viele omni-, herbi- und karnivore Fisch- und Krustentierarten, die in Salz- oder Süßwasser leben, bereitzustellen. Dieses Produkt sollte neben der Funktion als Methioninquelle auch als Quelle für alle anderen EAAs fungieren. Insbesondere sollte dieses Produkt einen "Slow Release"-Mechanismus, also eine langsame und kontinuierliche Freisetzung von freiem Methionin und EAA unter physiologischen Bedingungen besitzen. Zudem sollte die chemisch geschützte Produktform aus Methionin und EAA pansenstabil sein und damit für alle Wiederkäuer geeignet sein. Für die Anwendung als Futtermitteladditiv für Fische und Krustentiere sollte die Produktform ein geringes Löslichkeitsverhalten aus dem Gesamtfutterpellet bzw. -extrudat im Wasser aufweisen (Leaching).

Eine weitere Aufgabe war es, ein Ersatzstoff für kristalline EAAs als Futtermittel bzw. einen Futtermittelzusatzstoff mit sehr hoher Biowertigkeit aufzufinden, der gute Handhabbarkeit und Lagerfähigkeit sowie Stabilität unter den üblichen Bedingungen der Mischfutterverarbeitung, insbesondere der Pelletierung und Extrusion aufweisen sollte.

Auf diese Weise sollte beispielsweise Hühnern, Schweinen, Wiederkäuern, Fischen und Krustentieren neben kristallinen EAAs weitere effiziente Quellen essentieller Aminosäuren zur Verfügung gestellt werden, welche möglichst die Nachteile der bekannten Produkte nicht oder nur in verringertem Umfang aufweisen.

Des Weiteren sollten verschiedene neue und flexible Syntheserouten für Dipeptide enthaltend lediglich ein Methioninrest, insbesondere für L-EAA-DL-Methionin **(I)** und DL-Methionyl-L-EAA **(II)** und entwickelt werden. Für eine Syntheseroute sollten dabei typische Vor- und Nebenprodukten aus dem technischen DL-Methionin Produktionsprozess als Startmaterial verwendet werden.

### Beschreibung der Erfindung

Die Aufgabe wird gelöst durch Futtermitteladditive enthaltend Dipeptide oder deren Salze, wobei ein Aminosäurerest des Dipeptides ein DL-Methionylrest ist und der andere Aminosäurerest des Dipeptides eine Aminosäure in der L-Konfiguration ausgewählt aus der Gruppe Lysin, Threonin, Tryptophan, Histidin, Valin, Leucin, Isoleucin, Phenylalanin, Arginin, Cystein und Cystin ist.

In bevorzugter Weise enthält das Futtermitteladditiv Dipeptide der allgemeinen Formel DL-Methionyl-L-EAA (= Mischung aus D-Methionyl-L-EAA und L-Methionyl-L-EAA) und/oder L-EAA-DL-Methionin (= Mischung aus L-EAA-D-Methionin und L-EAA-L-Methionin), wobei L-EAA eine Aminosäure in der L-Konfiguration ausgewählt aus der Gruppe Lysin, Threonin, Tryptophan, Histidin, Valin, Leucin, Isoleucin, Phenylalanin, Arginin, Cystein und Cystin ist.

Gegenstand der Erfindung ist weiterhin eine Futtermittelmischung enthaltend das genannten Futtermitteladditiv.

Das Futtermitteladditiv enthaltend L-EAA-DL-Methionin und/oder DL-Methionyl-L-EAA und deren Salze ist geeignet als Futtermitteladditiv in Futtermischungen für Geflügel, Schweine, Wiederkäuer, insbesondere aber auch für Fische und Krustentiere aus Aquakulturen.

In bevorzugter Weise enthält die Futtermittelmischung 0,01 bis 5 Gew.-%, bevorzugt 0,05 bis 0,5 Gew.-% L-EAA-DL-Methionin und DL-Methionyl-L-EAA enthält.

Die Verwendung von L-EAA-DL-Methionin und DL-Methionyl-L-EAA hat sich hierbei als besonders vorteilhaft erwiesen, weil diese Dipeptide ein gutes Leaching-Verhalten aufgrund der niedrigen Löslichkeit aufweisen.

Weiterhin zeigt die Verbindung eine gute Pelletier- und Extrusionsstabilität bei der Futtermittelherstellung. Die Dipeptide L-EAA-DL-Methionin und DL-Methionyl-L-EAA sind stabil in Mischungen mit üblichen Komponenten und Futtermitteln wie z.B. Getreide (z.B. Mais, Weizen, Tritikale, Gerste, Hirse, u.a.), pflanzliche oder tierische Eiweißträger (z.B. Sojabohnen und Raps und deren Weiterverarbeitungsprodukte, Leguminosen (z.B. Erbsen, Bohnen, Lupinen, etc.), Fischmehl, u.a.)und in Kombination mit supplementierten essentiellen Aminosäuren, Proteinen, Peptiden, Kohlenhydraten, Vitaminen, Mineralien, Fetten und Ölen.

Weiterhin ist von Vorteil, dass durch den hohen Wirkstoffanteil von L-EAA-DL-Methionin und DL-Methionyl-L-EAA pro kg Substanz, im Vergleich zu DL-Methionin und L-EAA pro Mol L-EAA-DL-Methionin bzw. DL-Methionyl-L-EAA ein Mol Wasser eingespart wird.

In einer bevorzugten Verwendung enthält die Futtermittelmischung Proteine und Kohlehydrate, vorzugsweise auf Basis von Fisch-, Soja- oder Maismehl, und können mit essentiellen Aminosäuren, Proteinen, Peptiden, Vitaminen, Mineralien, Kohlenhydraten, Fetten und Ölen supplementiert sein.

Insbesondere ist bevorzugt, dass in der Futtermittelmischung DL-Methionyl-L-EAA und L-EAA-DL-Methionin allein als D-Methionyl-L-EAA, L-Methionyl-L-EAA, L-EAA-D-Methionin oder L-EAA-L-Methionin, als Mischung untereinander bzw. auch als Mischung mit D-Methionyl-D-EAA, L-Methionyl-D-EAA, D-EAA-D-Methionin oder D-EAA-L-Methionin vorliegt, bevorzugt jeweils zusätzlich in Mischung mit DL-Methionin, vorzugsweise mit einem DL-Methioninanteil von 0,01 bis 90 Gew.-%, bevorzugt von 0,1 bis 50 Gew.-%, besonders bevorzugt von 1 bis 30 Gew.-%, bevorzugt jeweils zusätzlich in Mischung mit eine L-EAA wie beispielsweise L-Lysin, vorzugsweise mit einem L-EAA Anteil von 0,01 bis 90 Gew.-%, bevorzugt von 0,1 bis 50 Gew.-%, besonders bevorzugt von 1 bis 30 Gew.-%.

In einer bevorzugten Verwendung sind die in Aquakulturen gehaltene Tiere Süß- und Salzwasserfische und -krustentiere ausgewählt aus der Gruppe bestehend aus Karpfen, Forellen, Lachse, Welse, Barsche, Plattfische, Störe, Thunfische, Aale, Brassen, Dorsche, Shrimps, Krill und Prawns, ganz besonders für Silver- (*Hypophthalmichthys molitrix*)*,* Gras-(*Ctenopharyngodon idella*), Schuppen- (*Cyprinus carpio*) und Bigheadkarpfen (*Aristichthys nobilis*), Karausche (*Carassius carassius*), Catla (*Catla Catla*), Roho Labeo (*Labeo rohita*), pazifischer und atlantischer Lachs (*Salmon salar* und *Oncorhynchus kisutch*)*,* Regenbogenforelle (*Oncorhynchus mykiss*), amerikanischer Wels (*Ictalurus punctatus*), afrikanischer Wels (*Clarias gariepinus*), Pangasius (*Pangasius bocourti* und *Pangasius hypothalamus*), Niltilapie (*Oreochromis niloticus*), Milchfisch (*Chanos chanos*), Cobia (*Rachycentron canadum*), Whiteleg Shrimp (*Litopenaeus vannamei*), Black Tiger Shrimp (*Penaeus monodon*) und Giant River Prawn (*Macrobrachium rosenbergii*).

Gemäß der Erfindung wird L-EAA-DL-Methionin (L-EAA-DL-Met) **(I)** und DL-Methionyl-L-EAA (DL-Met-L-EAA) **(II)** oder dessen Alkali- und Erdalkalisalze wie z.B. die schwerlöslichen Calcium- oder Zinksalze als Zusatz in Futtermittelgemischen als D-Methionyl-L-EAA, L-Methionyl-L-EAA, L-EAA-D-Methionin oder L-EAA-L-Methionin oder in den jeweiligen Diastereomerengemischen, alleine oder in Mischung mit DL-Methionin, alleine oder in Mischung mit L-EAA vorzugsweise für Geflügel, Schweine, Wiederkäuer, und besonders bevorzugt für Fische und Krustentiere, verwendet:

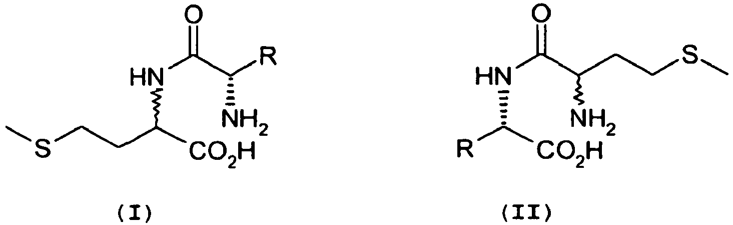

Dabei existieren vom L-EAA-DL-Methionin **(I)** die beiden Diastereomere L-EAA-D-Met (LD-**I**) und L-EAA-L-Met (LL-**I**). Ebenso gibt es vom Dipeptid DL-Methionyl-L-EAA **(II)** jeweils die zwei verschiedenen Stereoisomere D-Met-L-EAA (DL-**II**) und L-Met-L-EAA (LL-**II**). Dabei sind nur die beiden Diastereomere L-EAA-L-Met (LL-**I**) und L-Met-L-EAA (LL-**II**) natürlich, die beiden anderen L-EAA-D-Met (LD-**I**) und D-Met-L-EAA (DL-**II**) jedoch nichtnatürlich (siehe **Schema 1).**

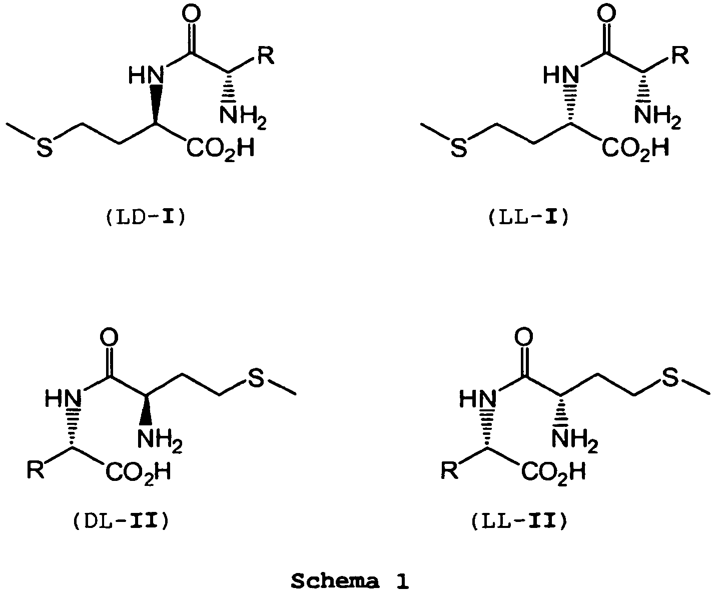

Dabei steht der Rest R der EAA für:

| | | |
|---|---|---|
| **Ia** bzw. **IIa:** | R = 1-Methylethyl- | (Valin) |
| **Ib** bzw. **IIb:** | R = 2-Methylpropyl- | (Leucin) |
| **Ic** bzw. **IIc** | R = (1*S*)-1-Methylpropyl- | (Isoleucin) |
| **Id** bzw. **IId** | R = (1*R*)-1-Hydroxyethyl- | (Threonin) |
| **Ie** bzw. **IIe** | R = 4-Aminobutyl- | (Lysin) |
| **If** bzw. **IIf** | R = 3-[(Aminoiminomethyl)-amino]propyl- | (Arginin) |
| **Ig** bzw. **IIg** | R = Benzyl- | (Phenylalanin) |
| **Ih** bzw. **IIh** | R = (1*H*-Imidazol-4-yl)methyl- | (Histidin) |
| **Ij** bzw. **IIj** | R = (1*H*-Indol-3-yl)methyl- | (Tryptophan) |

Dabei können die Stereoisomere L-EAA-D-Methionin (LD-**I**), L-EAA-L-Methionin (LL-**I**), D-Methionyl-L-EAA (DL-**II**) und L-Methionyl-L-EAA (LL-**II**) alleine oder in Mischungen untereinander, vorzugsweise für Geflügel, Schweine, Wiederkäuer, Fische, Krustentiere und auch für Haustiere als Futtermitteladditiv eingesetzt werden.

Neben der Entwicklung einer neuen Syntheseroute zur Darstellung von L-EAA-DL-Methionin **(I)** und DL-Methionyl-L-EAA **(II)** ist der Hauptgegenstand der vorliegenden Erfindung die Verwendung von **I** und **II** als Diastereomerengemisch aus einer Mischung aus D-Methionyl-L-EAA (DL-**II**) und L-Methionyl-L-EAA (LL-**II**) bzw. aus einer Mischung von L-EAA-D-Methionin (LD-**I**) und L-EAA-L-Methionin (LL-**I**) oder jeweils als einzelnes Diastereomer D-Methionyl-L-EAA (DL-**II**), L-Methionyl-L-EAA (LL-**II**), L-EAA-D-Methionin (LD-**I**) bzw. L-EAA-L-Methionin (LL-**I**) als Wachstumspromotor für Geflügel, Schweine, Wiederkäuer, aber auch für omni-, carni- und herbivore Fische und Krustentiere in Aquakulturen. Zudem kann durch die Verwendung von L-EAA-DL-Methionin **(I)** bzw. DL-Methionyl-L-EAA **(II)** als Futtermitteladditiv die Milchproduktion bei Hochleistungsmilchkühen gesteigert werden.

So konnte erfinderisch gezeigt werden, dass L-EAA-DL-Methionin **(I)** bzw. DL-Methionyl-L-EAA **(II)** als Diastereomerengemisch aus einer 50:50-Mischung von L-EAA-D-Methionin (LD-**I**) und L-EAA-L-Methionin (LL-**I**) bzw. aus einer 50:50-Mischung von D-Methionyl-L-EAA (DL-**II**) und L-Methionyl-L-EAA (LL-**II**) oder jeweils als einzelnes Diastereomer unter physiologischen Bedingungen enzymatisch von Hühnern, Schweinen, Kühen, Fischen wie z.B. Karpfen und Forellen, aber auch von Krustentieren wie beispielsweise *Litopenaeus Vannamei* (Whiteleg Shrimp) und *Macrobrachium Rosenbergii* (Giant River Prawn) zu freiem D- bzw. L-Methionin und jeweils zu L-EAA gespalten werden kann (siehe **Schema 2).**

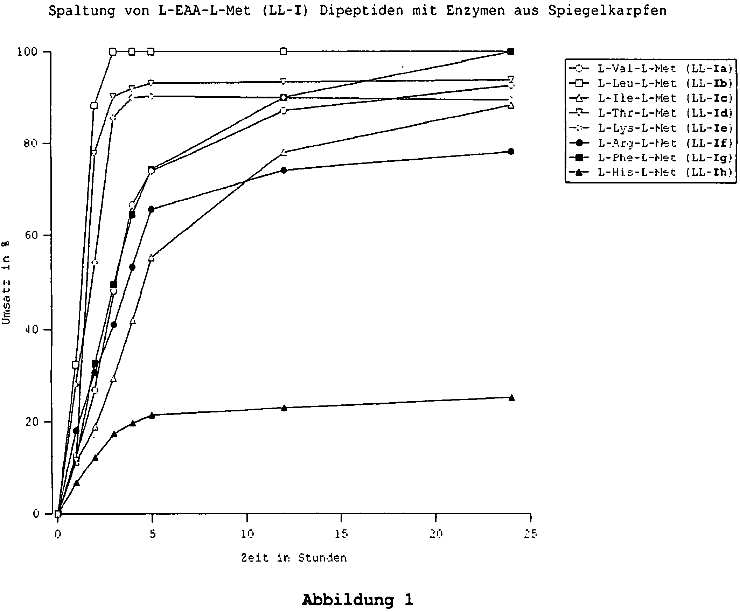

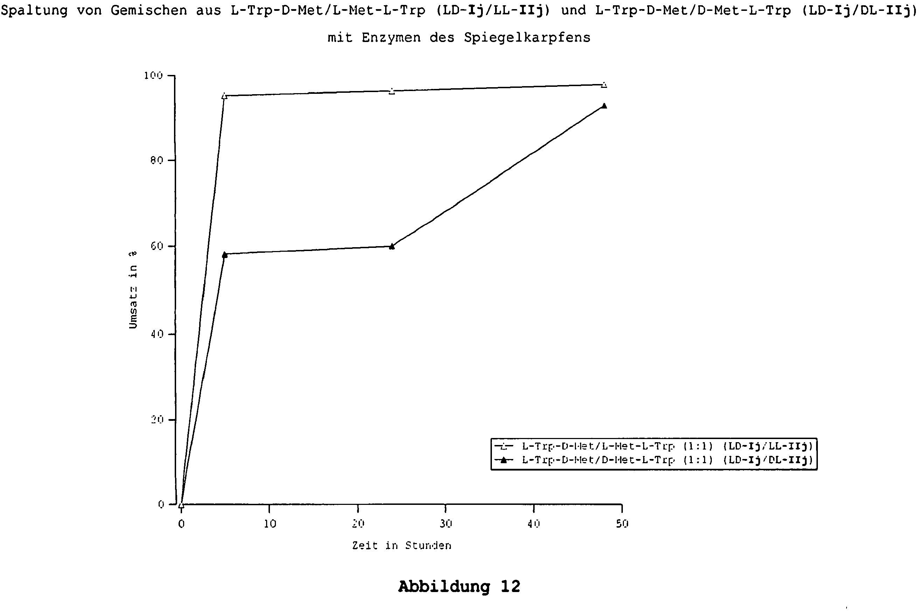

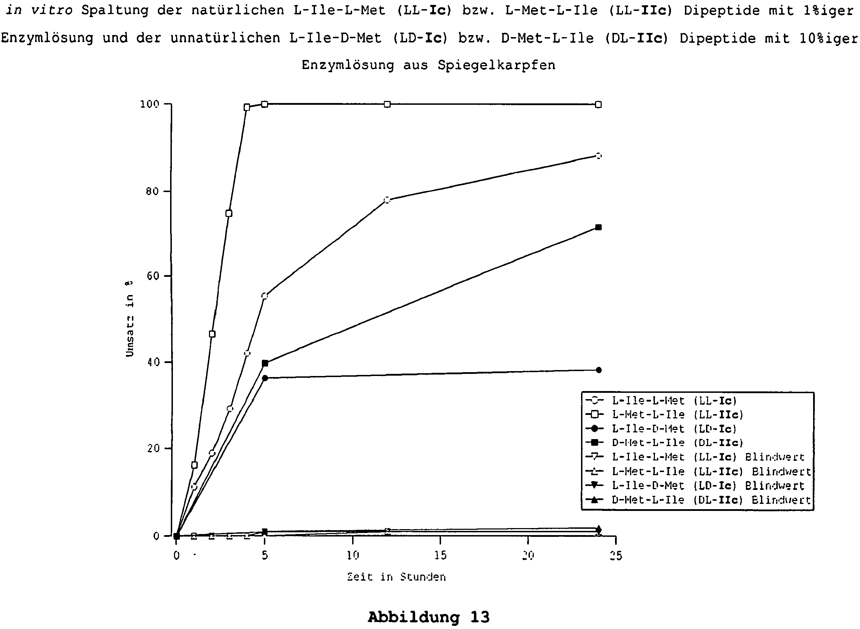

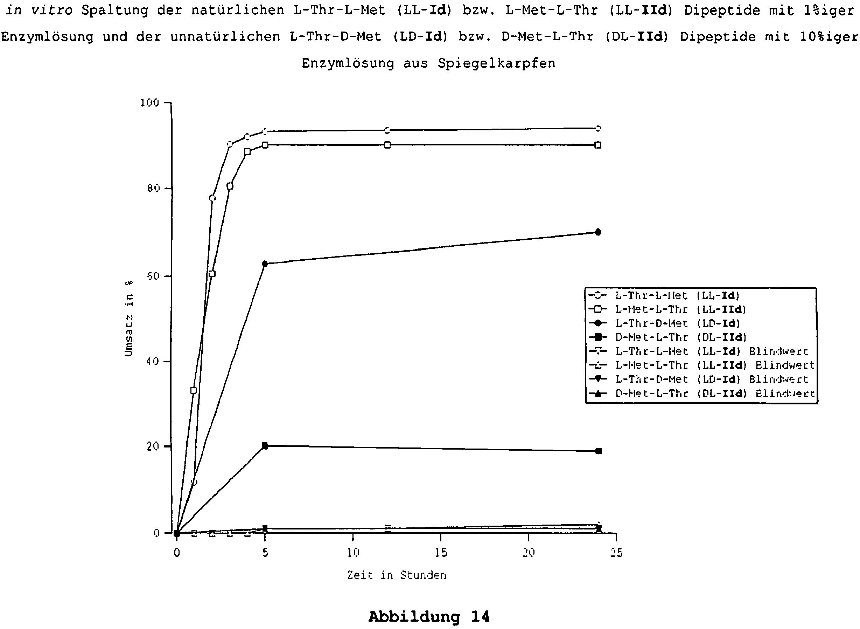

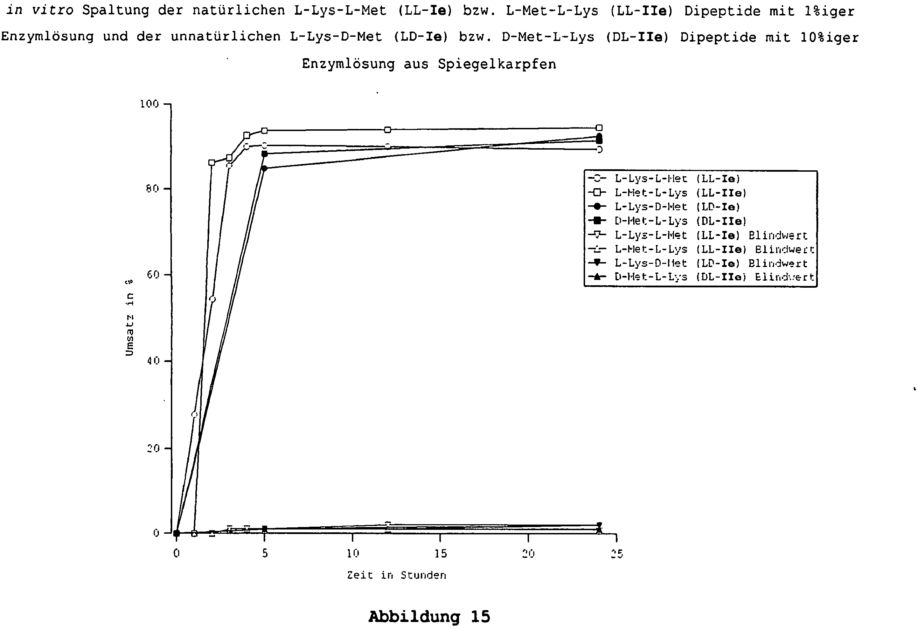

Dazu wurden die entsprechenden Verdauungsenzyme beispielsweise aus Hühnern, omnivoren Karpfen, karnivoren Forellen und omnivoren Whiteleg Shrimps (*Litopenaeus Vannamei*) isoliert und in optimierten *in vitro* Versuchen unter physiologisch vergleichbaren Bedingungen mit DL-Methionyl-L-EAA **(II)** als Diastereomerengemisch aus einer 50:50-Mischung von D-Methionyl-L-EAA (DL-**II**) und L-Methionyl-L-EAA (LL-**II**) bzw. L-EAA-DL-Methionin **(I)** aus einer 50:50-Mischung von L-EAA-D-Methionin (LD-**I**) und L-EAA-L-Methionin (LL-**I**) oder jeweils als einzelnes Diastereomer D-Methionyl-L-EAA (DL-**II**), L-Methionyl-L-EAA (LL-**II**), L-EAA-D-Methionin (LD-**I**) oder L-EAA-L-Methionin (LL-**I**) umgesetzt. Die erfindungsgemäße Besonderheit der Spaltung von L-EAA-DL-Methionin **(I)** bzw. DL-Methionyl-L-EAA **(II)** liegt darin, dass neben den zwei natürlichen Diastereomeren L-EAA-L-Methionin (LL-**I**) und L-Methionyl-L-EAA (LL-**II**) auch die zwei unnatürlichen Diastereomere L-EAA-D-Methionin (LD-**I**) und D-Methionyl-L-EAA (DL-**II**) unter physiologischen Bedingungen gespalten werden können (siehe **Abb. 1** bis **17****).** Dies gilt sowohl für die Verwendung der Mischung von D-Methionyl-L-EAA (DL-**II**) und L-Methionyl-L-EAA (LL-**II**), der Mischung von D-Methionyl-L-EAA (DL-**II**) und L-EAA-D-Methionin (LD-**I**) (siehe **Abb. 12**) bzw. der Mischung von L-Methionyl-L-EAA (LL-**II**) und L-EAA-D-Methionin (LD-**I**) (siehe **Abb. 12**), aber auch für die Gesamtmischung aller Diastereomere, als auch jeweils für die einzelnen Diastereomere (siehe **Abb. 1** bis **11** und **13** bis **17**).

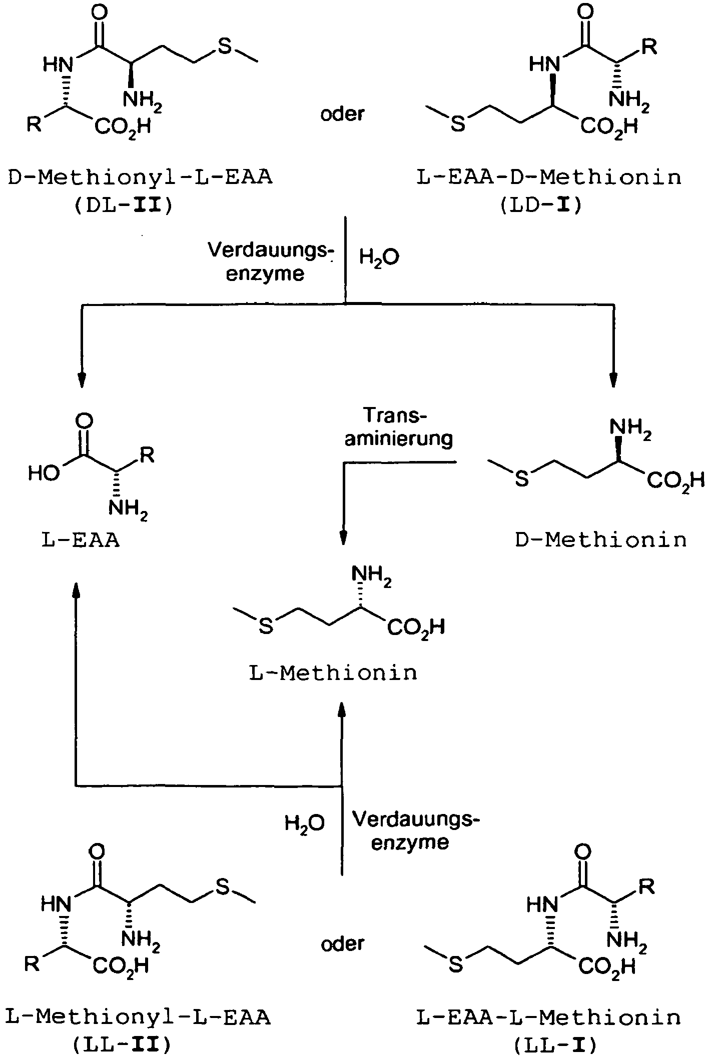

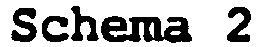

Die natürlichen Dipeptide L-EAA-L-Met (LL-**I**) und L-Met-L-EAA (LL-**II**) wurden mit Verdauungsenzymen aus carnivoren Regenbogenforellen, omnivoren Spiegelkarpfen, omnivoren Whiteleg Shrimps und Hühnern verdaut (siehe **Tabelle 1**).

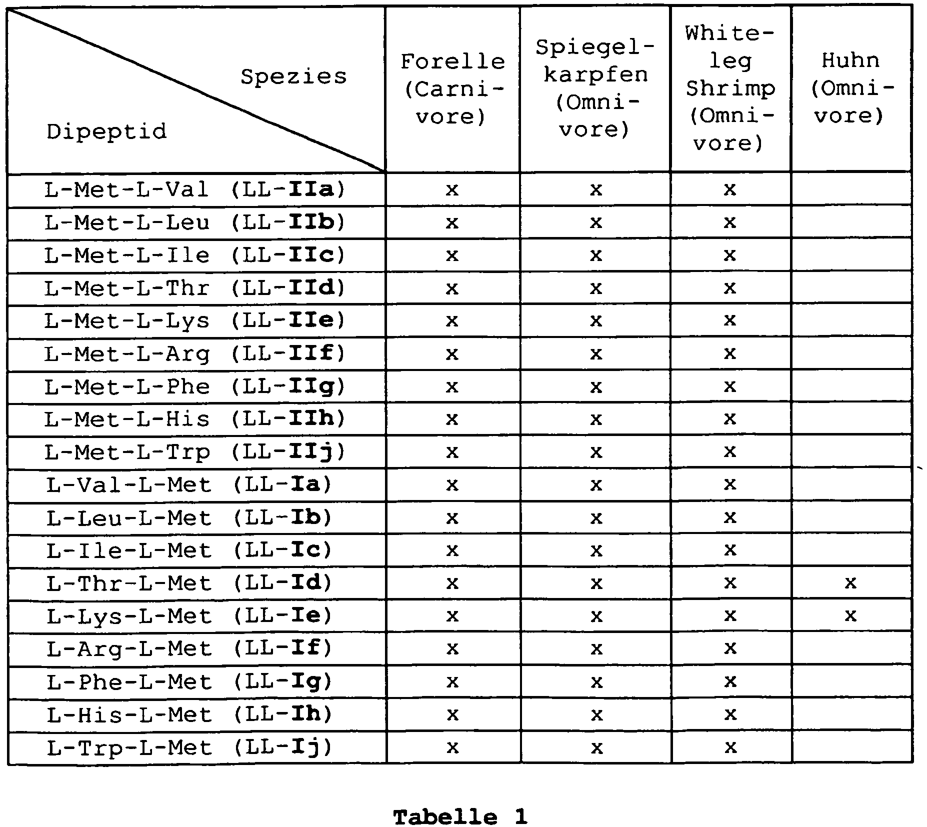

Dazu wurden die Enzyme aus den Verdauungstrakten der Fische und Shrimps separiert. Die Dipeptide L-EAA-L-Met (LL-**I**) und L-Met-L-EAA (LL-**II**) würden anschließend mit den erhaltenen Enzymlösungen verdaut. Für eine bessere Vergleichbarkeit der Verdaulichkeiten von Dipeptiden verschiedener Spezies wurden gleiche Bedingungen für die *in vitro* Verdauungsuntersuchungen gewählt (37°C, pH 9).

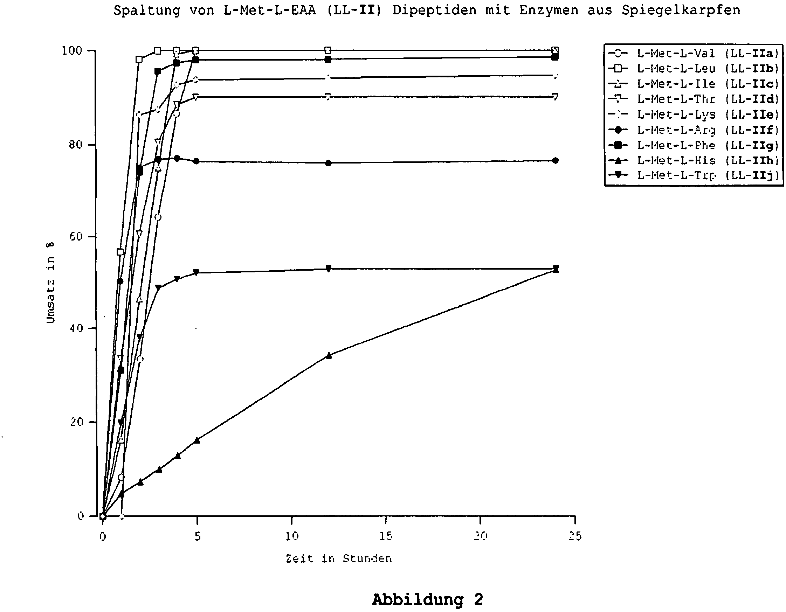

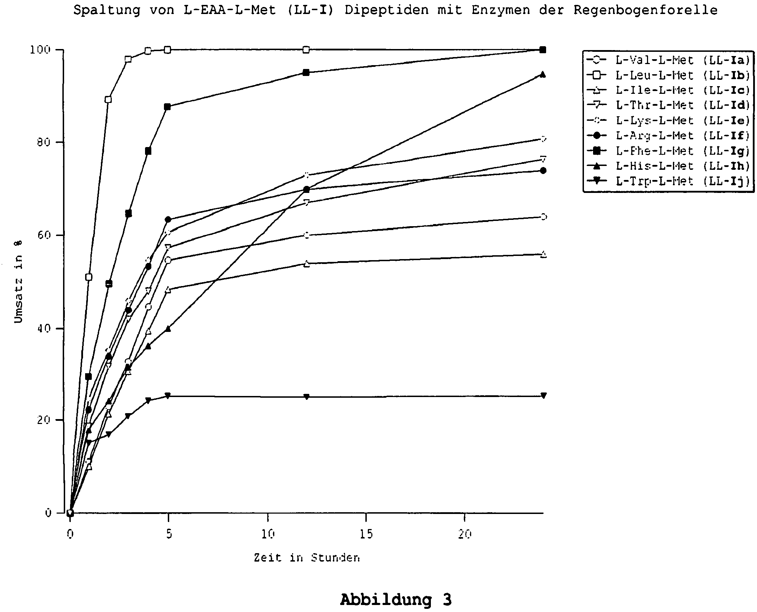

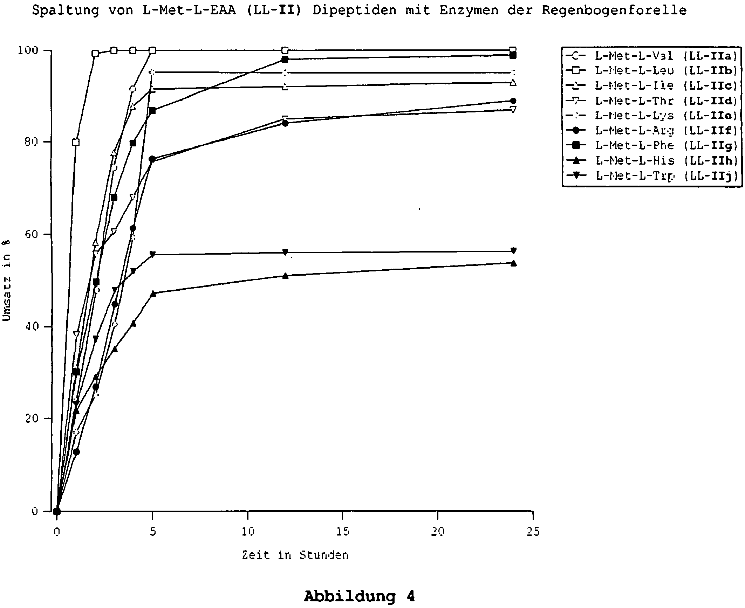

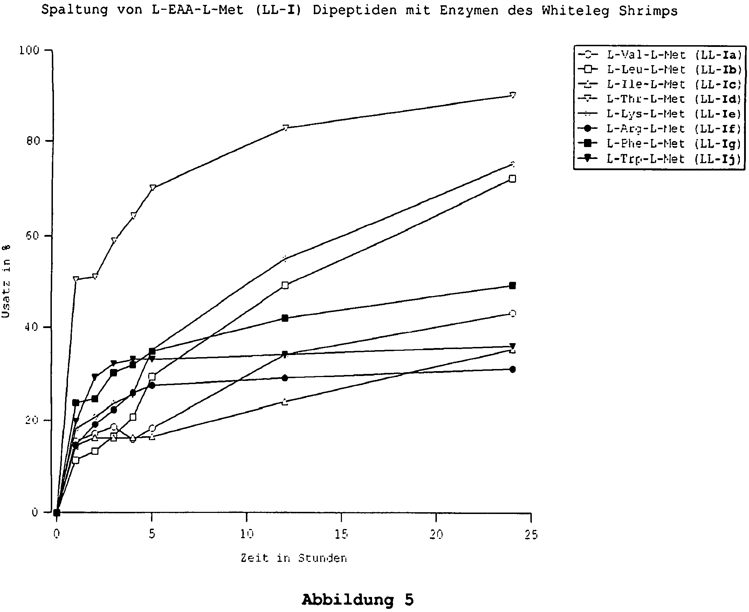

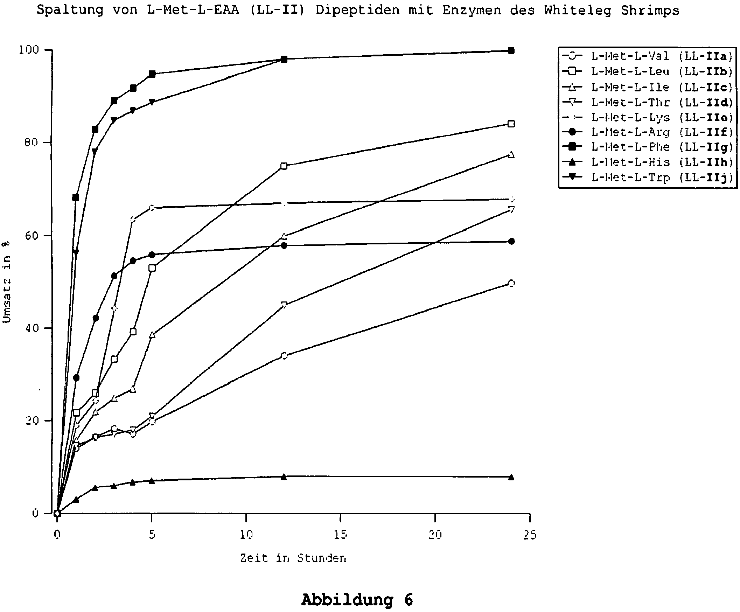

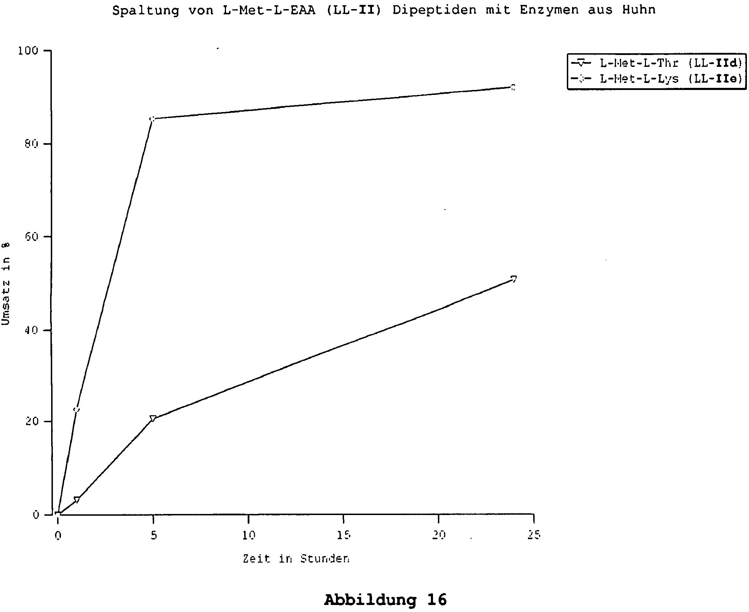

Alle natürlichen Dipeptide werden durch Verdauungsenzyme der carnivoren Regenbogenforelle (siehe **Abb. 3** und **4**), des omnivoren Spiegelkarpfens (siehe **Abb. 1** und **2**), des omnivoren Whiteleg Shrimps (siehe **Abb. 5** und **6**) und des Huhns (siehe **Abb. 16**) gespalten. Die Spaltungen von L-Met-L-EAA (LL-**II**) verlaufen in der Regel etwas schneller als die Spaltungen der analogen L-EAA-L-Met (LL-**I**) Dipeptide.

Um die enzymatische Spaltung unnatürlicher Dipeptide L-EAA-D-Met (LD-**I**) und D-Met-L-EAA (DL-**II**) durch Verdauungsenzyme verschiedener Fischarten möglichst umfassend zu zeigen, wurde eine Versuchsmatrix untersucht (siehe **Tabelle 2**).

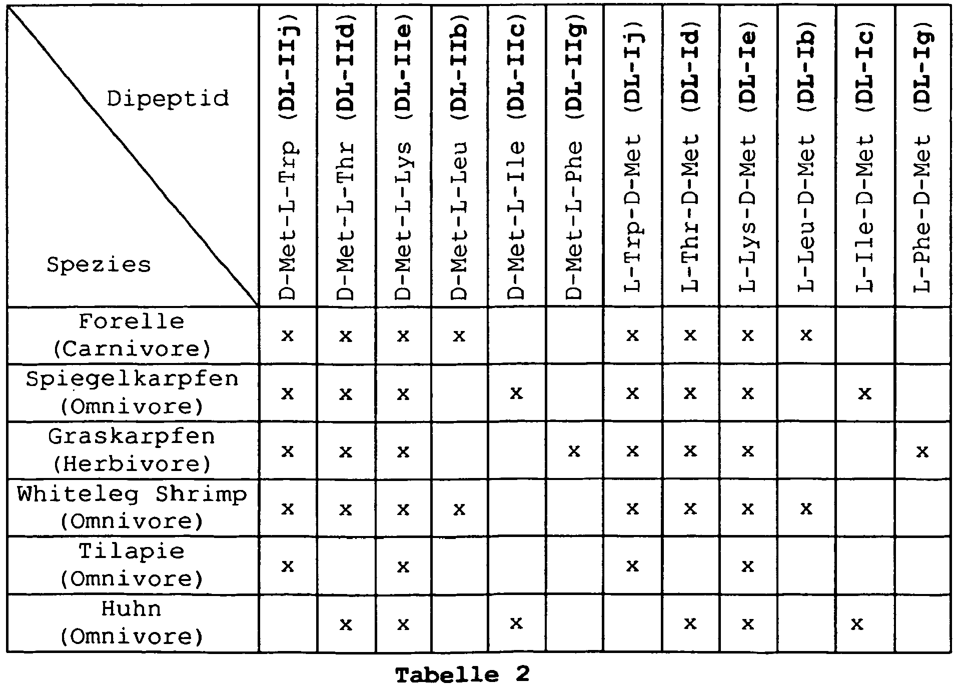

Dazu wurden die Enzyme aus den Verdauungstrakten der Fische und Shrimps isoliert. Die chemisch synthetisierten Dipeptide L-EAA-D-Met (LD-I) und D-Met-L-EAA (DL-**II**) wurden anschließend mit den erhaltenen Enzymlösungen umgesetzt. Für eine bessere Vergleichbarkeit der Verdaulichkeiten von Dipeptiden verschiedener Spezies wurden die gleichen Bedingungen für die *in vitro* Verdauungsuntersuchungen gewählt (37°C, pH 9).

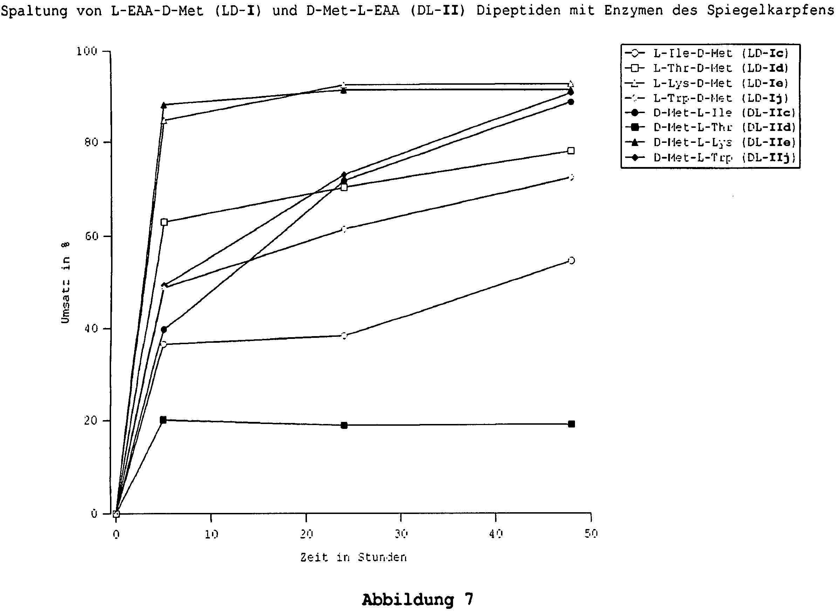

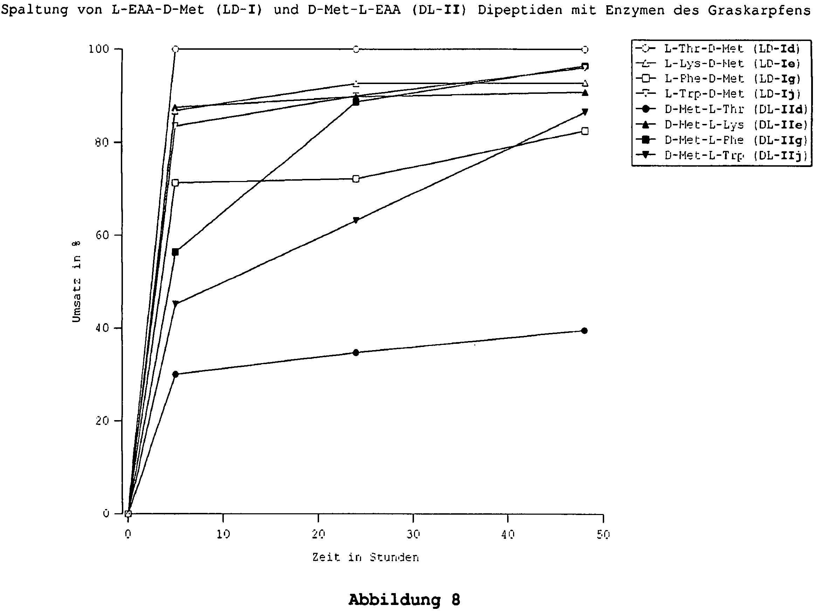

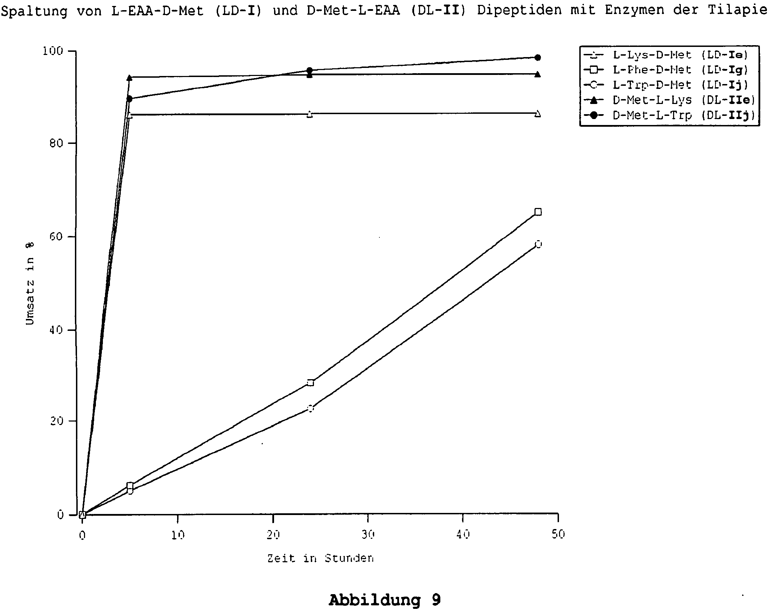

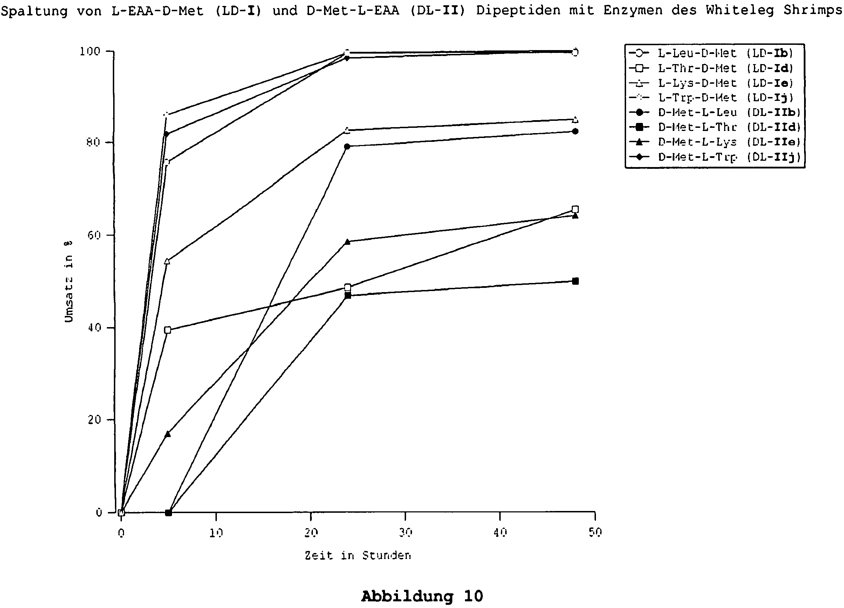

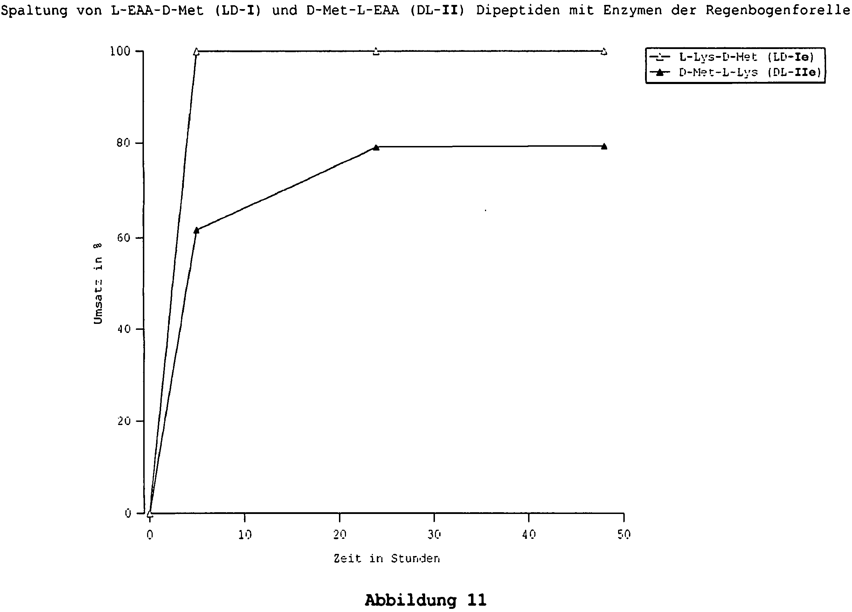

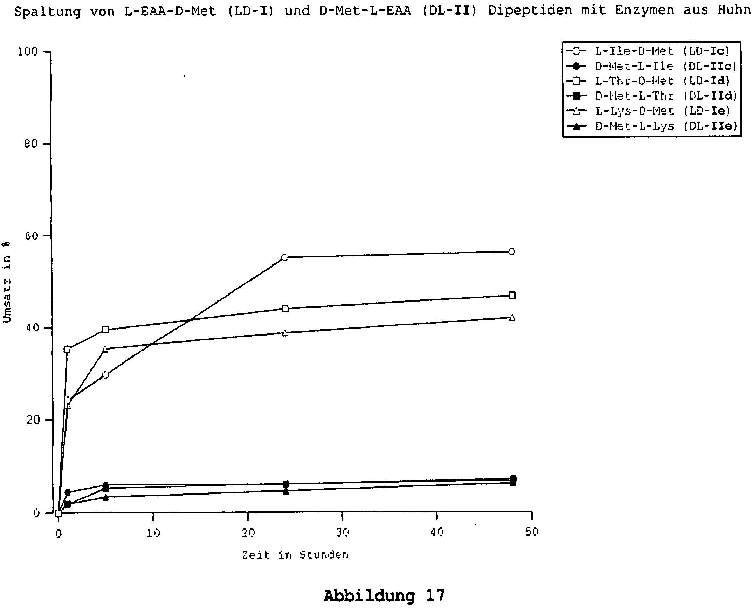

Alle unnatürlichen Dipeptide L-EAA-D-Met (LD-**I**) und D-Met-L-EAA (DL-**II**) werden durch Verdauungsenzyme des omnivoren Spiegelkarpfens (siehe **Abb. 7**), des herbivoren Graskarpfens (siehe **Abb. 8**), der carnivoren Regenbogenforelle (siehe **Abb. 11**), des omnivoren Whiteleg Shrimps (siehe **Abb. 10**) und des Huhns (siehe **Abb. 17**) gespalten. Die Spaltungen von D-Met-L-EAA (DL-**II**) verlaufen etwas langsamer als die Spaltungen der analogen L-EAA-D-Met (LD**-I**) Dipeptide. Mit Verdauungsenzymen der Tilapie (siehe **Abb. 9**) hingegen konnten D-Met-L-EAA (DL-**II**) schneller als L-EAA-D-Met (LD-**I**) Dipeptide gespalten werden. Besonders schnell werden die Dipeptide D-Met-L-Lys (DL-**IIe**) und L-Lys-D-Met (LD**-Ie**) verdaut. Bereits nach 5 Stunden war unter *in vitro* Reaktionsbedingungen der Großteil der Lysin haltigen Dipeptide von allen eingesetzten Verdauungsenzymen gespalten.

Aus den erhaltenen Ergebnissen geht hervor, dass jedes eingesetzte unnatürliche Dipeptid (siehe **Abb. 7** bis **11** und **17**) mit Verdauungsenzymen verschiedener Fischarten, Shrimps und Huhn gespalten werden kann. Dabei wurden durch Einsatz von Enzymen aus carnivoren Regenbogenforellen, omnivoren Spiegelkarpfen, Tilapien, Whiteleg Shrimps, herbivoren Graskarpfen, sowie Huhn nachgewiesen, dass die unnatürlichen Dipeptide L-EAA-D-Met (LD-**I**) und D-Met-L-EAA (DL-**II**) *in vitro* von allen Tieren, die mit deutlich unterschiedlichen Verdauungssystemen ausgestattet sind, gespalten werden können. Durch Zugabe von L-EAA-D-Met (LD-**I**) und/oder D-Met-L-EAA (DL-**II**) Dipeptiden zum Futter können also defiziente essentielle Aminosäuren (DL-Met und L-EAA) gezielt zudosiert werden.

Am Beispiel der Dipeptide aus den Aminosäuren L-Tryptophan und DL-Methionin wurde die Spaltung von Dipeptidgemischen aus natürlichen und unnatürlichen Dipeptiden untersucht. Das Diastereomerengemisch bestehend aus den beiden unnatürlichen Dipeptiden L-Trp-D-Met (LD-**Ij**) und D-Met-L-Trp (DL-**IIj**) konnte vollständig gespalten werden, genauso wie das Gemisch aus dem natürlichen Dipeptid L-Met-L-Trp (LL-**IIj**) und dem unnatürlichen Dipeptid L-Trp-D-Met (LD-**Ij**). Der "Slow-Release"-Effekt ist beim LD-**Ij**/DL-**IIj-**Gemisch viel deutlicher ausgeprägt als beim LD-**Ij**/LL-**IIj-**Gemisch, d.h. die Aminosäuren Tryptophan und Methionin werden durch enzymatische Verdauung der Dipeptide relativ zueinander langsamer und über einen längeren Zeitraum freigesetzt.

Die Aufgabe wird zudem gelöst durch ein Dipeptid oder ein Salz davon der allgemeinen Formel DL-Methionyl-DL-EAA oder DL-EAA-DL-Methionin, wobei EAA eine Aminosäure, vorzugsweise in der L-Konfiguration ausgewählt aus der Gruppe Lysin, Threonin, Tryptophan, Histidin, Valin, Leucin, Isoleucin, Phenylalanin, Arginin, Cystein und Cystin ist. Dabei ist der Methionylrest in der D- bzw. L-Konfiguration gleich bevorzugt. Hierunter fallen die Dipeptide Met-Lys, Met-Thr, Met-Trp, Met-His, Met-Val, Met-Leu, Met-Ile, Met-Phe, Met-Arg, Met-Cys und Met-Cystin, jeweils in den Konfigurationen DD, LD, DL und LL, sowie Lys-Met, Thr-Met, Trp-Met, His-Met, Val-Met, Leu-Met, Ile-Met, Phe-Met, Arg-Met, Cys-Met und Cystin-Met, jeweils in den Konfigurationen DD, LD, DL und LL.

Die Aufgabe wird weiterhin gelöst durch ein Verfahren zur Herstellung eines Dipeptides enthaltend lediglich einen Methionylrest gemäß der Formel DD/LL/DL/LD-**I** oder DD/LL/DL/LD-**II**: 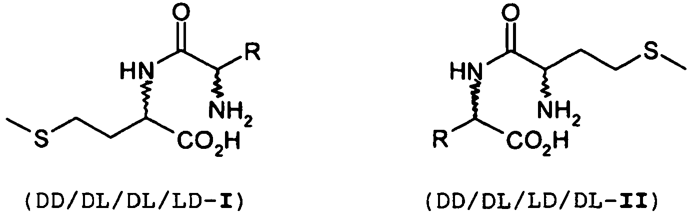 unter Umsetzung einer Aminosäure mit einem Harnstoffderivat der allgemeinen Formel **III** bis **V,** 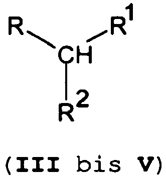 wobei R wie folgt definiert ist:

| | | |
|---|---|---|
| **Ia** bis **Va:** | R = 1-Methylethyl- | (Valin) |
| **Ib** bis **Vb:** | R = 2-Methylpropyl- | (Leucin) |
| **Ic** bis **Vc**: | R = (1*S*)-1-Methylpropyl- | (Isoleucin) |
| **Id** bis **Vd**: | R = (1*R*)-1-Hydroxyethyl- | (Threonin) |
| **Ie** bis **Ve:** | R = 4-Aminobutyl- | (Lysin) |
| **If** bis **Vf:** | R = 3-[(Aminoiminomethyl)-amino]propyl- | (Arginin) |
| **Ig** bis **Vg:** | R = Benzyl- | (Phenylalanin) |
| **Ih** bis **Vh:** | R = (1*H*-Imidazol-9-yl)methyl- | (Histidin) |
| **Ij** bis **Vj:** | R = (1*H*-Indol-3-yl)methyl- | (Tryptophan) |
| **Ik** bis **Vk:** | R = -CH₂-SH | (Cystein) |
| **Im** bis **Vm:** | R = -CH₂-S-S-CH₂-C(H)NH₂-COOH | (Cystin) |
| **IIIn** bis **Vn:** | R = -CH₂-CH₂-S-CH₃ | (Methionin) |

wobei die Reste R¹ und R² in den Harnstoffderivaten **III, IV** und **V** wie folgt definiert sind:
wobei
**IIIa**-n: **R¹** = COOH, **R²** = NHCONH₂
**IVa**-n: **R¹** = CONH₂, **R²** = NHCONH₂
**Va-n: R¹-R²** = -CONHCONH-
und
wobei R entweder ein Methionylrest bedeutet und die zugegebene Aminosäure ausgewählt ist aus der Gruppe Lysin, Threonin, Tryptophan, Histidin, Valin, Leucin, Isoleucin, Phenylalanin, Arginin, Cystein, oder Cystin; oder
die zugegebene Aminosäure Methionin ist und R ein Aminosäurerest ist ausgewählt aus der Gruppe Lysin, Threonin, Tryptophan, Histidin, Valin, Leucin, Isoleucin, Phenylalanin, Arginin, Cystein, oder von Cystin.

In einer bevorzugten Ausführungsform wird Methioninhydantoin oder das Hydantoin einer Aminosäure ausgewählt aus der Gruppe Lysin, Threonin, Tryptophan, Histidin, Valin, Leucin, Isoleucin, Phenylalanin, Arginin, Cystein, Cystin als Ausgangsprodukt verwendet oder als Zwischenprodukt intermediär gebildet.

In einer Ausführungsform des erfindungsgemäßen Verfahrens ist bevorzugt, dass eine Methioninhydantoin **(Vn)** und Wasser enthaltende Lösung mit der Aminosäure unter basischen Bedingungen umgesetzt wird, oder eine das Hydantoin der Aminosäure ausgewählt aus der Gruppe Lysin, Threonin, Tryptophan, Histidin, Valin, Leucin, Isoleucin, Phenylalanin, Arginin, Cystein, Cystin und Wasser enthaltende Lösung mit Methionin unter basischen Bedingungen umgesetzt wird.

In einer weiteren Ausführungsform des erfindungsgemäßen Verfahrens ist dabei bevorzugt, dass Methioninhydantoin **(Vn)** als Ausgangsprodukt verwendet wird oder als Zwischenprodukt intermediär gebildet wird. In **Schema 3** wird die bevorzugte Herstellung von DL-Methionyl-L-EAA **(II)** direkt aus Methioninhydantoin **(Vn),** N-Carbamoylmethionin **(IIIn)** bzw. N-Carbamoylmethioninamid **(IVn)** dargestellt und umfasst die Methode **A.**

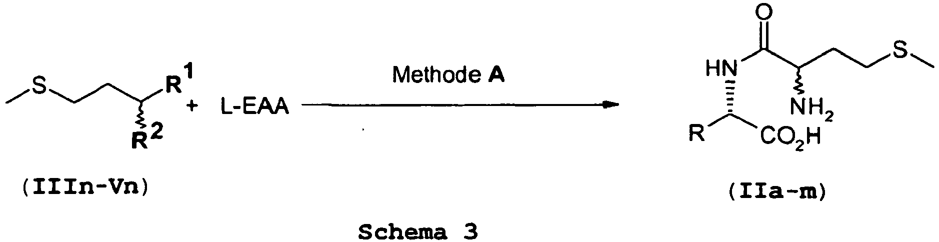

Weiterhin ist bevorzugt, dass der pH-Wert der das Harnstoffderivat enthaltenden Lösung auf 7 bis 14, bevorzugt auf 8 bis 13 und ganz besonders bevorzugt bei 9 bis 12 eingestellt wird.

In bevorzugter Weise erfolgt die Umsetzung bei einer Temperatur von 30 bis 200°C, bevorzugt bei einer Temperatur von 80 bis 170°C und besonders bevorzugt bei einer Temperatur von 120 bis 160°C.

Weiterhin ist bevorzugt, dass die Umsetzung unter Druck, bevorzugt bei einem Druck von 2 bis 100 bar, besonders bevorzugt bei einem Druck von 4 bis 60 bar, ganz besonders bevorzugt bei einem Druck von 8 bis 40 bar durchgeführt wird.

In einem weiteren bevorzugten Verfahren ist die Methioninhydantoin und Wasser enthaltende Lösung oder die das Hydantoin der Aminosäure ausgewählt aus der Gruppe Lysin, Threonin, Tryptophan, Histidin, Valin, Leucin, Isoleucin, Phenylalanin, Arginin, Cystein, Cystin und Wasser enthaltende Lösung zuvor aus einer oder mehrerer der Verbindungen **IIIa-n, IVa-n** und **Va-n** gebildet worden ist.

Alternativ kann auch das entsprechende Aminonitril, Cyanhydrin oder eine Mischung aus entsprechendem Aldehyd, Blausäure und Ammoniak bzw. auch eine Mischung aus entsprechenden Aldehyd, Ammonium- und Cyanidsalzen als Hydantoinvorstufen eingesetzt werden.

Eine weiter bevorzugte Ausführungsform des erfindungsgemäßen Verfahrens umfasst die folgenden Schritte:
a) Umsetzung des Harnstoffderivates gemäß den Formeln **IIIan, IVa-n** oder **Va-n** mit der Aminosäure zu einem Diketopiperazin **VIa-m** der Formel, 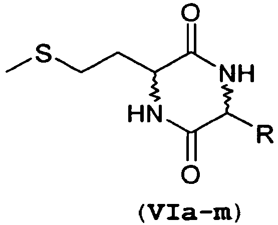 wobei R wie zuvor definiert ist;
b) Umsetzung des Diketopiperazins VI zu einem Gemisch aus Dipeptiden mit den Formeln DD/LL/DL/LD-**I** und DD/LL/DL/LD-**II**: 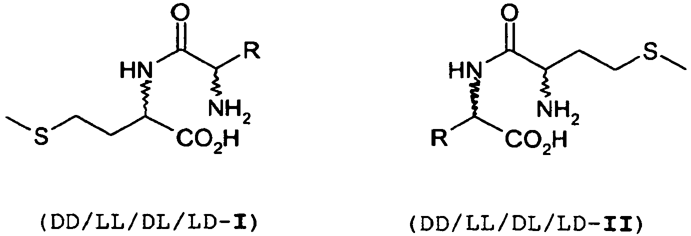 wobei R wie zuvor definiert ist.

Die Umsetzung des Harnstoffderivates gemäß den Formeln **IIIn, IVn** und **Vn** zu einem Diketopiperazin **VIa-m** und die weitere Umsetzung des Diketopiperazins zu einem Diastereomerengemisch mit den bevorzugten Dipeptiden L-EAA-DL-Methionin **(I)** und DL-Methionyl-L-EAA **(II)** ist in **Schema 4** dargestellt:

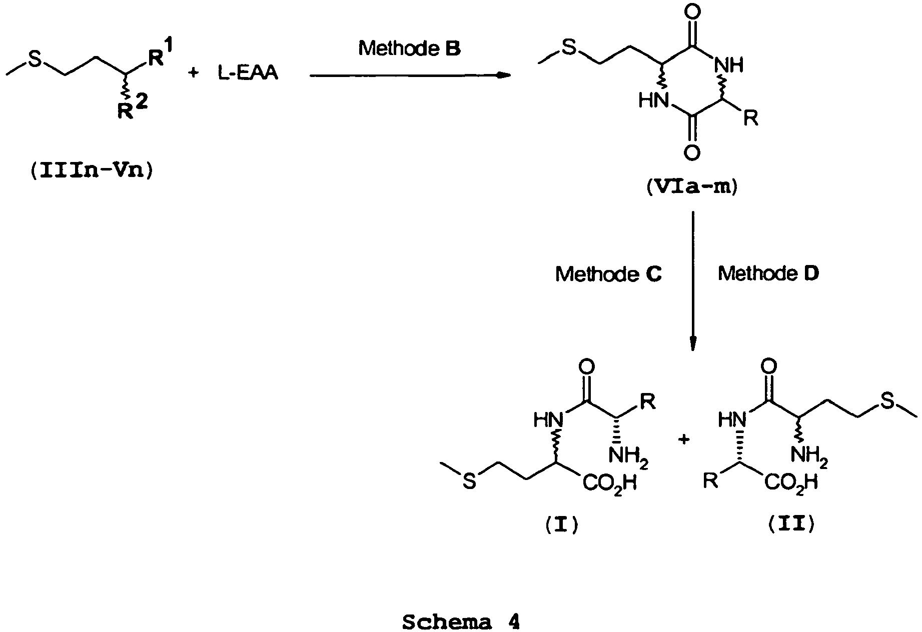

Die Umsetzung des Diketopiperazins **VIa-m** zu einem Gemisch aus den bevorzugten Dipeptiden L-EAA-DL-Methionin **(I)** und DL-Methionyl-L-EAA **(II).** Dieses Verfahren umfasst die in **Schema 4** aufgezeigten Methoden **B, C** und **D.** Bei diesen Verfahren wird jeweils Diketopiperazin **VIa-m** als Zwischenprodukt gebildet.

Die Umsetzung des Harnstoffderivates mit der Aminosäure zum Diketopiperazin wird bevorzugt bei einer Temperatur von 20°C bis 200°C, vorzugsweise von 40°C bis 180°C und besonders bevorzugt von 100°C bis 170°C durchgeführt.

In einem bevorzugten Verfahren erfolgt die Umsetzung des Harnstoffderivates mit der Aminosäure zum Diketopiperazin unter Druck, bevorzugt bei einem Druck von 2 bis 90 bar, besonders bevorzugt bei einem Druck von 4 bis 70 bar, ganz besonders bevorzugt bei einem Druck von 5 bis 50 bar.

Vorzugsweise erfolgt die Umsetzung des Harnstoffderivates mit der Aminosäure zum Diketopiperazin in Gegenwart einer Base. Dabei ist die Base vorzugsweise ausgewählt aus der Gruppe Stickstoff-haltiger Basen, NH₄HCO₃, (NH₄)₂CO₃, KHCO₃, K₂CO₃, NH₄OH/CO₂-Mischung, Carbamatsalze, Alkali- und Erdalkalibasen.

In einem weiteren bevorzugten Verfahren erfolgt die Umsetzung zum Diketopiperazin entweder durch Reaktion des Harnstoffderivates der Formel, 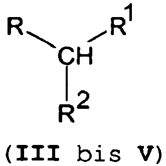 wobei R ein Methionylrest bedeutet, mit einer Aminosäure, ausgewählt aus der Gruppe Lysin, Threonin, Tryptophan, Histidin, Valin, Leucin, Isoleucin, Phenylalanin, Arginin, Cystein oder Cystin
oder
durch Reaktion des Harnstoffderivates der Formel, 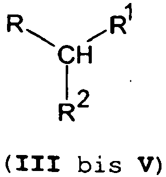 wobei R ein Aminosäurerest ist ausgewählt aus der Gruppe Lysin, Threonin, Tryptophan, Histidin, Valin, Leucin, Isoleucin, Phenylalanin, Arginin, Cystein oder Cystin, mit der Aminosäure Methionin.

In dem bevorzugten Verfahren, bei dem die Umsetzung des Harnstoffderivates zum Diketopiperazin durch Reaktion mit Methionin erfolgt, ist ein Verhältnis von Harnstoffderivat zu Methionin von 1:100 bis 1:0,5 besonders bevorzugt.

In einem weiteren bevorzugten Verfahren erfolgt die Umsetzung des Diketopiperazin zu einem Gemisch aus Dipeptiden der Formel **I** und **II** durch saure Hydrolyse. Bevorzugt erfolgt die Umsetzung des Diketopiperazin zu einem Gemisch aus L-EAA-DL-Methionin **(I)** und DL-Methionyl-L-EAA **(II)** durch saure Hydrolyse.

Die saure Hydrolyse wird dabei in Gegenwart einer Säure durchgeführt, die vorzugsweise ausgewählt ist aus der Gruppe der Mineralsäuren, HCl, H₂CO₃, CO₂/H₂O, H₂SO₄, Phosphorsäuren, Carbonsäuren und Hydroxycarbonsäuren.

In einer anderen Ausführungsform des erfindungsgemäßen Verfahrens erfolgt die Umsetzung des Diketopiperazin zu einem Gemisch aus Dipeptiden der Formel **(I)** und **(II)** durch basische Hydrolyse. Bevorzugt erfolgt die Umsetzung des Diketopiperazin zu einem Gemisch aus L-EAA-DL-Methionin **(I)** und DL-Methionyl-L-EAA **(II)** durch basische Hydrolyse.

Die basische Hydrolyse wird bevorzugt bei einem pH von 7 bis 14, besonders bevorzugt bei einem pH von 8 bis 13, ganz besonders bevorzugt bei einem pH von 9 bis 12 durchgeführt. Dabei kann vollständige Racemisierung auftreten. Die basischen Bedingungen können unter Verwendung einer Substanz eingestellt werden, die vorzugsweise ausgewählt sind aus der Gruppe Stickstoff haltiger Basen, NH₄HCO₃, (NH₄)₂CO₃, NH₄OH/CO₂-Mischung Carbamatsalze, KHCO₃, K₂CO₃, Carbonate, Alkali- und Erdalkalibasen.

Die saure bzw. basische Hydrolyse wird vorzugsweise bei Temperaturen von 50°C bis 200°C, vorzugsweise von 80°C bis 180°C und besonders bevorzugt von 90°C bis 160°C durchgeführt.

In einem bevorzugten Verfahren ist der Aminosäurerest des Harnstoffderivates **III** bis **V** in der D- oder L-Konfiguration oder in einer Mischung aus D- und L-Konfiguration vorliegt, bevorzugt in einer Mischung aus D- und L-Konfiguration, wenn das Harnstoffderivat von Methionin abgeleitet ist.

In einem weiteren bevorzugten Verfahren ist der Aminosäurerest des Harnstoffderivates **III** bis **V** in der D-oder L-Konfiguration oder in einer Mischung aus D- und L-Konfiguration, bevorzugt in der L-Konfiguration, wenn das Harnstoffderivat von einer Aminosäure abgeleitet ist ausgewählt aus der Gruppe Lysin, Threonin, Tryptophan, Histidin, Valin, Leucin, Isoleucin, Phenylalanin, Arginin, Cystein, Cystin.

In einem weiteren bevorzugten Verfahren werden Dipeptide erhalten, die als Gemisch von LL, DL, LD und DD vorliegen, bevorzugt als Gemisch von LL, LD, DL.

In einem bevorzugten Verfahren wird das Diketopiperazin vor der Hydrolyse isoliert. Bevorzugt ist dabei, dass das Diketopiperazin durch Kristallisation aus der Reaktionslösung, bevorzugt bei einer Temperatur von -30 bis 120°C, besonders bevorzugt bei einer Temperatur von 10 bis 70°C, isoliert wird.

Zur Isolation des Diastereomerengemisches der Dipeptide der Formel DD/LL/DL/LD-(**I**) und DD/LL/DL/LD-**(II),** bevorzugt des Diastereomerengemisches aus L-EAA-DL-Methionin **(I)** und DL-Methionyl-L-EAA **(II),** aus basischen Reaktionslösungen wird diese angesäuert und durch Kristallisation bzw. Fällung erhalten. Bevorzugt ist dabei ein pH-Wert von 2 bis 10, besonders bevorzugt ein pH-Wert von 3 bis 9, ganz besonders bevorzugt den entsprechenden isoelektrischen Punkt des jeweiligen Dipeptids der Formel **I** und **II.** Dabei können Säuren bevorzugt aus der Gruppe der Mineralsäuren, HCl, H₂CO₃, CO₂/H₂O, H₂SO₄, Phosphorsäuren, Carbonsäuren und Hydroxycarbonsäuren zur Ansäuerung verwendet werden.

Zur Isolation des Diastereomerengemisches der Dipeptide der Formel DD/LL/DL/LD-**(I)** und DD/LL/DL/LD-**(II),** bevorzugt des Diastereomerengemisches aus L-EAA-DL-Methionin **(I)** und DL-Methionyl-L-EAA **(II),** aus sauren Reaktionslösungen wird durch Zugabe von Basen neutralisiert und durch .Kristallisation bzw. Fällung erhalten. Bevorzugt ist dabei ein pH-Wert von 2 bis 10, besonders bevorzugt ein pH-Wert von 3 bis 9, ganz besonders bevorzugt auf den entsprechenden isoelektrischen Punkt des jeweiligen Dipeptids der Formel **I** und **II.** Dabei werden zur Neutralisation Basen bevorzugt aus der Gruppe NH₄HCO₃, (NH₄)₂CO₃, Stickstoff haltige Basen, NH₄OH, Carbamatsalze, KHCO₃, K₂CO₃, Carbonate, Alkali- und Erdalkalibasen verwendet.

Eine weitere alternative Ausführungsform des erfindungsgemäßen Verfahrens umfasst die Synthese der nichtnatürlichen Dipeptide L-EAA-D-Methionin **Ia-Ij** bzw. D-Methionyl-L-EAA **IIa-IIj** unter Verwendung der Schutzgruppentechnik. So wurde zur Synthese der Dipeptide L-EAA-D-Methionin (LD-**I**) die Aminogruppe der freien L-EAA zuerst mit der BOC-Schutzgruppe (*tert*-Butoxycarbonyl-) geschützt. Alternativ konnte auch die Z-Schutzgruppe (Benzoxycarbonyl-) erfolgreich eingesetzt werden. Das D-Methionin wurde mit Methanol verestert, wodurch die Säurefunktion geschützt wurde. Anschließend wurde die Kopplungsreaktion der BOC- bzw. Z-geschützten L-EAA mit D-Methioninmethylester unter Verwendung von DCC (Dicyclohexylcarbodiimid) durchgeführt (siehe **Schema 5**).

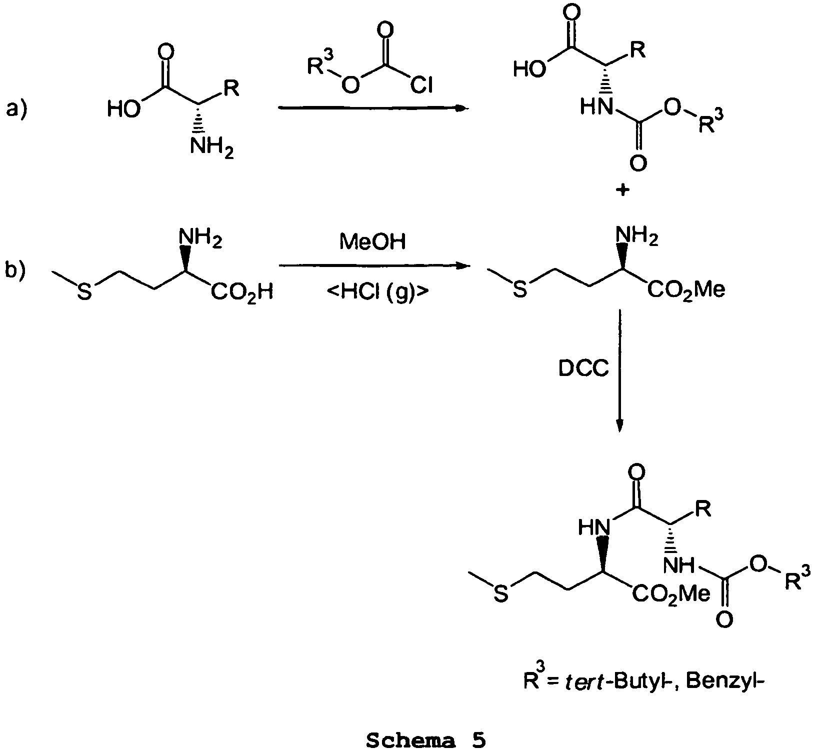

Nach Reinigung von BOC-L-EAA-D-Methionin-OMe bzw. Z-L-EAA-D-Methionin-OMe wurde unter milden, basischen Bedingungen zuerst der Methylester gespalten. Abschließend wurde die BOC- bzw. Z-Schutzgruppe sauer mit HBr in Eisessig abgespalten und das freie Dipeptid L-EAA-D-Methionin (LD-**I**) durch Umfällung und Umkristallisation gereinigt (siehe **Schema 6**).

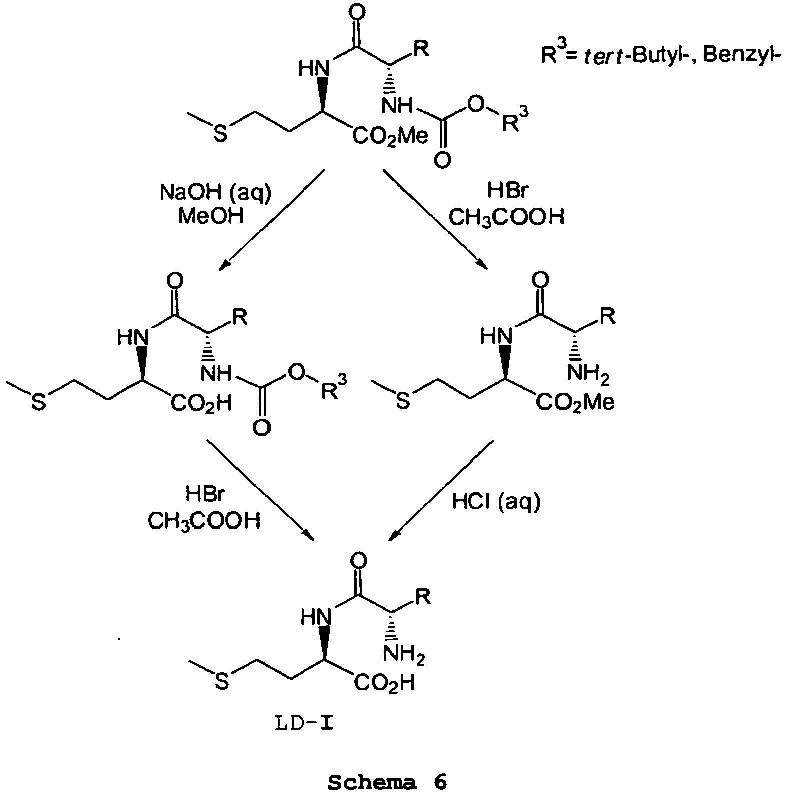

Alternativ konnte der BOC-geschützte Dipeptidmethylester BOC-L-EAA-D-Methionin-OMe auch zuerst mit HBr in Eisessig umgesetzt und damit die BOC-Schutzgruppe entfernt werden. Nach Eindampfung konnte anschließend der Methylester durch Zugabe einer verdünnten Salzsäurelösung gespalten werden. Das freie Dipeptid L-EAA-D-Methionin (LD-**I**) konnte dann wiederum durch Umfällung und Umkristallisation gereinigt werden (siehe **Schema 6**).

Die gesamte Route konnte auch für die Dipeptide L-EAA-D-Methionin **Ia-Ij** übertragen werden. Dabei wurden die Methylester von L-EAA und BOC- bzw. Z-geschütztes D-Methionin eingesetzt.

Alle genannten Verfahren der vorliegenden Erfindung werden bevorzugt in einem wässrigen Medium durchgeführt.

Weiterhin können die Verfahren der vorliegenden Erfindung in dem Fachmann bekannten Batch-Verfahren oder in kontinuierlichen Verfahren ausgeführt werden.

### Abbildungen

Die **Abbildung 1** zeigt die Spaltung von L-EAA-L-Met (LL-**I**) Dipeptiden mit Enzymen aus Spiegelkarpfen.
Die **Abbildung 2** zeigt die Spaltung von L-Met-L-EAA (LL-**II**) Dipeptiden mit Enzymen aus Spiegelkarpfen.
Die **Abbildung 3** zeigt die Spaltung von L-EAA-L-Met (LL-**I**) Dipeptiden mit Enzymen der Regenbogenforelle.
Die **Abbildung 4** zeigt die Spaltung von L-Met-L-EAA (LL-**II**) Dipeptiden mit Enzymen der Regenbogenforelle.
Die **Abbildung 5** zeigt die Spaltung von L-EAA-L-Met (LL-**I**) Dipeptiden mit Enzymen des Whiteleg Shrimps.
Die **Abbildung 6** zeigt die Spaltung von L-Met-L-EAA (LL-**II**) Dipeptiden mit Enzymen des Whiteleg Shrimps.
Die **Abbildung 7** zeigt die Spaltung von L-EAA-D-Met (LD-**I**) und D-Met-L-EAA (DL-**II**) Dipeptiden mit Enzymen des Spiegelkarpfens.
Die **Abbildung 8** zeigt die Spaltung von L-EAA-D-Met (LD-**I**) und D-Met-L-EAA (DL-**II**) Dipeptiden mit Enzymen des Graskarpfens.
Die **Abbildung 9** zeigt die Spaltung von L-EAA-D-Met (LD-**I**) und D-Met-L-EAA (DL-**II**) Dipeptiden mit Enzymen der Tilapie.
Die **Abbildung 10** zeigt die Spaltung von L-EAA-D-Met (LD-**I**) und D-Met-L-EAA (DL-**II**) Dipeptiden mit Enzymen des Whiteleg Shrimps.
Die **Abbildung 11** zeigt die Spaltung von L-EAA-D-Met (LD-**I**) und D-Met-L-EAA (DL-**II**) Dipeptiden mit Enzymen der Regenbogenforelle.
Die **Abbildung 12** zeigt die Spaltung von Gemischen aus L-Trp-D-Met/D-Met-L-Trp (LD-**Ij**/DL-**IIj**) und L-Trp-D-Met/L-Met-L-Trp (LD-**Ij**/LL-**IIj**) mit Enzymen des Spiegelkarpfens.
Die **Abbildung 13** zeigt die *in vitro* Spaltung der natürlichen L-Ile-L-Met (LL-**Ic**) bzw. L-Met-L-Ile (LL-**IIc**) Dipeptide mit 1%iger Enzymlösung und der unnatürlichen L-Ile-D-Met (LD-**Ic**) bzw. D-Met-L-Ile (DL-**IIc**) Dipeptide mit 10%iger Enzymlösung aus Spiegelkarpfen.
Die **Abbildung 14** zeigt die *in vitro* Spaltung der natürlichen L-Thr-L-Met (LL-**Id**) bzw. L-Met-L-Thr (LL-**IId**) Dipeptide mit 1%iger Enzymlösung und der unnatürlichen L-Thr-D-Met (LD-**Id**) bzw. D-Met-L-Thr (DL-**IId**) Dipeptide mit 10%iger Enzymlösung aus Spiegelkarpfen.
Die **Abbildung 15** zeigt die *in vitro* Spaltung der natürlichen L-Lys-L-Met (LL-**Ie**) bzw. L-Met-L-Lys (LL-**IIe**) Dipeptide mit 1%iger Enzymlösung und der unnatürlichen L-Lys-D-Met (LD-**Ie**) bzw. D-Met-L-Lys (DL-**IIe**) Dipeptide mit 10%iger Enzymlösung aus Spiegelkarpfen.
Die **Abbildung 16** zeigt die Spaltung von L-Met-L-EAA (LL-**II**) Dipeptiden mit Enzymen aus Huhn
Die **Abbildung 17** zeigt die Spaltung von L-EAA-D-Met (LD-**I**) und D-Met-L-EAA (DL-**II**) Dipeptiden mit Enzymen aus Huhn

### Beispiele

### Beispiel 1:

### Allgemeines Verfahren für die Synthese der nichtnatürlichen Dipeptide L-EAA-D-Methionin Ia-Ij bzw. D-Methionyl-L-EAA IIa-IIj unter Verwendung der Schutzgruppentechnik:

Dabei wurde zur Synthese der Dipeptide L-EAA-D-Methionin (LD-**I**) die Aminogruppe der freien L-EAA zuerst mit der BOC-Schutzgruppe (*tert*-Butoxycarbonyl-) geschützt. Alternativ konnte auch die Z-Schutzgruppe (Benzoxycarbonyl-) erfolgreich eingesetzt werden. Das D-Methionin wurde mit Methanol verestert, wodurch die Säurefunktion geschützt wurde. Anschließend wurde die Kopplungsreaktion der BOC- bzw. Z-geschützten L-EAA mit D-Methioninmethylester unter Verwendung von DCC (Dicyclohexylcarbodiimid) durchgeführt (siehe **Schema 5**).

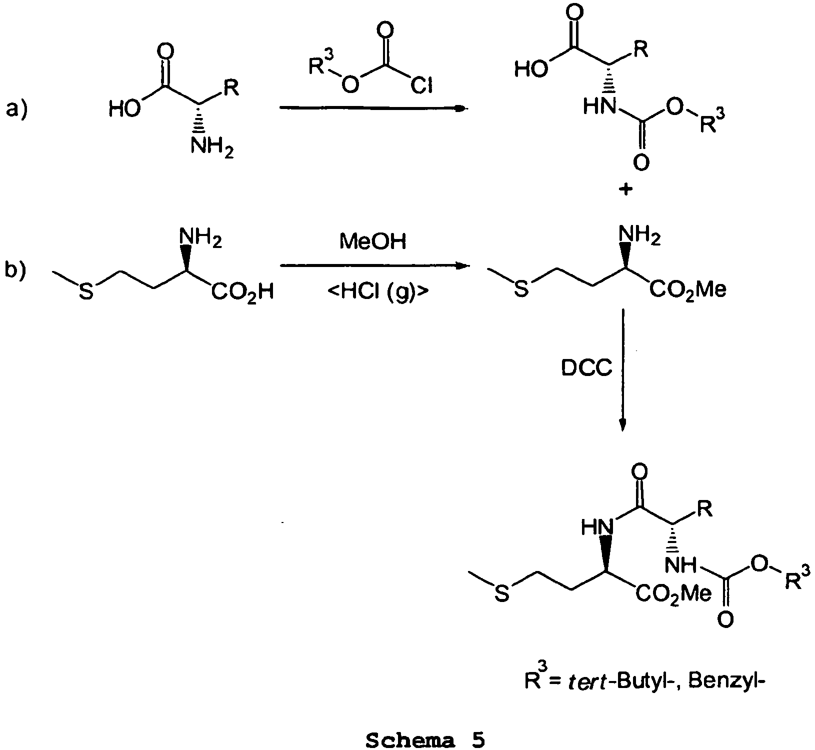

Nach Reinigung von BOC-L-EAA-D-Methionin-OMe bzw. Z-L-EAA-D-Methionin-OMe wurde unter milden, basischen Bedingungen zuerst der Methylester gespalten. Abschließend wurde die BOC- bzw. Z-Schutzgruppe sauer mit HBr in Eisessig abgespalten und das freie Dipeptid L-EAA-D-Methionin (LD-**I**) durch Umfällung und Umkristallisation gereinigt (siehe **Schema 6**).

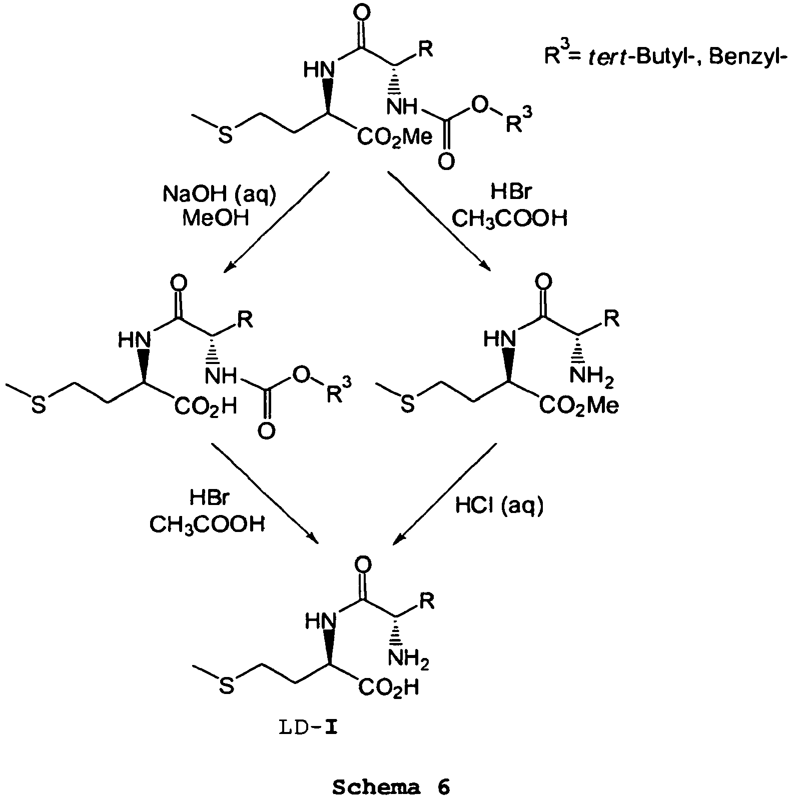

Alternativ konnte der BOC-geschützte Dipeptidmethylester BOC-L-EAA-D-Methionin-OMe auch zuerst mit HBr in Eisessig umgesetzt und damit die BOC-Schutzgruppe entfernt werden. Nach Eindampfung konnte anschließend der Methylester durch Zugabe einer verdünnten Salzsäurelösung gespalten werden. Das freie Dipeptid L-EAA-D-Methionin (LD-**I**) konnte dann wiederum durch Umfällung und Umkristallisation gereinigt werden (siehe **Schema 6**).

Die gesamte Route konnte auch für die Dipeptide L-EAA-D-Methionin **Ia-Ij** übertragen werden. Dabei wurden die Methylester von L-EAA und BOC- bzw. Z-geschütztes D-Methionin eingesetzt.

### Beispiel 2:

### a) Vorschrift zur Synthese von Z-D-Met

30,0 g (0,201 mol) D-Methionin und 42,4 g (0,4 mol) Na₂CO₃ wurden in 200 ml Wasser vorgelegt und im Eisbad auf 0°C abgekühlt. Danach wurden 51,2 g (0,3 mol) Carboxybenzyloxychlorid (Cbz-Cl) langsam zugegeben und das Reaktionsgemisch 3 Stunden bei Raumtemperatur gerührt. Anschließend wurde mit verdünnter Salzsäure angesäuert und die Reaktionslösung dreimal mit je 50 ml MTBE extrahiert. Die vereinigten organischen Phasen wurden über MgSO₄ getrocknet und am Rotationsverdampfer eingeengt. Der erhaltene Rückstand wurde aus Diethylether/Ethylacetat umkristallisiert und im Vakuum bei 30°C getrocknet. Es wurden 36,4 g (64%) Carboxybenzyloxy-D-Methionin (Z-D-Met) als weißer kristalliner Feststoff isoliert.

### b) Allgemeine Vorschrift zur Synthese von Z-L-EAA

50 mmol L-EAA und 10,6 g (100 mmol) Na₂CO₃ wurden in 50 ml Wasser vorgelegt und im Eisbad auf 0°C abgekühlt. Danach wurden 12,8 g (75 mmol) Carboxybenzyloxyclorid (Cbz-Cl) langsam zugegeben und das Reaktionsgemisch 3 Stunden bei Raumtemperatur gerührt. Anschließend wurde mit verdünnter Salzsäure angesäuert und die Reaktionslösung dreimal mit je 25 ml MTBE extrahiert. Die vereinigten organischen Phasen wurden über MgSO₄ getrocknet und am Rotationsverdampfer eingeengt. Der erhaltene Rückstand wurde umkristallisiert und im Vakuum bei 30°C getrocknet.

### Beispiel 3:

### Vorschrift zur Synthese von D-Met-OMe x HCl

50,0 g (0,335 mol) D-Methionin wurden in 500 ml Methanol suspendiert und mit HCl-Gas mit mäßiger Geschwindigkeit bis zur Sättigung durchströmt. Dabei löste sich das Methionin auf und die Lösung erwärmte sich auf 55°C. Anschließend wurde das Reaktionsgemisch über Nacht bei Raumtemperatur gerührt. Am nächsten Morgen wurde das Gemisch am Rotationsverdampfer bei 40°C zur Trockne eingeengt und der erhaltene Rückstand zweimal aus Diethylether umkristallisiert. Es wurden 47,1 g (86%) D-Methioninmethylester Hydrochlorid als weißer kristalliner Feststoff isoliert.

### Beispiel 4:

### Allgemeine Vorschrift zur Synthese von L-EAA-OMe x HCl

0,3 mol L-EAA wurden in 500 ml Methanol suspendiert und mit HCl-Gas mit mäßiger Geschwindigkeit bis zur Sättigung durchströmt. Dabei löste sich die Aminosäure auf und die Lösung erwärmte sich auf 50-60°C. Anschließend wurde das Reaktionsgemisch über Nacht bei Raumtemperatur gerührt. Am nächsten Morgen wurde das Gemisch am Rotationsverdampfer bei 40°C zur Trockne eingeengt und der erhaltene Rückstand zweimal aus Diethylether oder Diethylether/Methanol-Gemisch umkristallisiert.

### Beispiel 5:

### Allgemeine Vorschrift zur Synthese von Verbindungen der Gruppe PG-D-Met-L-EAA-OMe (PG-DL-II-OMe) (Kopplungsreaktion)

20,0 mmol L-EAA-OMe Hydrochlorid wurden in einer Mischung aus 30 ml Chloroform und 5 ml Methanol suspendiert, mit 4,15 g (30 mmol) K₂CO₃ versetzt und 1 Stunde bei Raumtemperatur gerührt. Anschließend wurde das Salz abfiltriert und mit etwas Chloroform gewaschen. Nach dem Einengen des Filtrates wurde der erhaltene Rückstand in 50 ml Tetrahydrofuran aufgenommen, mit 4,37 g (21,0 mmol; 1,05 eq.) DCC und 5,66 g (20,0 mmol) Z-D-Methionin versetzt und über 16 h bei Raumtemperatur gerührt. Danach wurde das Reaktionsgemisch mit 3 ml Eisessig versetzt, 30 Minuten gerührt und der ausgefallene weiße Feststoff (N,N'-Dicyclohexylharnstoff) abfiltriert. Das Filtrat wurde am Rotationsverdampfer aufkonzentriert und evtl. ausfallendes N,N'-Dicyclohexylharnstoff wurde abfiltriert. Der ölige Rückstand wurde anschließend zweimal aus Chloroform/n-Hexan umkristallisiert und im Ölpumpenvakuum getrocknet. PG: Protecting Group (Z- oder BOC-Schutzgruppe)

### 5a) Z-D-Met-L-Val-OMe (Z-DL-IIa-OMe)

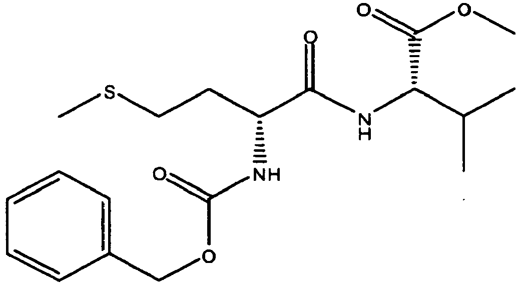

Summenformel: C₁₉H₂₈N₂O₅S (396,50 g/mol), Ausbeute: 4,60 g (58%), Reinheit: 97%, weißer Feststoff.

¹H-NMR von Z-D-Met-L-Val-OMe (Z-**DL-IIa-**OMe) (500 MHz, CDCl₃) : δ = 0,88 (d, ³*J* = 6,8 Hz, 3H, CH₃); 0,93 (d, ³*J* = 6,8 Hz, 3H, CH₃); 1,90-2,20 (m, 3H, SCH₂C**H**₂, C**H**(CH₃)₂); 2,10 (s, 3H, SCH₃); 2,50-2,64 (m, 2H, SCH₂); 3,73 (s, 3H, OCH₃); 4,38-4,44 (m, 1H, CH); 4,48-4,54 (m, 1H, CH); 5,08-5,18 (m, 2H, OCH₂); 5,49 (bs, 1H, NH); 6,58 (bs, 1H, NH); 7,24-7,38 (m, 5H, Ph)

¹³C-NMR von Z-D-Met-L-Val-OMe (Z-**DL-IIa**-OMe) (125 MHz, CDCl₃): δ = 15, 26; 17,74; 19,01; 30, 13; 31,16; 31, 67; 52,21; 57,24; 67,22; 128,16; 128,27; 128,58; 136,16; 156,13; 171,01; 171,95

### 5b) Z-D-Met-L-Leu-OMe (Z-DL-IIb-OMe)

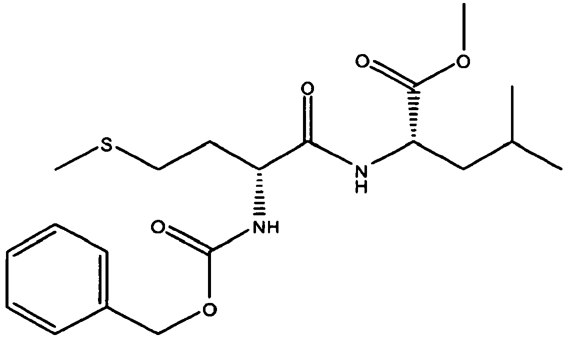

Summenformel: C₂₀H₃₀N₂O₅S (410,53 g/mol), Ausbeute: 5,40 g (66%), Reinheit: 97%, weißer Feststoff.

¹H-NMR von Z-D-Met-L-Leu-OMe (Z-**DL-IIb-**OMe) (500 MHz, D₆-DMSO): δ = 0,90-0,95 (m, 6H, CH(C**H**₃)₂); 1,50-1,72 (m, 3H, C**H**₂C**H**(CH₃)₂); 1,90-2,15 (m, 2H, SCH₂C**H**₂); 2,09 (s, 3H, SCH₃); 2,48-2,64 (m, 2H, SCH₂); 3,71 (s, 3H, OCH₃); 4,36-4,44 (m, 1H, CH); 4,56-4,62 (m, 1H, CH); 5,12 (s, 2H, OCH₂); 5,56 (d, ³*J* = 7,6 Hz, 1H, OC(=O)NH); 6,59 (bs, 1H, NH); 7,26-7,36 (m, 5H, Ph)

¹³C-NMR von Z-D-Met-L-Leu-OMe (Z-**DL-IIb**-OMe) (125 MHz, D₆-DMSO): δ = 15,27; 21,86; 22,78; 24,95; 30,11; 31,62; 33,96; 41,35; 50,86; 52,33; 67,20; 128,09; 128,25; 128,57; 156,97; 170,95; 173,01

### 5c) Z-D-Met-L-Ile-OMe (Z-DL-IIc-OMe)

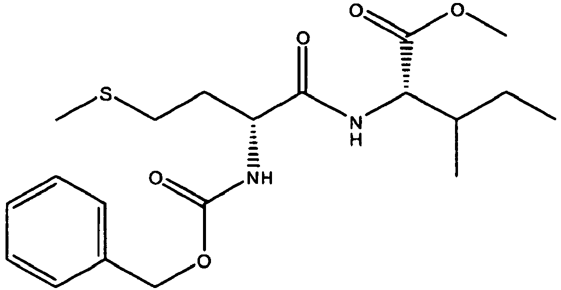

Summenformel: C₂₀H₃₀N₂O₅S (410, 53 g/mol), Ausbeute: 5,09 g (62%), Reinheit: 97%, weißer Feststoff.

¹H-NMR von Z-D-Met-L-Ile-OMe (Z-**DL-IIc**-OMe) (500 MHz, CDCl₃): δ = 0,86-0,94 (m, 6H, CH(C**H**₃)CH₂C**H**₃); 1,10-1,45 (m, 2H, C**H**₂CH₃); 1,84-1,94 (m, 1H, C**H**(CH₃); 1,94-2,16 (m, 2H, SCH₂C**H**₂); 2,10 (s, 3H, SCH₃); 2,49-2,64 (m, 2H, SCH₂); 3,72 (s, 3H, OCH₃); 4,36-4,44 (m, 1H, CH); 4,52-4,58 (m, 1H, CH); 5,08-5,18 (m, 2H, OCH₂); 5,46 (bs, 1H, NH); 6,58 (bs, 1H, NH); 7,28-7,38 (m, 5H, Ph)

¹³C-NMR von Z-D-Met-L-Ile-OMe (Z-**DL-IIc**-OMe) (125 MHz, CDCl₃): δ = 11,55; 15,26; 15,54; 25,19; 30,12; 31,70; 33,96; 37,79; 52,15; 45,07; 56,55; 67,18; 128,12; 128,24; 128,56; 156,13; 170,92; 171,96

### 5d) Z-D-Met-L-Thr-OMe (Z-DL-IId-OMe)

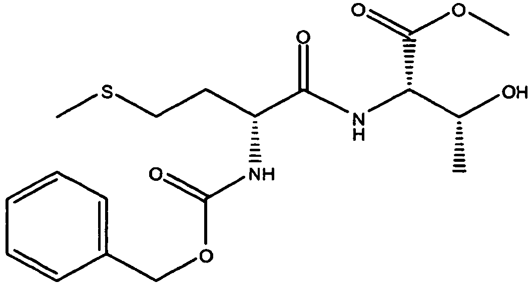

Summenformel: C₁₈H₂₆N₂O₆S (398,47 g/mol), Ausbeute: 2,14 g (36%), Reinheit: 95%, leicht gelblicher Feststoff.

¹H-NMR von Z-D-Met-L-Thr-OMe (**Z-DL-IId**-OMe) (500 MHz, CDCl₃) : δ = 1,10-1,25 (m, 3H, CHC**H**₃); 1,95-2,20 (m, 2H, SCH₂C**H**₂); 2,09 (s, 3H, SCH₃); 2,49 (bs, 1H, OH); 2,52-2,62 (m, 2H, SCH₂); 3,74 (s, 3H, OCH₃); 4,30-4,56 (m, 3H, 3 x CH); 5,12 (s, 2H, OCH₂); 5,70-5,78 (m, 1H, NH); 7,03 (d, ³*J* = 8,9 Hz, 1H, NH); 7,28-7,38 (m, 5H, Ph)

¹³C-NMR von Z-D-Met-L-Thr-OMe (Z-**DL-IId**-OMe) (125 MHz, CDCl₃): δ = 15, 15; 20,05; 30,10; 31, 91; 52, 66; 54, 37; 57,44; 67,23; 67,82; 128,17; 128,26; 128,57; 136,16; 156,18; 171,25; 171,87

### 5e) Z-D-Met-L-Lys(BOC)-OMe (Z-DL-IIe(BOC)-OMe)

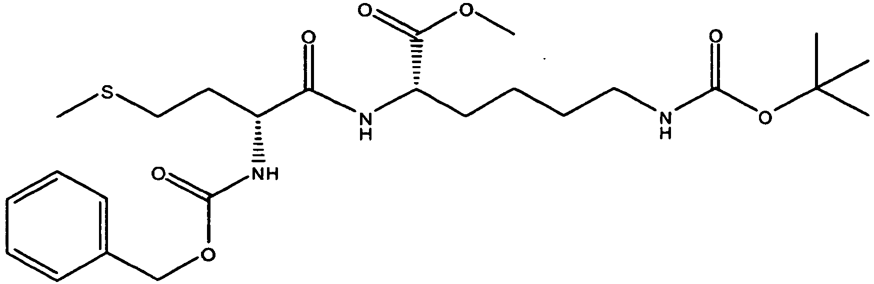

Summenformel: C₂₅H₃₉N₃O₇S (525,66 g/mol), Ausbeute: 10,86 g (33%), Reinheit: 95%, leicht gelblicher Feststoff.

¹H-NMR von Z-D-Met-L-Lys(BOC)-OMe (Z-**DL-IIe**(BOC)-OMe) (500 MHz, CDCl₃): δ = 1,25-1,90 (m, 6H, 3 x CH₂(Lys)); 1,43 (s, 9H, C(CH₃)₃); 1,92-2,16 (m, 2H, SCH₂C**H**₂); 2,09 (s, 3H, SCH₃); 2,48-2,62 (m, 2H, SCH₂); 3,02-3,12 (m, 2H, NCH₂); 3,72 (s, 3H, OCH₃); 4,35-4,65 (m, 3H, 2 x CH, NH) ; 5,13 (s, 2H, OCH₂); 5,58 (d, ³*J* = 7,5 Hz, 1H, NH) ; 6,75 (bs, 1H, NH); 7,28-7,36 (m, 5H, Ph)

¹³C-NMR von Z-D-Met-L-Lys(BOC)-OMe (Z-**DL-IIe**(BOC)-OMe) (125 MHz, CDCl₃): δ = 15,31; 22,44; 28,45; 29,47; 30,12; 31,82; 52,08; 52,45; 67,20; 79,15; 128,08; 128,25; 128,34; 128,57; 156,07; 170,97; 172,38

### 5f) Z-D-Met-L-Phe-OMe (Z-DL-IIg-OMe)

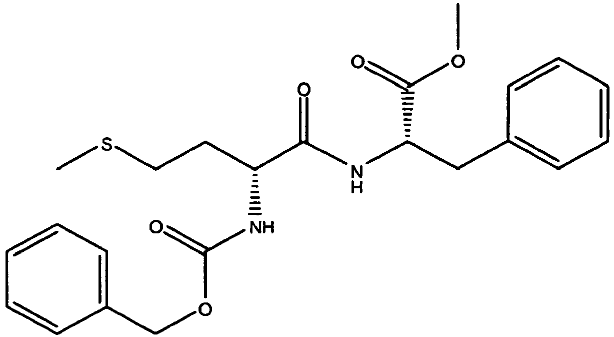

Summenformel: C₂₃H₂₈N₂O₅S (444,54 g/mol), Ausbeute: 3,73 g (42%), Reinheit: 95% (HPLC), weißer Feststoff.

¹H-NMR von Z-D-Met-L-Phe-OMe (Z-**DL-IIg-**OMe) (500 MHz, D₆-DMSO/CDCl₃) : δ = 1,72-1,94 (m, 2H, SCH₂C**H**₂); 2,01 (s, 3H, SCH₃); 2,30-2,38 (m, 2H, SCH₂); 2,94-3,14 (m, 2H, C**H**₂Ph); 3,70 (s, 3H, OCH₃); 4,25-4,32 (m, 1H, C**H**CH₂CH₂S); 4,70-4,78 (m, 1H, C**H**CH₂Ph); 5,00-5,10 (bs, 2H, OC**H**₂Ph); 6,60-6,70 (m, 1H, NH); 7,10-7,35 (m, 10H, 2 x Ph); 7,75-7,80 (bs, 1H, NH)

### 5g) Z-D-Met-L-His-OMe (Z-DL-IIh-OMe)

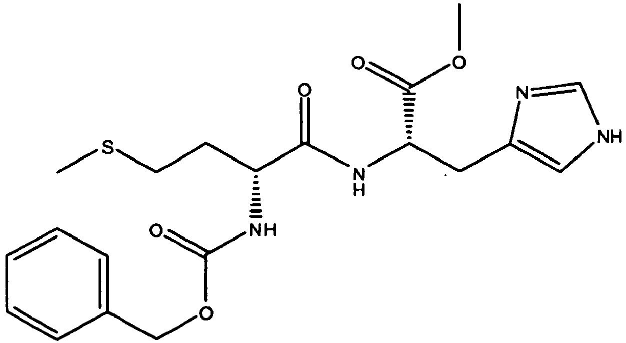

Summenformel: C₂₀H₂₆N₄O₅S (439,51 g/mol), Ausbeute: 2,35 g (27%), Reinheit: 95% (HPLC), leicht gelblicher Feststoff.

¹H-NMR von Z-D-Met-L-His-OMe (Z-**DL-IIh**-OMe) (500 MHz, CDCl₃): δ = 1,88-2,14 (m, 2H, SCH₂C**H**₂); 2,05 (s, 3H, SCH₃); 2,44-2,56 (m, 2H, SCH₂); 3,06-3,14 (m, 2H, C**H**₂-imidazolyl); 3,68 (s, 3H, OCH₃); 4,20-4,40 (m, 2H, NH, CH); 4,70-4,76 (m, 1H, CH); 5,11 (s, 2H, OCH₂); 5,91 (d, ³*J* = 7,6 Hz, 1H, NH); 6,76 (bs, 1H, C**H**(imidazolyl); 7,26-7,45 (m, 5H, Ph); 7,73 (bs, 1H, C**H**(imidazolyl)); 9,30 (bs, 1H, NH)

¹³C-NMR von Z-D-Met-L-His-OMe (Z-**DL-IIh**-OMe) (125 MHz, CDCl₃): δ = 15,27; 29,94; 31,81; 33,92; 52,46; 67,14; 116,88; 128,02; 128,12; 128,23; 128,49; 128,58; 133,23; 135,20; 136,21; 156,97; 171,17; 171,57

### 5h) Z-D-Met-L-Trp-OMe (Z-DL-IIj-OMe)

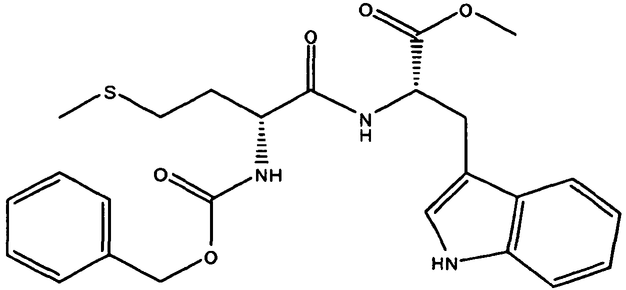

Summenformel: C₂₅H₂₉N₃O₅S (483,58 g/mol), Ausbeute: 5,71 g (59%), Reinheit: 98% (HPLC), leicht gelblicher Feststoff.

¹H-NMR von Z-D-Met-L-Trp-OMe (Z-DL-IIj-OMe) (500 MHz, D₆-DMSO): δ = 1,60-1,80 (m, 2H, SCH₂C**H**₂); 1,95 (s, 1H, SCH₃); 2,25-2,35 (m, 2H, SCH₂); 3,02-3,20 (m, 2H, C**H**₂-indolyl); 3,60 (s, 3H, OCH₃); 4,10-4,16 (m, 1H, CH); 4,50-4,60 (m, 1H, CH); 4,98-5,08 (m, 2H, OCH₂); 6,94-7,50 (m, 12H, indolyl, Ph, OC(=O)NH); 8,25 (d, ³*J* = 8,6 Hz, 1H, CON**H**-Trp) ¹³C-NMR von Z-D-Met-L-Trp-OMe (Z-DL-IIj-OMe) (125 MHz, D₆-DMSO): δ = 14,42; 27,01; 29,40; 31,59; 51,75; 52,78; 53,60; 65,36; 109,16; 111,31; 117,84; 118,31; 120,86; 123,60; 126,90; 127,59; 127,68; 128,21; 136,02; 136,89; 155,81; 171,32; 172,06

### Beispiel 6:

### Allgemeine Vorschrift zur Synthese von Verbindungen der Gruppe PG-L-EAA-D-Met-OMe (PG-LD-I-OMe) (Kopplungsreaktion)

3,99 g (20,0 mmol) D-Methioninmethylester Hydrochlorid wurden in einer Mischung aus 30 ml Chloroform und 5 ml Methanol suspendiert, mit 4,15 g (30 mmol) K₂CO₃ versetzt und 1 Stunde bei Raumtemperatur gerührt. Anschließend wurde das Salz abfiltriert und mit etwas Chloroform gewaschen. Nach dem Einengen des Filtrates wurde der erhaltene Rückstand in 50 ml Tetrahydrofuran aufgenommen, mit 4,37 g (21,0 mmol; 1,05 eq.) DCC und 20,0 mmol der entsprechenden PG-L-EAA (PG-L-Aminosäure) versetzt und über 16 h bei Raumtemperatur gerührt. Danach wurde das Reaktionsgemisch mit 3 ml Eisessig versetzt, 30 Minuten gerührt und der ausgefallene weiße Feststoff (N,N'-Dicyclohexylharnstoff) abfiltriert. Das Filtrat wurde am Rotationsverdampfer aufkonzentriert und evtl. ausfallendes N,N'-Dicyclohexylharnstoff wurde abfiltriert. Der ölige Rückstand wurde anschließend zweimal aus Chloroform/*n*-Hexan umkristallisiert und im Ölpumpenvakuum getrocknet.
PG: Protecting Group (Z- oder BOC-Schutzgruppe)

### 6a) Z-L-Val-D-Met-OMe (Z-LD-Ia-OMe)

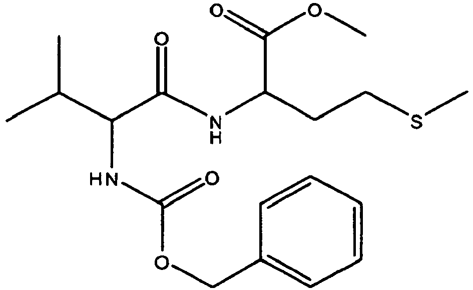

### Summenformel: C₁₉H₂₈N₂O₅S (396,50 g/mol), Ausbeute: 3,01 g (38%), Reinheit: 95% (HPLC), weißer Feststoff

¹H-NMR von Z-L-Val-D-Met-OMe (Z-**LD-Ia**-OMe) (500 MHz, CDCl₃) : δ = 0,92 (d, ³*J* = 6,9 Hz, 3H, CH₃); 0,99 (d, ³*J* = 6,9 Hz, 3H, CH₃); 1, 90-2, 25 (m, 3H, SCH₂C**H**₂, C**H**(CH₃)₂; 2,07 (s, 3H, SCH₃); 2,44-2,54 (m, 2H, SCH₂); 3,74 (s, 3H, OCH₃); 4,04-4,10 (m, 1H, CH); 4,67-4,74 (m, 1H, CH); 5,12 (s, 2H, OCH₂); 5,28 (bs, 1H, NH); 6,65 (d, ³*J* = 7,5 Hz, 1H, NH); 7,28-7,38 (m, 5H, Ph)

¹³C-NMR von Z-L-Val-D-Met-OMe (Z-**LD-Ia**-OMe) (125 MHz, CDCl₃): δ = 15, 45; 17,46; 19, 30; 29, 96; 30, 87; 31, 40; 51,57; 52,55; 60,37; 67,18; 128,08; 128,24; 128,57; 136,19; 156,38; 171,04; 172,04

### 6b) Z-L-Leu-D-Met-OMe (Z-LD-Ib-OMe)

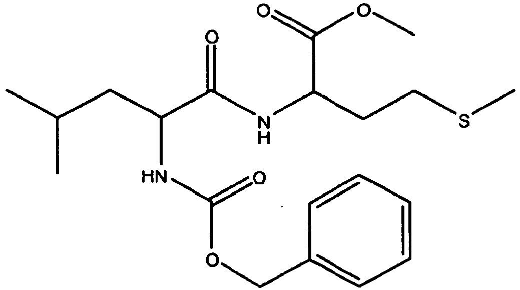

### Summenformel: C₂₀H₃₀N₂O₅S (410,53 g/mol), Ausbeute: 4,48 g (55%), Reinheit: 96% (HPLC), weißer Feststoff

¹H-NMR von Z-L-Leu-D-Met-OMe (Z-**LD-Ib**-OMe) (500 MHz, CDCl₃): δ = 0, 94 (d, ³*J* = 6, 3 Hz, 6H, CH(C**H**₃)₂); 1, 48-1, 72 (m, 3H, C**H**₂C**H**(CH₃)₂); 1,90-2,20 (m, 2H, SCH₂C**H**₂); 2,07 (s, 3h, SCH₃); 2,42-2,52 (m, 2H, SCH₂); 3,73 (s, 3H, OCH₃); 4,20-4,30 (m, 1H, CH); 4,64-4,72 (m, 1H, CH); 5,12 (s, 2H, OCH₂); 5,23 (d, ³*J* = 7,9 Hz, 1H, NH) ; 6,84 (d, ³*J* = 7,2 Hz, 1H, NH); 7,28-7,38 (m, 5H, Ph)

¹³C-NMR von Z-L-Leu-D-Met-OMe (Z-**LD-Ib**-OMe) (125 MHz, CDCl₃): δ = 15, 47; 22, 97; 24,81; 2 9, 97; 31,46; 51, 58; 52,55; 67,23; 128,09; 128,26; 128,58; 136,16; 156,23; 172,02; 172,09

### 6c) Z-L-Ile-D-Met-OMe (Z-LD-Ic-OMe)

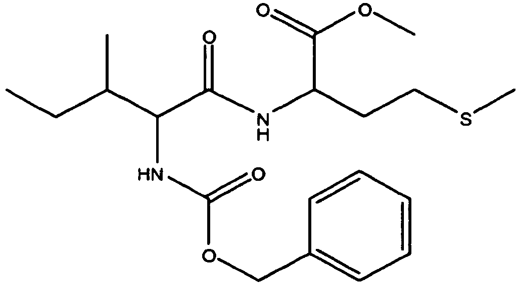

### Summenformel: C₂₀H₃₀N₂O₅S (410,53 g/mol), Ausbeute: 3,89 g (47%), Reinheit: 97% (HPLC), weißer Feststoff

¹H-NMR von Z-L-Ile-D-Met-OMe (Z-**LD-Ic**-OMe) (500 MHz, CDCl₃): δ = 0,91 (t, ³*J* = 7,1 Hz, 3H, CH₂C**H**₃); 0,96 (d, ³*J* = 7,1 Hz; 3H, CH(C**H**₃); 1,08-1,16 (m, 1H, C**H**'H"CH₃); 1,46-1,54 (m, 1H, CH'**H**"CH₃); 1,88-2,20 (m, 3H, C**H**(CH₃), SCH₂C**H**₂); 2,07 (s, 3H, SCH₃); 2,44-2,52 (m, 2H, SCH₂); 3,73 (s, 3H, OCH₃); 4,08-4,16 (m, 1H, CH); 4,66-4,74 (m, 1H, CH) ; 5, 11 (s, 2H, OCH₂); 5,34 (d, ³*J* = 7, 6 Hz, 1H; NH) ; 6, 74 (d, ³*J* = 8,0 Hz, 1H, NH); 7,28-7,38 (m, 5H, Ph)

¹³C-NMR von Z-L-Ile-D-Met-OMe (Z-**LD-Ic**-OMe) (125 MHz, CDCl₃): δ = 11, 54; 15, 46; 15, 68; 24, 66; 29, 96; 31, 42; 37,36; 51,59; 52,57; 59,83; 67,19; 128,10; 128,25; 128,58; 136,20; 156,34; 170,99; 172,03

### 6d) Z-L-Thr-D-Met-OMe (Z-LD-Id-OMe)

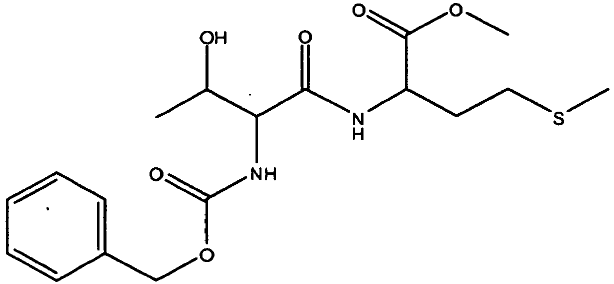

### Summenformel: C₁₈H₂₆N₂O₆S (398,47 g/mol), Ausbeute: 2,47 g (31%), Reinheit: 99% (HPLC), leicht gelblicher Feststoff

¹H-NMR von Z-L-Thr-D-Met-OMe (Z-**LD-Id**-OMe) (500 MHz, CDCl₃): δ = 1, 19 (d, ³*J* = 6,4 Hz, 3H, CH₃); 1, 94-2, 20 (m, 2H, SCH₂C**H**₂); 2,06 (s, 3H, SCH₃); 2,45-2,55 (m, 2H, SCH₂); 3,73 (s, 3H, OCH₃); 4,18 (bs, 1H, CH); 4,39 (bs, 1H; CH); 4,66-4,74 (m, 1H, CH); 5,10-5,18 (m, 2H, OCH₂); 5,85 (bs, 1H, OC(=O)NH); 7,21 (bs, 1H, NH); 7,28-7,38 (m, 5H, Ph)

¹³C-NMR von Z-L-Thr-D-Met-OMe (Z-**LD-Id**-OMe) (125 MHz, CDCl₃): δ = 15,43; 18, 48; 30,10; 30, 91; 51, 80; 52, 66; 59,16; 66,99; 67,36; 128,04; 128,29; 128,59; 136,08; 156,94; 171,27; 172,25

### 6e) BOC-L-Lys(BOC)-D-Met-OMe (BOC-LD-Ie(BOC)-OMe)

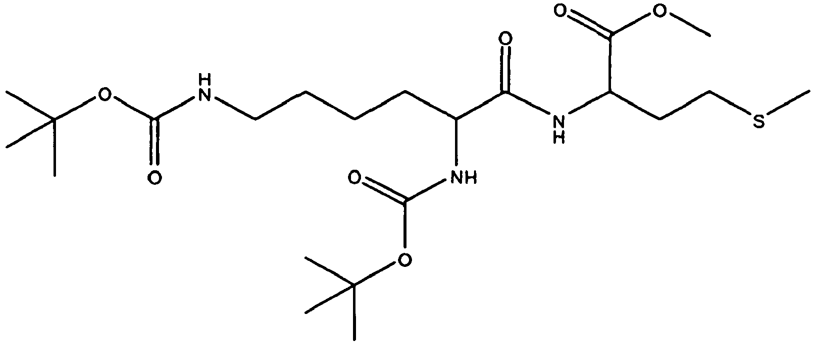

### Summenformel: C₂₂H₄₁N₃O₇S (491, 64 g/mol), Ausbeute: 5,22 g (53,1%), Reinheit: 97% (HPLC), weißer amorpher Feststoff

¹H-NMR von BOC-L-Lys(BOC)-D-Met-OMe (BOC-**LD-Ie**(BOC)-OMe) (500 MHz, CDCl₃): δ = 1,32-1,42 (m, 2H, CH₂(Lys)); 1,44 (s, 9H, C(CH₃)₃); 1,45 (s, 9H, C(CH₃)₃); 1,46-1,56 (m, 2H, CH₂(Lys)); 1,60-1,72 (m, 1H, CHC**H**'H"(Lys)); 1,82-1,92 (m, 1H, CHCH'C**H**"(Lys); 1,92-2,03 (m, 1H, SCH₂CH**H**'H"); 2,09 (s, 3H, SCH₃); 2,12-2,22 (m, 1H, SCH₂CH'**H**"); 2,51 (t, ³*J* = 7,4Hz, 2H, SCH₂); 3,08-3,16 (m, 2H, NCH₂); 3,75 (s, 3H, OCH₃); 4,02-4,12 (m, 1H, CH); 4,54-4,62 (m, 1H, NH); 4,66-4,74 (m, 1H, CH): 5,06-4,14 (m, 1H, NH); 6,81 (d, ³*J* = 7,4 Hz, 1H, NH)

### 6f) Z-L-Phe-D-Met-OMe (Z-LD-Ig-OMe)

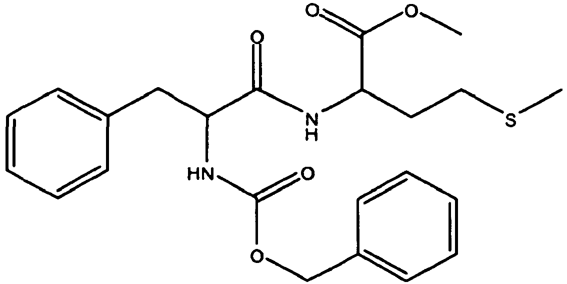

### Summenformel: C₂₃H₂₈N₂O₅S (444,54 g/mol), Ausbeute: 3,51 g (40%), Reinheit: 99% (HPLC), weißer Feststoff

¹H-NMR von Z-L-Phe-D-Met-OMe (Z-**LD-Ig**-OMe) (500 MHz, CDCl₃): δ = 1,78-2,04 (m, 2H, SCH₂C**H**₂); 2,02 (s, 3H, SCH₃); 2,20-2,30 (m, 2H, SCH₂); 3,02-3,14 (m, 2H, C**H**₂Ph); 3,71 (s, 3H, OCH₃); 4,40-4,50 (m, 1H, CH); 4,60-4,66 (m, 1H, CH); 5,09 (s, 2H, OCH₂); 5,31 (bs, 1H, OC(=O)NH); 6,42 (d, ³*J* = 7,6 Hz, 1H, NH); 7,16-7,36 (m, 10H, 2 x Ph)

¹³C-NMR von Z-L-Phe-D-Met-OMe (Z-**LD-Ig**-OMe) (125 MHz, CDCl₃): δ = 15, 37; 29, 67; 31, 35; 38, 63; 51, 52; 52, 53; 56,36; 67,15; 127,18; 128,06; 128,24; 128,57; 128,83; 129,26; 136,13; 136,30; 155,90; 170,63; 171,88

### 6g) BOC-L-Phe-D-Met-OMe (BOC-LD-Ig-OMe)

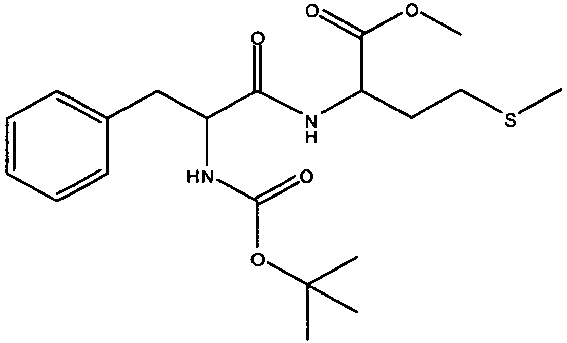

### Summenformel: C₂₀H₃₀N₂O₅S (410,53 g/mol), Ausbeute: 4,03 g (49%), Reinheit: 98% (HPLC), weißer Feststoff

¹H-NMR von BOC-L-Phe-D-Met-OMe (BOC-**LD-Ig**-OMe) (500 MHz, CDCl₃): δ = 1,42 (s, 9H, C(CH₃)₃); 1,80-2,08 (m, 2H, SCH₂C**H**₂); 2,04 (s, 3H, SCH₃); 2,24-2,34 (m, 2H, SCH₂); 3,07 (d, ³*J* = 7,2 Hz, 2H, C**H**₂Ph); 3,73 (s, 3H, OCH₃); 4,30-4,42 (m, 1H, CH); 4,60-4,68 (m, 1H, CH); 4,90-5,02 (bs, 1H, NH); 6,44 (d, ³*J* = 7,9 Hz, 1H, NH); 7,18-7,34 (m, 5H, Ph) ¹³C-NMR von BOC-L-Phe-D-Met-OMe (BOC-**LD-Ig**-OMe) (125 MHz, CDCl₃): δ = 15,39; 28,29; 29,67; 31,51; 38,42; 51,47; 52,50; 56,00; 80,38; 127,07; 128,79; 129,27; 136,60; 156,42; 171,00; 171,94

### 6h) Z-L-His-D-Met-OMe (Z-LD-Ih-OMe)

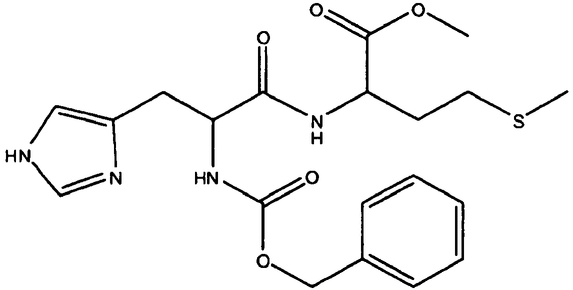

### Summenformel: C₂₀H₂₆N₄O₅S (434,51 g/mol), Ausbeute: 1,65 g (19%), Reinheit: 95% (HPLC), leicht gelblicher Feststoff

¹H-NMR von Z-L-His-D-Met-OMe (Z-**LD-Ih**-OMe) (500 MHz, D₆-DMSO/CDCl₃): δ = 1,82-1,98 (m, 2H, SCH₂C**H**₂); 2,01 (s, 3H, SCH₃); 2,30-2,44 (m, 2H, SCH₂); 2,76-2,94 (m, 2H, C**H**₂-imidazolyl) ; 3, 63 (s, 3H, OCH₃); 4, 28-4, 42 (m, 2H, 2 x CH); 5,01 (s, 2H, OCH₂); 6,78 (bs, 1H, CH(imidazolyl)); 7,25-7,37 (m, 6H, Ph, NH); 7,50 (bs, 1H, CH(imidazolyl)); 8,27 (bs, 1H, NH); 11,76 (bs, 1H, NH(imidazolyl))

¹³C-NMR von Z-L-His-D-Met-OMe (Z-**LD-Ih**-OMe) (125 MHz, D₆-DMSO/CDCl₃): δ = 14,54; 29,40; 30,52; 50,78; 51,79; 54,61; 65,35; 127,47; 127,61; 128,20; 134,53; 136,92; 155,57; 171,39; 171,94

### 6i) Z-L-Trp-D-Met-OMe (Z-LD-Ij-OMe)

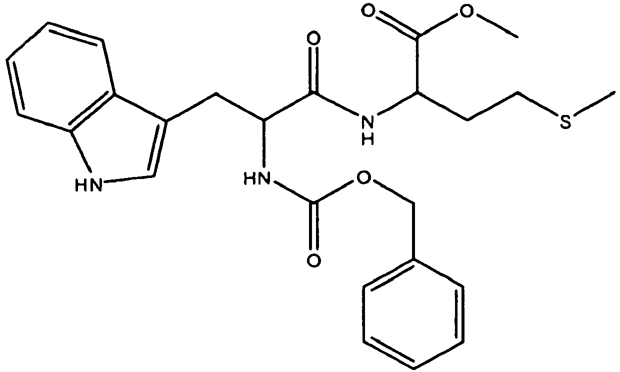

### Summenformel: C₂₅H₂₉N₃O₅S (483,58 g/mol), Ausbeute: 5,50 g (57%), Reinheit: 99% (HPLC), leicht gelblicher Feststoff

¹H-NMR von Z-L-Trp-D-Met-OMe (Z-**LD**-**Ij**-OMe) (500 MHz, CDCl₃) : δ = 1,68-1,92 (m, 2H, SCH₂C**H**₂) ; 1,97 (s, 3H, SCH₃); 2,08-2,14 (m, 2H, SCH₂); 3,14-3,34 (m, 2H, C**H**₂-indolyl); 3,64 (s, 3H, OCH₃); 4,50-4,62 (m, 2H, 2 x CH); 5,10 (s, 2H, OCH₂); 5,44 (bs, 1H, NH); 6,32 (bs, 1H, NH); 7,00-7,38, 10H; aromat.); 8,17 (bs, 1H, NH)

¹³C-NMR von Z-L-Trp-D-Met-OMe (Z-LD-Ij-OMe) (125 MHz, CDCl₃): δ = 15,31; 29,48; 31,26; 33,97; 51,48; 52,45; 55,65; 67,10; 1101,37; 111,34; 118,77; 119,94; 122,44; 123,14; 127,32; 128,09; 128,22; 128,56; 136,20; 136,28; 155,99; 171,15; 171,80

### 6j) BOC-L-Trp-D-Met-OMe (BOC-LD-Ij-OMe)

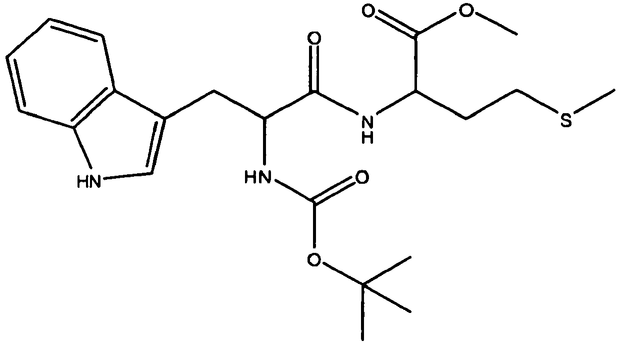

### Summenformel: C₂₂H₃₁N₃O₅S (449,56 g/mol), Ausbeute: 5,91 g (66%), Reinheit: 99% (HPLC), weißer Feststoff

¹H-NMR von BOC-L-Trp-D-Met-OMe (BOC-LD-Ij-OMe) (500 MHz, CDCl₃): δ = 1,42 (s, 8H, C(CH₃)₃); 1, 70-1, 98 (m, 2H, SCH₂C**H**₂) ; 1,99 (s, 3H, SCH₃); 2,10-2,20 (m, 2H, SCH₂); 3,14-3,34 (m, 2H, C**H**₂-indolyl); 3,66 (s, 3H, OCH₃); 4,44-4,52 (m, 1H, CH); 4,56-4,62 (m, 1H, CH); 5,12 (bs, 1H, NH); 6,39 (d, ³*J* = 8,0 Hz, 1H, NH); 7,04-7,38 (m, 5H, Indolyl-CH); 8,17 (d, ³*J* = 7,9 Hz, 1H, NH)

¹³C-NMR von BOC-L-Trp-D-Met-OMe (BOC-**LD**-**Ij**-OMe) (125 MHz, CDCl₃): δ = 15,28; 28,27; 29,43; 31,36; 33,93; 52,38; 55,25; 80,19; 110,54; 111,25; 118,78; 119,80; 122,31; 123,06; 127,40; 136,25; 155,40; 171,53; 171,85

### Beispiel 7:

### Allgemeine Vorschrift zur Synthese von Verbindungen der Gruppe PG-L-EAA-D-Met (PG-LD-I) und PG-D-Met-L-EAA (PG-DL-II) (Methylesterabspaltung)

10,0 mmol PG-L-EAA-D-Met-OMe (PG-LD-**I**-OMe) oder PG-D-Met-L-EAA-OMe (PG-DL-**II**-OMe) wurden in 15 ml Wasser und 200 ml Methanol suspendiert und mit 1,2 eq. (12,0 mmol) NaOH versetzt (12,0 ml 1N NaOH). Nach zweistündigem Rühren wurde die homogene Reaktionslösung mit verdünnter Salzsäure angesäuert und das Methanol am Rotationsverdampfer andestilliert. Der dabei auskristallisierte weiße Feststoff wurde abfiltriert, mit 20 ml Wasser gewaschen und umkristallisiert.
PG: Protecting Group (Z- oder BOC-Schutzgruppe)

### Beispiel 8:

### Allgemeine Vorschrift zur Synthese von Verbindungen der Gruppe L-EAA-D-Met (LD-I) und D-Met-L-EAA (DL-II) (N-terminale Z-Schutzgruppenabspaltung)

5,0 mmol Z-L-EAA-D-Met (Z-LD-**I**) oder Z-D-Met-L-EAA (Z-LD-**II**) wurden in 50 ml Eisessig gelöst, mit 18,5 ml (15,6 g; 250 mmol; 50 eq.) Dimethylsulfid und 5,0 g (3,6 ml) 33%iger HBr in Essigsäure (1,65 g; 4,0 eq.) versetzt. Nach Beendigung der Reaktion wurde die Reaktionslösung am Rotationsverdampfer eingeengt. Der Rückstand wurde in ca. 50 ml Methanol gelöst und mit 3,5 g (50 mmol; 10 eq.) Natriummethanthiolat versetzt. Nach 20 Minuten Rühren wurde bei Raumtemperatur wurde die Lösung mit konzentrierter Salzsäure neutralisiert und die Lösung am Rotationsverdampfer eingeengt. Der Rückstand wurde in 40 ml Wasser aufgenommen und dreimal mit je 40 ml Diethylether extrahiert. Die wässrige Phase wurde am Rotationsverdampfer aufkonzentriert, wobei ein weißer voluminöser Feststoff ausfiel. Das Dipeptid wurde abgesaugt, mit wenig Wasser gewaschen und im Vakuum getrocknet.

### Beispiel 9:

### Allgemeine Vorschrift zur Synthese von Verbindungen der Gruppe L-EAA-D-Met (LD-I) und D-Met-L-EAA (DL-II) (N-terminale BOC-Schutzgruppenabspaltung)

5,0 mmol BOC-L-EAA-D-Met (BOC-LD-**I**) oder BOC-D-Met-L-EAA (BOC-DL-**II**) wurden in 50 ml Eisessig gelöst und mit 5,0 g (3,6 ml) 33%iger HBr in Essigsäure (1,65 g (4,0 eq.)) versetzt. Nach Beendigung der Reaktion wurde die Reaktionslösung am Rotationsverdampfer eingeengt. Der Rückstand wurde in 40 ml Wasser aufgenommen und dreimal mit je 40 ml Diethylether extrahiert. Die wässrige Phase wurde während stetigem Kühlen im Eisbad langsam mit 20%iger NaOH-Lösung neutralisiert. Die Lösung wurde dreimal mit je 40 ml Diethylether gewaschen und die wässrige Phase am Rotationsverdampfer aufkonzentriert, wobei ein weißer voluminöser Feststoff ausfiel. Das Dipeptid wurde abgesaugt, mit wenig Wasser gewaschen und im Vakuum getrocknet.

### 9a) D-Met-L-Leu (DL-IIb)

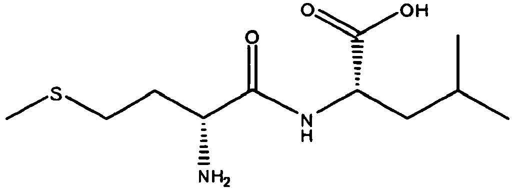

### Ausbeute: 860 mg (66%), Reinheit: 98% (HPLC), weißer voluminöser Feststoff

¹H-NMR von H-D-Met-L-Leu (**DL-IIb**) (500 MHz, D₆-DMSO+HCl): δ = 0,85 (d, ³*J* = 6,3 Hz, 3H, CH₃); 0,90 (d, ³*J* = 6,3 Hz, 3H, CH₃); 1,50-1,70 (m, 3H, SCH₂C**H**₂, C**H**(CH₃)₂); 2,00-2,10 (m, 5H, SCH₃, C**H**₂CH); 2,45-2,55 (m, 2H, SC**H**₂); 3,88-3,94 (m, 1H, CH); 4,22-4,30 (m, 1H, CH); 8,40-8.60 (m, 3H, NH₃⁺); 8,95 (d, ³*J* = 8, 3 Hz, 1H, NH)

¹³C-NMR von D-Met-L-Leu (**DL-IIb**) (500 MHz, D₆-DMSO+HCl): δ = 14,56; 21,16; 22,95; 24,50; 28,21; 31,22; 50,66; 51,77; 168,16; 173,50

| HRMS (pESI) : | |
|---|---|
| Berechnet: 263,14294 | C₁₁H₂₃N₂O₃S (MH⁺) |
| Gefunden: 263,14224 | |

### 9b) D-Met-L-Ile (DL-IIc)

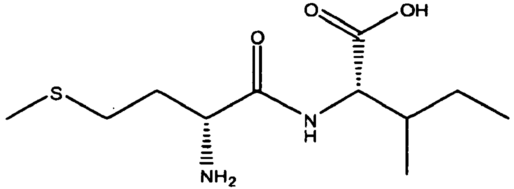

### Ausbeute: 900 mg (69%), Reinheit: 99% (HPLC), weißer voluminöser Feststoff

¹H-NMR von D-Met-L-Ile **(DL-IIc)** (500 MHz, D₆-DMSO+HCl): δ = 0,82-0,90 (m, 6H, 2 x CH₃); 1,16-1,44 (m, 2H, SCH₂C**H**₃); 1,80-1,90 (m, 1H, CH); 2,00-2,10 (m, 2H, CH₂); 2,05 (s, 3H, SCH₃); 2,46-2,54 (m, 2H, SCH₂); 3,96-4,02 (m, 1H, CH); 4,24-4,30 (m, 1H, CH); 8.36-8,44 (m, 3H, NH₃⁺); 8,79 (d, ³*J* = 8,5 Hz, 1H, NH)

¹³C-NMR von D-Met-L-Ile **(DL-IIc)** (500 MHz, D₆-DMSO+HCl): δ = 11,44; 14,86; 15,96; 24,95; 28,58; 31,71; 36,75; 52,00; 56,82; 168,64; 172,74

| HRMS (pESI) : | |
|---|---|
| Berechnet: 263,14294 | C₁₁H₂₃N₂O₃S (MH⁺) |
| Gefunden: 263,14215 | |

### 9c) D-Met-L-Thr (DL-IId)

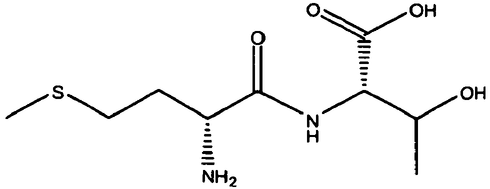

### Ausbeute: 640 mg (51%), Reinheit: 98% (HPLC), weißer voluminöser Feststoff

¹H-NMR von D-Met-L-Thr (**DL-IId**) (500 MHz, D₆-DMSO+HCl): δ = 1,10 (d, *³J* = 6,2 Hz, 3H, CHC**H**₃); 2,06 (s, 3H, SCH₃); 2,06-2,14 (m, 2H, SCH₂C**H**₂) ; 2,48-2,60 (m, 2H, SCH₂); 4,00-4,28 (m, 4H, 2 x CH, CHOH); 8,40-8,46 (m, 3H, NH₃⁺); 8,77 (d, *³J* = 8,6 Hz, 1H, NH)

¹³C-NMR von D-Met-L-Thr **(DL-IId)** (500 MHz, D₆-DMSO+HCl): δ = 15,14; 20,94; 28,74; 31,94; 52,44; 58,81; 66,97; 169,22; 172,20

| HRMS (pESI): | |
|---|---|
| Berechnet: 251,10655 | C₉H₁₉N₂O₄S (MH⁺) |
| Gefunden: 251,10583 | |

### 9d) D-Met-L-Lys x 2 HCl (DL-IIe-2HCl)

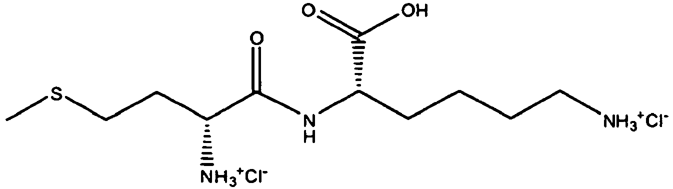

### Ausbeute: 613 mg (49%), Reinheit: 97% (HPLC), gelblicher Feststoff

¹H-NMR von D-Met-L-Lys x 2 HCl (**DL-IIe**-2HCl) (500 MHz, DMSO): δ = 1,32-1,42 (m, 2H, CH₂(Lys); 1,52-1,62 (m, 2H, CH₂(Lys); 1,64-1,80 (m, 2H, CH₂(Lys); 2,00-2,10 (m, 5H, SCH₂C**H**₂, CH₃); 2,46-2,56 (m, 2H, SCH₂); 2,70-2,82 (m, 2H, NCH₂); 3,92-4,00 (m, 1H, CH); 4,16-4,24 (m, 1H, CH); 7,9 (bs, 3H, NH₃⁺); 8,3 (bs, 3H, NH₃⁺); 8,92 (d, ³*J* = 7,7 Hz, 1H, NH)

| HRMS (pESI): | |
|---|---|
| Berechnet: 278,15384 | C₁₁H₂₄O₃S (MH⁺) |
| Gefunden: 278,15288 | |

### 9e) D-Met-L-Phe (DL-IIg)

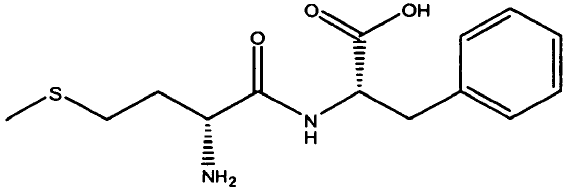

### Ausbeute: 930 mg (63%), Reinheit: 98% (HPLC), weißer voluminöser Feststoff

¹H-NMR von D-Met-L-Phe (**DL-IIg**) (500 MHz, D₆-DMSO+HCl): δ = 1,64-1,82 (m, 2H, SCH₂C**H**₂); 1,95 (s, 3H, CH₃); 2,10-2,26 (m, 2H, SCH₂); 2,80-3,20 (m, 2H, C**H**₂Ph); 3,70 (t, *³J* = 6,1 Hz, 1H, C**H**CH₂Ph); 4,42-4,50 (m, 1H, C**H**CH₂CH₂S); 7,16-7,28 (m, 5H, Ph); 8,50-8,60 (bs, 1H, NH)

¹³C-NMR von D-Met-L-Phe (**DL-IIg**) (500 MHz, D₆-DMSO+HCl): δ = 14,28; 28,08; 31,63; 37,03; 51,84; 53,78; 126,28; 127,97; 129,08; 137,69; 168,90; 172,65

| HRMS (pESI): | |
|---|---|
| Berechnet: 297,12729 | C₁₄H₂₁N₂O₃S (MH⁺) |
| Gefunden: 297,12643 | |

### 9f) D-Met-L-Trp (DL-IIj)

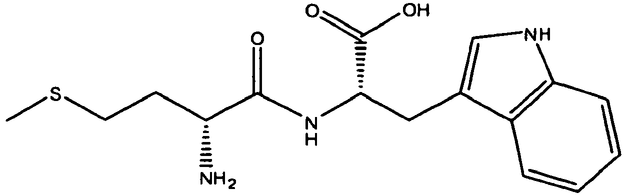

### Ausbeute: 1,38 g (82%), Reinheit: 98% (HPLC), weißer voluminöser Feststoff

¹H-NMR von D-Met-L-Trp **(DL-IIj)** (500 MHz, D₆-DMSO+HCl): δ = 1,50-1,80 (m, 2H, SCH₂C**H**₂); 1,93 (s, 3H, CH₃); 2,30-2,40 (m, 2H, SCH₂); 3,02-3,22 (m, 2H, CH₂); 3,34-3,40 (m, 1H, SCH₂CH₂C**H**); 4,38-4,40 (m, 1H, CH); 6,90-7,60 (m, 5H, indolyl); 8,05-8,15 (bs, 1H, CONH); 10,80 (bs, 1H, NH)

¹³C-NMR von D-Met-L-Trp **(DL-IIj)**(500 MHz, D₆-DMSO+HCl): δ = 14,37; 27,38; 29,12; 33,28; 53,00; 53,49; 110,26; 111,17; 118,07; 118,26; 120,64; 123,36; 127,52; 135,98; 171,87; 173,53

| HRMS (pESI): | |
|---|---|
| Berechnet: 336,13819 | C₁₆H₂₂N₃O₃S (MH⁺) |
| Gefunden: 336,13718 | |

### 9g) L-Leu-D-Met (LD-Ib)

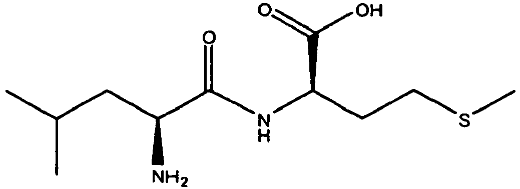

### Ausbeute: 710 mg (54%), Reinheit: 99% (HPLC), weißer voluminöser Feststoff

¹H-NMR von H-L-Leu-D-Met **(LD-Ib)** (500 MHz, D₆-DMSO+HCl): δ = 0,91 (t, ³*J* = 5,4 Hz, 6H, 2 x CH₃); 1,62 (t, ³*J* = 6,8 Hz, 2H, C**H**₂CH(CH₃)₂); 1,60-1,75 (m, 1H, C**H**(CH₃)₂); 1,88-2,04 (m, 2H, SCH₂C**H**₂) ; 2,04 (s, 3H, SCH₂); 2,40-2,54 (m, 2H, SCH₂); 3,78-3,86 (m, 1H, CH); 4,32-4,40 (m, 1H, CH) ; 8,36 (d, ³*J* = 4,0 Hz, 3H, NH₃⁺); 9,03 (d, ³*J* = 7,8 Hz, 1H, NH)

¹³C-NMR von H-L-Leu-D-Met **(LD-Ib)** (500 MHz, D₆-DMSO+HCl): δ = 14,56; 22,78; 23,33; 23,93; 29,89; 30,58; 41,03; 51,40; 51,56; 169,41; 173,03

| HRMS (pESI): | |
|---|---|
| Berechnet: 263,14294 | C₁₁H₂₃N₂O₃S (MH⁺) |
| Gefunden: 263,14218 | |

### 9h) L-Ile-D-Met (LD-Ic)

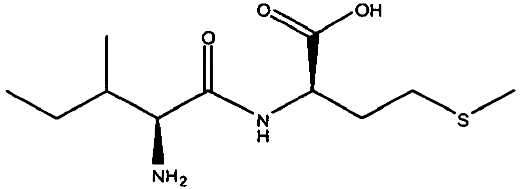

### Ausbeute: 790 mg (59%), Reinheit: 97% (HPLC), weißer voluminöser Feststoff

¹H-NMR von L-Ile-D-Met (**LD-Ic**) (500 MHz, D₆-DMSO): δ = 0,82 (t, ³*J* = 7,4 Hz, 3H, C**H**₃CH₂); 0,86 (2, ³*J* = 6,6 Hz, 3H, C**H**₃CH); 1,02-1,12 (m, 1H, CH₃C**H**'H''); 1,36-1,46 (m, 1H, CH₃CH'**H**''); 1,64-1,72 (m, 1H, CH₃C**H**); 1,80-1,98 (m, 2H, SCH₂C**H**₂); 2,00 (s, 3H, CH₃); 2,36-2,44 (m, 2H, SCH₂); 3,27 (d, *³J* = 5,1 Hz, 1H, CH); 3,99 (t, *³J* = 5,3 Hz; 1H, CH); 7,92 (bs, 1H, NH)

¹³C-NMR von L-Ile-D-Met (**LD-Ic**) (500 MHz, D₆-DMSO): δ = 11,57; 14,54; 15,60; 23,58; 29,69; 32,42; 37,90; 53,06; 58,79; 172,09; 173,37

| HRMS (pESI): | |
|---|---|
| Berechnet: 263,14294 | C₁₁H₂₃N₂O₃S (MH⁺) |
| Gefunden: 263,14224 | |

### 9i) L-Thr-D-Met (LD-Id)

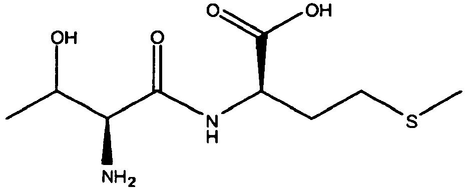

### Ausbeute: 690 mg (55%), Reinheit: 99% (HPLC), weißer voluminöser Feststoff

¹H-NMR von L-Thr-D-Met (**LD-Id**) (500 MHz, D₆-DMSO+CDCl₃): δ = 1,08 (d, *³J* = 6,6 Hz, 3H, CH₃); 1,82-2,08 (m, 2H, SCH₂C**H**₂), 2,02 (s, 3H, SCH₂); 2,38-2,50 (m, 2H, SCH₂); 3,06 (d, *³J* = 4,2 Hz, 1H, CH); 3,88-3,94 (m, 1H, CH); 3,98-4,04 (m, 1H, CH); 7,91 (d, ³*J* = 7,3 Hz, 1H, NH)

¹³C-NMR von L-Thr-D-Met (**LD-Id**) (500 MHz, D₆-DMSO+CDCl₃): δ = 14,75; 19,70; 30,07; 32,45; 53,71; 60,22; 67,45; 172,58; 174,24

| HRMS (pESI): | | |
|---|---|---|
| Berechnet: | 251,10655 | C₉H₁₉N₂O₄S (MH⁺) |
| Gefunden: | 251,10586 | |

### 9j) L-Lys-D-Met x 2 HCl (LD-Ie-2HCl)

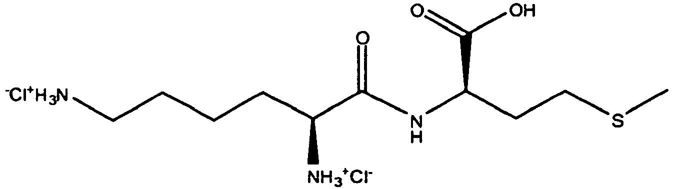

### Ausbeute: 676 mg (54%), Reinheit: 96% (HPLC), farblose Kristalle

¹H-NMR von L-Lys-D-Met x 2 HCl (**LD**-**Ie**-2HCl) (500 MHz, D₆-DMSO): δ = 1, 30-1, 44 (m, 2H, CH₂(Lys)); 1, 54-1, 64 (m, 2H, CH₂(Lys)); 1,72-1,84 (m, 1H, CH₂(Lys)); 1,90-2,04 (m, 2H, SCH₂CH₂); 2,05 (s, 3H, CH₃); 2,44-2,58 (m, 2H, SCH₂); 2,70-2,80 (m, 2H, NCH₂); 3,82-3,90 (m, 1H, CH); 4,34-4,42 (m, 1H, CH) ; 7,9 (bs, 3H, NH³⁺); 8,3 (bs, 3H, NH₃⁺); 8,91 (d, ³*J* = 7,9 Hz, 1H, NH)

| HRMS (pESI): | |
|---|---|
| Berechnet: 278,15384 | C₁₁H₂₄O₃S (MH⁺) |
| Gefunden: 278,15290 | |

### 9k) L-Phe-D-Met (LD-Ig)

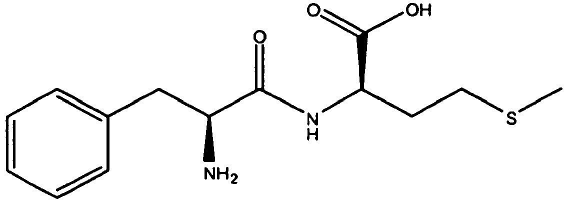

### Ausbeute: 880 mg (59%), Reinheit: 98% (HPLC), weißer voluminöser Feststoff

¹H-NMR von L-Phe-D-Met (**LD**-**Ig**) (500 MHz, D₆-DMSO+D₂O) : δ = 1,60-2,02 (m, 4H, SCH₂CH₂); 2,05 (s, 3H, SCH₃); 3,08-3,32 (m, 2H, PhC**H**₂); 4,12-4,16 (m, 1H, CH); 4,20-4,26 (m, 1H, CH); 7,30-7,50 (m, 5H, Ph)

¹³C-NMR von L-Phe-D-Met (**LD-Ig**) (500 MHz, D₆-DMSO+D₂O): δ = 15,37; 30,72; 32,10; 38,09; 55,40; 55,96; 129,24; 130,50; 130,71; 136,55; 169,47; 178,42

| HRMS (pESI): | |
|---|---|
| Berechnet: 297,12729 | C₁₄H₂₁N₂O₃S (MH⁺) |
| Gefunden: 297,12646 | |

### 91) L-Trp-D-Met (LD-Ij)

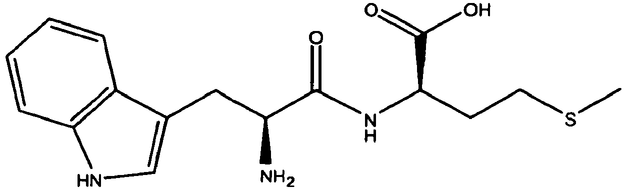

### Ausbeute: 1,40 g (83%), Reinheit: 98% (HPLC), weißer voluminöser Feststoff

¹H-NMR von L-Trp-D-Met **(LD-Ij)** (500 MHz, D₆-DMSO): δ = 1,68-1,88 (m, 2H, SCH₂C**H**₂); 1,94 (s, 3H, SCH₂); 2,24 (d, ³*J* = 7,9 Hz, 2H, SCH₂); 2,80-2,88 (m, 1H, CH); 3,10-3,16 (m, 1H, CH); 3,70-3,76 (m, 1H, CH); 4,00-4,06 (m, 1H, CH); 6,90-7,60 (m, 5H, indolyl); 8,10 (bs, 1H, NH); 10,90 (bs, 1H, NH)

¹³C-NMR von L-Trp-D-Met **(LD-Ij)** (500 MHz, D₆-DMSO): δ = 14,51; 29,56; 29,90; 32,09; 52,78; 54,59; 109,82; 111,26; 118,15; 118,30; 120,80; 123,82; 127,20; 136,16; 172,03; 173,02

| HRMS (pESI): | |
|---|---|
| Berechnet: 336,13819 | C₁₆H₂₂N₃O₃S (MH⁺) |
| Gefunden: 336,13724 | |

### Beispiel 10:

### Chemische Synthese des Diastereomerengemisches von Met-Ile (IIc) aus 5-[2-(methylthio)ethyl]-2,4-imidazolidindion (Methioninhydantoin) (Vn) und L-Isoleucin mit KOH

11,8 g (0,09 mol) L-Isoleucin, 17,2 g (0,09 mol, Reinheit: 91%) 5-[2-(methylthio)ethyl]-2,4-imidazolidindion **(Vn)** und 11,9 g (0,8 mol) 85%iges KOH wurden in 150 ml Wasser gelöst und in einem 200 ml Roth-Stahlautoklav mit Magnetrührung 5 Stunden bei 150°C gerührt, wobei der Druck auf 8 bar ansteigt. Nach Beendigung der Reaktion wurde der Autoklav abgekühlt, der ausgefallene Feststoff abfiltriert und mit etwas Wasser gewaschen. Das Filtrat wurde mit einem mäßigen CO₂-Fluß durchströmt. Der hierbei ausgefallene Feststoff wurde wiederum abgesaugt, mit wenig kaltem Wasser gewaschen und im Ölpumpenvakuum mehrere Stunden bei 30°C getrocknet, Auswaage: 7,3 g (31% d. Th.) weißer Feststoff. Das ¹H-NMR stimmte mit den überlagerten ¹H-NMR-Spektren von L-Met-L-Ile (LL-**IIc**) und D-Met-L-Ile (DL-**IIc**) (siehe **Beispiel 9b**) überein.

### Beispiel 11:

### Chemische Synthese des Diastereomerengemisches von Met-Ile (IIc) aus N-Carbamoylmethionin (IIIn) und L-Isoleucin mit KOH

11,8 g (0,09 mol) L-Isoleucin, 17,5 g (0,09 mol, Reinheit: 99%) N-Carbamoylmethionin **(IIIn)** und 11,9 g (0,18 mol) 85%iges KOH wurden in 150 ml Wasser gelöst und in einem 200 ml Roth-Stahlautoklav mit Magnetrührung 5 Stunden bei 150°C gerührt, wobei der Druck auf 7 bar ansteigt. Nach Beendigung der Reaktion wurde der Autoklav abgekühlt, der ausgefallene Feststoff abfiltriert und mit etwas Wasser gewaschen. Das Filtrat wurde mit 10%iger Schwefelsäure neutralisiert und der hierbei ausgefallene Feststoff wurde abgesaugt, mit wenig kaltem Wasser gewaschen und im Ölpumpenvakuum mehrere Stunden bei 30°C getrocknet, Auswaage: 6,4 g (27% d. Th.) weißer Feststoff. Das ¹H-NMR stimmte mit den überlagerten ¹H-NMR-Spektren von L-Met-L-Ile (LL-**IIc**) und D-Met-L-Ile (DL-**IIc**) (siehe **Beispiel 9b)** überein.

### Beispiel 12:

### Chemische Synthese des Diastereomerengemisches von Met-Ile (IIc) aus 2-[(Aminocarbonyl)amino]-4-(methylthio)butansäureamid (N-Carbamoylmethioninamid) (IVn) und L-Isoleucin mit KOH

11,8 g (0,09 mol) L-Isoleucin, 17,4 g (90 mmol, Reinheit: 98,5%) 2-[(Aminocarbonyl)amino]-4-(methylthio)butansäureamid **(IVn)** und 11,9 g (0,8 mol) 85%iges KOH wurden in 150 ml Wasser gelöst und in einem 200 ml Roth-Stahlautoklav mit Magnetrührung 5 Stunden bei 150°C gerührt, wobei der Druck auf 7 bar ansteigt. Nach Beendigung der Reaktion wurde der Autoklav abgekühlt, der ausgefallene Feststoff abfiltriert und mit etwas Wasser gewaschen. Das Filtrat wurde mit halbkonzentrierter Salzsäure neutralisiert und der hierbei ausgefallene Feststoff wurde abgesaugt, mit wenig kaltem Wasser gewaschen und im Ölpumpenvakuum mehrere Stunden bei 30°C getrocknet, Auswaage: 8,0 g (34% d. Th.) weißer Feststoff. Das ¹H-NMR stimmte mit den überlagerten ¹H-NMR-Spektren von L-Met-L-Ile (LL-**IIc**) und D-Met-L-Ile (DL-**IIc**) (siehe **Beispiel 9b)** überein.

### Beispiel 13:

### Chemische Synthese von 3-[2-(methylthio)ethyl]-6-(1-(methyl)propyl)-2,5-piperazindion (VIc) aus 5-[2-(methylthio)ethyl]-2,4-imidazolidindion (Methioninhydantoin) (Vn) und L-Isoleucin

11,8 g (0,09 mol) L-Isoleucin, 17,2 g (0,09 mol, Reinheit: 91%) 5-[2-(methylthio)ethyl]-2,4-imidazolidindion (**Vn**) und 7,1 g (0,9 mol) (NH₄)HCO₃ wurden in 150 ml Wasser gelöst und in einem 200 ml Roth-Stahlautoklav mit Magnetrührung 5 Stunden bei 150°C gerührt, wobei der Druck ansteigt. Durch Ablassen von Gas von Zeit zu Zeit wurde der Druck auf 8 bar konstant gehalten. Nach Beendigung der Reaktion wurde der Autoklav im Eisbad abgekühlt. Die erhaltene Suspension wurde anschließend filtriert, der abfiltrierte Feststoff mehrmals mit Wasser gewaschen und im Ölpumpenvakuum mehrere Stunden bei 30°C getrocknet, Auswaage: 9,9 g (45% d. Th.) **VIc** als weißer Feststoff.

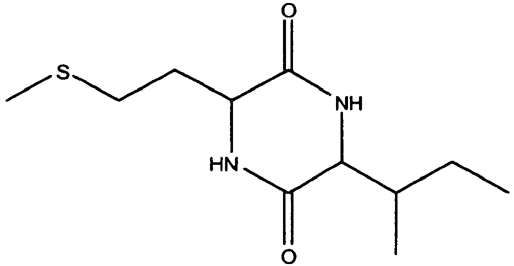

¹H-NMR von 3-[2-(methylthio)ethyl]-6-(1-(methyl)propyl)-2,5-piperazindion (**VIc**) (500 MHz, D₆-DMSO): δ = 0,85 (t, ³*J* = 7,4 Hz, 3H, CH₂C**H**₃); 0,90 (d, ³*J* = 7,4 Hz, 3H, CHC**H**₃); 1,10-1,50 (m, 2H, SCH₂C**H**₂); 1,80-1,90 (m, 1H, CH); 1,90-2,00 (m, 2H, CH₂); 2,04 (s, 3H, CH₃); 2,42-2,58 (m, 2H, SCH₂); 3,64-3,68 (m, 1H, CH); 3,94-3,98 (m, 1H, CH); 8.08-8,16 (m, 2H, 2 x NH)

¹³C-NMR von 3-[2-(methylthio)ethyl]-6-(1-(methyl)propyl)-2,5-piperazindion (**VIc**) (500 MHz, D₆-DMSO+HCl): δ = 12, 02; 14,85; 15,27; 24,61; 28,74; 32,15; 39,90; 52,92; 59,34; 167,90; 168,10

### Beispiel 14:

### Chemische Synthese von 3-[2-(methylthio)ethyl]-6-(1-methyl)propyl)-2,5-piperazindion (VIc) aus N-Carbamoylmethionin (IIIn) und L-Isoleucin

11,8 g (0,09 mol) L-Isoleucin, 17,5 g (0,09 mol, Reinheit: 99%) N-Carbamoylmethionin (**IIIn**) und 7,1 g (0,9 mol) (NH₄)HCO₃ wurden in 150 ml Wasser gelöst und in einem 200 ml Roth-Stahlautoklav mit Magnetrührung 5 Stunden bei 150°C gerührt, wobei der Druck ansteigt. Durch Ablassen von Gas von Zeit zu Zeit wurde der Druck auf 8 bar konstant gehalten. Nach Beendigung der Reaktion wurde der Autoklav im Eisbad abgekühlt. Die erhaltene Suspension wurde anschließend filtriert, der abfiltrierte Feststoff mehrmals mit Wasser gewaschen und im Ölpumpenvakuum mehrere Stunden bei 30°C getrocknet, Auswaage: 9,1 g (41,3% d. Th.) von Verbindung **VIc** als weißer Feststoff. Das NMR stimmte mit dem NMR aus dem **Beispiel 13** überein.

### Beispiel 15:

### Chemische Synthese von 3-[2-(methylthio)ethyl]-6-(1-methyl)propyl)-2,5-piperazindion (VIc) aus 2-[(Aminocarbonyl)amino]-4-(methylthio)butansäureamid (N-Carbamoylmethioninamid) (IVn) und L-Isoleucin

11,8 g (0,09 mol) L-Isoleucin, 17,4 g (90 mmol, Reinheit: 98,5%) 2-[(Aminocarbonyl)amino]-4-(methylthio)butansäureamid (**IVn**) und 7,1 g (0,9 mol) (NH₄)HCO₃ wurden in 150 ml Wasser gelöst und in einem 200 ml Roth-Stahlautoklav mit Magnetrührung 5 Stunden bei 150°C gerührt, wobei der Druck ansteigt. Durch Ablassen von Gas von Zeit zu Zeit wurde der Druck auf 8 bar konstant gehalten. Nach Beendigung der Reaktion wurde der Autoklav im Eisbad abgekühlt. Die erhaltene Suspension wurde anschließend filtriert, der abfiltrierte Feststoff mehrmals mit Wasser gewaschen und im Ölpumpenvakuum mehrere Stunden bei 30°C getrocknet, Auswaage: 10,3 g (47% d. Th.) weißer Feststoff **IVc.** Das NMR stimmte mit dem NMR aus dem **Beispiel 13** überein.

### Beispiel 16:

### Synthese des Diastereomerengemisches von Ile-Met (Ic) Met-Ile (IIc) aus 3-[2-(methylthio)ethyl]-6-(1-methyl)propyl)-2,5-piperazindion (VIc) mit konzentrierter Salzsäure

24,4 g (100 mmol) 3-[2-(methylthio)ethyl]-6-(1-methyl)propyl)-2,5-piperazindion (**VIc**) wurden mit 66 g Wasser suspendiert. Unter Rühren wurden 11 g konz. Salzsäure langsam zugetropft und anschließend vorsichtig unter sehr starkem Rühren bis zum Rückfluss erhitzt. Die Reaktionsmischung wurde 8 Stunden lang am Rückfluss erhitzt, wodurch der gesamte Feststoff in Lösung ging. Während dem anschließenden Abkühlen fiele eine kleine Menge nichtumgesetztes Diketopiperazin aus, welches abfiltriert wurde. Das Filtrat wurde anschließend in einem Becherglas mit Eisbad mit 32%igem Ammoniakwasser auf pH 5-6 eingestellt. Dabei fällt ein Gemisch von DL-Met-DL-Ile (Diastereomerengemisch von **IIc**) und DL-Ile-DL-Met (Diastereomerengemisch von **Ic**) als weißer voluminöser Feststoff aus. Der Feststoff wurde im Trockenschrank bei 40°C im Wasserstrahlpumpenvakuum getrocknet, Ausbeute: 21,5 g (82,0%).

### Beispiel 17:

### Synthese des Diastereomerengemisches von Ile-Met (Ic) und Met-Ile (IIc) aus 3-[2-(methylthio)ethyl]-6-(1-methyl)propyl)-2,5-piperazindion (VIc) alkalischen Bedingungen mit Ammoniak

19,6 g (0,8 Mol) 3-[2-(methylthio)ethyl]-6-(1-methyl)propyl)-2,5-piperazindion (**VIc**), 22,4 ml 25%ige Ammoniaklösung und 160 ml Wasser werden 2 Stunden in einem Autoklaven auf 150°C erhitzt. Nach Abkühlen wird das nicht umgesetzte Diketopiperazin abgesaugt. Dieses kann in einem nächsten Ansatz wieder eingesetzt werden. Das Filtrat wurde im Rotationsverdampfer bei einer Wassertemperatur von 80°C soweit eingeengt, bis die ersten Kristalle ausfielen. Nach Abkühlen und Stehenlassen über Nacht konnten nach Filtration und Trocknung ein Gemisch von DL-Met-DL-Ile (Diastereomerengemisch von **IIc**) und DL-Ile-DL-Met (Diastereomerengemisch von **Ic**) als weißer voluminöser Feststoff isoliert werden, Ausbeute: 12,2 g (58%).

### Beispiel 18:

### In vitro Verdauungsversuche von L-EAA-L-Met (LL-I) bzw. L-Met-L-EAA (LL-II) mit Verdauungsenzymen aus omnivoren Karpfen

### a) Isolierung der Verdauungsenzyme aus Spiegelkarpfen (Cyprinus carpio morpha noblis)

Die Isolierung der Verdauungsenzyme wurde in Anlehnung an die Methode von EID und MATTY (Aquaculture 1989, 79, 111-119) durchgeführt. Dazu wurde der Darm von fünf einjährigen Spiegelkarpfen *(Cyprinus carpio morpha noblis)* freigelegt, mit Wasser gespült, längs aufgeschnitten und jeweils die Darmschleimhaut abgekratzt. Diese wurde zusammen mit zerstoßenem Eis mit einem Mixgerät zerkleinert. Die resultierende Suspension wurde mit einem Ultraschallstab behandelt, um noch intakte Zellen aufzuschließen. Zur Abtrennung der Zellbestandteile und Fett wurde die Suspension 30 Minuten lang bei 4°C zentrifugiert, das Homogenat abdekantiert und mit einer Spur Thimerosal sterilisiert. Aus 5 Spiegelkarpfen wurden 296,3 ml Enzymlösung der Darmschleimhaut gewonnen. Die Lösung wurde bei 4°C dunkel gelagert.

### b) Durchführung der in vitro Verdauungsuntersuchungen

L-Met-L-EAA (LL-**II**) bzw. L-EAA-L-Met (LL-**I**) wurde in TRIS/HCl-Pufferlösung aufgenommen und mit der Enzymlösung versetzt. Als Vergleich und zur Abschätzung der rein chemischen Spaltungsgeschwindigkeit wurde jeweils ein Blindwert ohne Enzymlösung angesetzt (siehe **Tabelle 3**). Von Zeit zu Zeit wurde eine Probe entnommen und deren Zusammensetzung mit Hilfe eines kalibrierten HPLCs detektiert und quantifiziert. Der Umsatz wurde als Quotient des Gehaltes von Methionin und der Gehaltes von L-Met-L-EAA (LL-II) bzw. L-EAA-L-Met (LL-**I**) bestimmt (siehe **Abb. 1** und **2**).

**Tabelle 3**

| | | **Probe** | **Blindwert** |
|---|---|---|---|
| Vorlage | Substrat (LL-**I** bzw. LL-**II**) | 0,15 mmol | 0, 15 mmol |
| | TRIS/HCl-Pufferlösung, pH 9,5 | 7, 5 ml | 8,1 ml |
| Reaktionsstart | Enzymlösung (=̂ 1,5% Karpfenlsg.) | 589 µl | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 19:

### In vitro Verdauungsversuche von L-EAA-D-Met (LD-I) bzw. D-Met-L-EAA (DL-II) mit Verdauungsenzymen aus omnivoren Karpfen

### a) Isolierung der Verdauungsenzyme aus Spiegelkarpfen (Cyprinus carpio morpha noblis)

Die Isolierung der Verdauungsenzyme wurde in Anlehnung an die Methode von EID und MATTY (Aquaculture 1989, 79, 111-119) durchgeführt. Dazu wurde der Darm von fünf einjährigen Spiegelkarpfen (*Cyprinus carpio morpha noblis)* freigelegt und wie im **Beispiel 18** beschrieben aufgearbeitet.

### b) Durchführung der in vitro Verdauungsuntersuchungen

D-Met-L-EAA (DL-**II**) bzw. L-EAA-D-Met (LD-**I**) wurde in TRIS/HCl-Pufferlösung aufgenommen und mit der Enzymlösung versetzt. Als Vergleich und zur Abschätzung der rein chemischen Spaltungsgeschwindigkeit wurde jeweils ein Blindwert ohne Enzymlösung angesetzt (siehe **Tabelle 4).** Von Zeit zu Zeit wurde eine Probe entnommen und deren Zusammensetzung mit Hilfe eines kalibrierten HPLCs detektiert und quantifiziert. Der Umsatz wurde als Quotient der Fläche von Methionin und der Fläche von D-Met-L-EAA (DL-**II**) bzw. L-EAA-D-Met (LD-**I**) bestimmt (siehe **Abb. 7****).**

**Tabelle 4**

| | | **Probe** | **Blindwert** |
|---|---|---|---|
| Vorlage | Substrat (LD-**I** bzw.DL-**II**) | 0,15 mmol | 0,15 mmol |
| | TRIS/HCl-Pufferlösung, pH 9,5 | 7,5 ml | 13,4 ml |
| Reaktionsstart | Enzymlösung (=̂ 15% Karpfenlsg.) | 5,89 ml | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 20:

### In vitro Verdauungsversuche von L-EAA-L-Met (LL-I) bzw. L-Met-L-EAA (LL-II) mit Verdauungsenzymen aus karnivoren Forellen

### a) Isolierung der Verdauungsenzyme aus Regenbogenforellen (Oncorhynchus mykiss)

Die Isolierung der Verdauungsenzyme wurde in Anlehnung an die Methode von EID und MATTY (Aquaculture 1989, 79, 111-119) durchgeführt. Dazu wurde der Darm von sechs einjährigen Regenbogenforellen (*Oncorhynchus mykiss*) freigelegt und wie in **Beispiel 18** beschrieben aufgearbeitet.

### b) Durchführung der in vitro Verdauungsuntersuchungen

Die *in vitro* Untersuchungen wurden analog zu **Beispiel 18** durchgeführt (siehe **Tabelle 5,** **Abb. 3** und **4**).

**Tabelle 5**

| | | **Probe** | **Blindwert** |
|---|---|---|---|
| Vorlage | Substrat (LL-**I** bzw. LL-**II**) | 0,15 mmol | 0, 15 mmol |
| | TRIS/HCl-Pufferlösung, pH 9,5 | 7,5 ml | 7,9 ml |
| Reaktionsstart | Enzymlösung (=̂ 1,0% Forellelsg.) | 424 µl | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 21:

### In vitro Verdauungsversuche von L-EAA-D-Met (LD-I) bzw. D-Met-L-EAA (DL-II) mit Verdauungsenzymen aus karnivoren Forellen

### a) Isolierung der Verdauungsenzyme aus Regenbogenforellen (Oncorhynchus mykiss)

Die Isolierung der Verdauungsenzyme wurde in Anlehnung an die Methode von EID und MATTY (Aquaculture 1989, 79, 111-119) durchgeführt. Dazu wurde der Darm von sechs einjährigen Regenbogenforellen *(Oncorhynchus mykiss*) freigelegt und wie in **Beispiel 18** beschrieben aufgearbeitet.

### b) Durchführung der in vitro Verdauungsuntersuchungen

Die *in vitro* Untersuchungen wurden analog zu **Beispiel 19** durchgeführt (siehe **Tabelle 6,** **Abb. 11****).**

**Tabelle 6**

| | | **Probe** | **Blindwert** |
|---|---|---|---|
| Vorlage | Substrat (LD-**I** bzw. DL-**II**) | 0,143 mmol (40,1 mg) | 0,143 mmol (40,1 mg) |
| | TRIS/HCl-Pufferlösung, pH 9,5 | 5, 7 ml | 9,9 ml |
| Reaktionsstart | Enzymlösung (=̂ 10% Forellelsg.) | 4,2 ml | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 22:

### In vitro Verdauungsversuche von L-EAA-L-Met (LL-I) bzw. L-Met-L-EAA (LL-II) mit Verdauungsenzymen aus omnivoren Shrimps

### a) Isolierung der Verdauungsenzyme aus Whiteleg Shrimps (Litopenaeus Vannamei)

Die Isolierung der Verdauungsenzyme wurde in Anlehnung an die Methode von Ezquerra und Garcia-Carreno (J. Food Biochem. 1999, 23, 59-74) durchgeführt. Dazu wurde das Hepatopankreas aus fünf Kilogramm Whiteleg Shrimps (*Litopenaeus Vannamei*) entfernt und zusammen mit zerstoßenem Eis mit einem Mixer zerkleinert. Die weitere Aufarbeitung wurde analog **Beispiel 18** durchgeführt.

### b) Durchführung der in vitro Verdauungsuntersuchungen

Die *in vitro* Untersuchungen wurden analog zu **Beispiel 18** durchgeführt (siehe **Tabelle 7,** **Abb. 5** und **6**).

**Tabelle 7**

| | | **Probe** | **Blindwert** |
|---|---|---|---|
| Vorlage | Substrat (LL-**I** bzw. LL-**II**) | 0,15 mmol | 0,15 mmol |
| | TRIS/HCl-Pufferlösung, pH 9,5 | 7,5 ml | 7,8 ml |
| Reaktionsstart | Enzymlösung (=̂ 2 Shrimps) | 258 µl | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 23:

### In vitro Verdauungsversuche von L-EAA-D-Met (LD-I) bzw. D-Met-L-EAA (DL-II) mit Verdauungsenzymen aus omnivoren Shrimps

### a) Isolierung der Verdauungsenzyme aus Whiteleg Shrimps (Litopenaeus Vannamei)

Die Isolierung der Verdauungsenzyme wurde in Anlehnung an die Methode von Ezquerra und Garcia-Carreno (J. Food Biochem. 1999, 23, 59-74) durchgeführt. Dazu wurde das Hepatopankreas aus fünf Kilogramm Whiteleg Shrimps (*Litopenaeus Vannamei*) entfernt und zusammen mit zerstoßenem Eis mit einem Mixer zerkleinert. Die weitere Aufarbeitung wurde analog **Beispiel 18** durchgeführt.

### b) Durchführung der in vitro Verdauungsuntersuchungen

Die *in vitro* Untersuchungen wurden analog zu **Beispiel 19** durchgeführt (siehe **Tabelle 8,** **Abb. 10****).**

**Tabelle 8**

| | | **Probe** | **Blindwert** |
|---|---|---|---|
| Vorlage | Substrat (LD-**I** bzw. DL-**II**) | 0,143 mmol (40,1 mg) | 0,143 mmol (40,1 mg) |
| | TRIS/HCl-Pufferlösung, pH 9,5 | 5,7 ml | 7,9 ml |
| Reaktionsstart | Enzymlösung (=̂ 8 Shrimps) | 2,2 ml | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 24:

### In vitro Verdauungsversuche von L-EAA-L-Met (LL-I) bzw. L-Met-L-EAA (LL-II) mit Verdauungsenzymen aus Hühnern

### a) Isolierung der Verdauungsenzyme aus Hühnern

Die Isolierung der Verdauungsenzyme wurde in Anlehnung an die Methode von EID und MATTY (Aquaculture 1989, 79, 111-119) durchgeführt. Dazu wurde der Darm eines Huhnes freigelegt, mit Wasser gespült, längs aufgeschnitten und jeweils die Darmschleimhaut abgekratzt. Diese wurde zusammen mit zerstoßenem Eis mit einem Mixgerät zerkleinert. Die resultierende Suspension wurde mit einem Ultraschallstab behandelt, um noch intakte Zellen aufzuschließen. Zur Abtrennung der Zellbestandteile und Fett wurde die Suspension 30 Minuten lang bei 4°C zentrifugiert, das Homogenat abdekantiert und mit einer Spur Thimerosal sterilisiert. Aus einem Huhn wurden 118,9 ml Enzymlösung der Darmschleimhaut gewonnen, die Lösung wurde bei 4°C dunkel gelagert.

### b) Durchführung der in vitro Verdauungsuntersuchungen

L-Met-L-EAA (LL-**II**) bzw. L-EAA-L-Met (LL-**I**) wurde in TRIS/HCl-Pufferlösung aufgenommen und mit der Enzymlösung versetzt. Als Vergleich und zur Abschätzung der rein chemischen Spaltungsgeschwindigkeit wurde jeweils ein Blindwert ohne Enzymlösung angesetzt. Von Zeit zu Zeit wurde eine Probe entnommen und deren Zusammensetzung mit Hilfe eines kalibrierten HPLCs detektiert und quantifiziert. Der Umsatz wurde als Quotient des Gehaltes von Methionin und des Gehaltes von L-Met-L-EAA (LL-**II**) bzw. L-EAA-L-Met (LL-**I**) bestimmt (siehe **Tabelle 9,** **Abb. 16****).**

**Tabelle 9**

| | | **Probe** | **Blindwert** |
|---|---|---|---|
| Vorlage | Substrat (LL-**I** bzw. LL-**II**) | 0,15 mmol | 0,15 mmol |
| | TRIS/HCl-Pufferlösung, pH 9,5 | 11,3 ml | 12, 5 ml |
| Reaktionsstart | Enzymlösung (=̂ 1,0% Huhnlsg.) | 1,19 ml | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

### Beispiel 25:

### In vitro Verdauungsversuche von L-EAA-D-Met (LD-I) bzw. D-Met-L-EAA (DL-II) mit Verdauungsenzymen aus Hühnern

### a) Isolierung der Verdauungsenzyme aus Hühnern

Die Isolierung der Verdauungsenzyme wurde in Anlehnung an die Methode von EID und MATTY (Aquaculture 1989, 79, 111-119) durchgeführt. Dazu wurde der Darm eines Huhnes freigelegt und wie im **Beispiel 24** beschrieben aufgearbeitet.

### b) Durchführung der in vitro Verdauungsuntersuchungen

D-Met-L-EAA (DL-**II**) bzw. L-EAA-D-Met (LD-**I**) wurde in TRIS/HCl-Pufferlösung aufgenommen und mit der Enzymlösung versetzt. Als Vergleich und zur Abschätzung der rein chemischen Spaltungsgeschwindigkeit wurde jeweils ein Blindwert ohne Enzymlösung angesetzt. Von Zeit zu Zeit wurde eine Probe entnommen und deren Zusammensetzung mit Hilfe eines kalibrierten HPLCs detektiert und quantifiziert. Der Umsatz wurde als Quotient der Fläche von Methionin und der Fläche von D-Met-L-EAA (DL-**II**) bzw. L-EAA-D-Met (LD-**I**) bestimmt (siehe **Tabelle 10,** **Abb. 17****).**

**Tabelle 10**

| | | **Probe** | **Blindwert** |
|---|---|---|---|
| Vorlage | Substrat (LD-**I** bzw. DL-**II**) | 0,15 mmol | 0,15 mmol |
| | TRIS/HCl-Pufferlösung, pH 9,5 | 11,3 ml | 12,5 ml |
| Reaktionsstart | Enzymlösung (=̂ 1% Huhnlsg.) | 1,19 ml | --- |
| Reaktion | | 37 °C | 37 °C |
| Reaktionsabbr. | 0,2 ml Reaktionslösung wurde in 9,8 ml 10%iger H₃PO₄-Lösung aufgenommen. | | |

## Patentansprüche

1. Futtermitteladditiv enthaltend Dipeptide oder deren Salze, wobei ein Aminosäurerest des Dipeptides ein DL-Methionylrest ist und der andere Aminosäurerest des Dipeptides eine Aminosäure in der L-Konfiguration ausgewählt aus der Gruppe Lysin, Threonin, Tryptophan, Histidin, Valin, Leucin, Isoleucin, Phenylalanin, Arginin, Cystein und Cystin ist.

2. Futtermitteladditiv nach Anspruch 1 enthaltend Dipeptide der allgemeinen Formel DL-Methionyl-L-EAA und/oder L-EAA-DL-Methionin, wobei L-EAA eine Aminosäure in der L-Konfiguration ausgewählt aus der Gruppe Lysin, Threonin, Tryptophan, Histidin, Valin, Leucin, Isoleucin, Phenylalanin, Arginin, Cystein und Cystin ist.

3. Futtermittelmischung enthaltend ein Futtermitteladditiv gemäß Anspruch 1 oder 2.

4. Futtermittelmischung nach Anspruch 3, enthaltend DL-Methionyl-L-EAA und/oder L-EAA-DL-Methionin allein als D-Methionyl-L-EAA, L-Methionyl-L-EAA, L-EAA-D-Methionin oder L-EAA-L-Methionin, als Mischung untereinander bzw. auch als Mischung mit D-Methionyl-D-EAA, L-Methionyl-D-EAA, D-EAA-D-Methionin oder D-EAA-L-Methionin, bevorzugt jeweils zusätzlich in Mischung mit DL-Methionin, vorzugsweise mit einem DL-Methioninanteil von 0,01 bis 90 Gew.-%, bevorzugt von 0,1 bis 50 Gew.-%, besonders bevorzugt von 1 bis 30 Gew.-%, bevorzugt jeweils zusätzlich in Mischung mit eine L-EAA wie beispielsweise L-Lysin, vorzugsweise mit einem L-EAA Anteil von 0,01 bis 90 Gew.-%, bevorzugt von 0,1 bis 50 Gew.-%, besonders bevorzugt von 1 bis 30 Gew.-%.

5. Dipeptid oder ein Salz davon der allgemeinen Formel DL-Methionyl-DL-EAA oder DL-EAA-DL-Methionin, wobei EAA eine Aminosäure, vorzugsweise in der L-Konfiguration ausgewählt aus der Gruppe Lysin, Threonin, Tryptophan, Histidin, Valin, Leucin, Isoleucin, Phenylalanin, Arginin, Cystein und Cystin ist.

6. Ein Verfahren zur Herstellung eines Dipeptides enthaltend lediglich einen Methionylrest gemäß der Formel DD/LL/DL/LD-**I** oder DD/LL/DL/LD-**II**: 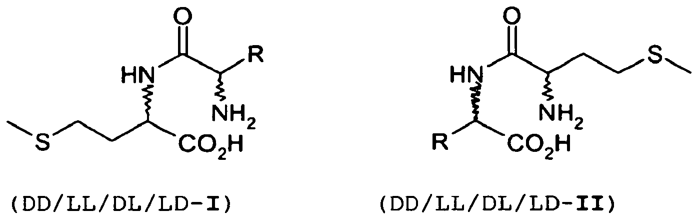 unter Umsetzung einer Aminosäure mit einem Harnstoffderivat der allgemeinen Formel **III** bis **V,** 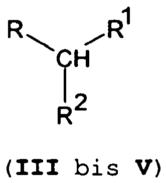 wobei R wie folgt definiert ist:
| | | |
|---|---|---|
| **Ia** bis **Va:** | R = 1-Methylethyl- | (Valin) |
| **Ib** bis **Vb:** | R = 2-Methylpropyl- | (Leucin) |
| **Ic** bis **Vc:** | R = (1*S*)-1-Methylpropyl- | (Isoleucin) |
| **Id** bis **Vd:** | R = (1*R*)-1-Hydroxyethyl- | (Threonin) |
| **Ie** bis **Ve:** | R = 4-Aminobutyl- | (Lysin) |
| **If** bis **Vf:** | R = 3-[(Aminoiminomethyl)-amino]propyl- | (Arginin) |
| **Ig** bis **Vg:** | R = Benzyl- | (Phenylalanin) |
| **Ih** bis **Vh:** | R = (1*H*-Imidazol-4-yl)methyl- | (Histidin) |
| **Ij** bis **Vj:** | R = (1*H*-Indol-3-yl)methyl- | (Tryptophan) |
| **Ik** bis **Vk:** | R = -CH₂-SH | (Cystein) |
| **Im** bis **Vm:** | R = -CH₂-S-S-CH₂-C(H)NH₂-COOH | (Cystin) |
| **IIIn** bis **Vn:** | R = -CH₂-CH₂-S-CH₃ | (Methionin) |
wobei die Reste R¹ und R² in den Harnstoffderivaten **III, IV** und **V** wie folgt definiert sind:
wobei
**IIIa-n: R¹** = COOH, **R² =** NHCONH₂
**IVa-n**: **R¹** = CONH₂, **R²** = NHCONH₂
**Va-n: R¹-R²** = -CONHCONH-
und
wobei R entweder ein Methionylrest bedeutet und die zugegebene Aminosäure ausgewählt ist aus der Gruppe Lysin, Threonin, Tryptophan, Histidin, Valin, Leucin, Isoleucin, Phenylalanin, Arginin, Cystein und Cystin
oder
die zugegebene Aminosäure Methionin ist und R ein Aminosäurerest ist ausgewählt aus der Gruppe Lysin, Threonin, Tryptophan, Histidin, Valin, Leucin, Isoleucin, Phenylalanin, Arginin, Cystein und Cystin.

7. Das Verfahren nach Anspruch 6, wobei Methioninhydantoin oder das Hydantoin einer Aminosäure ausgewählt aus der Gruppe Lysin, Threonin, Tryptophan, Histidin, Valin, Leucin, Isoleucin, Phenylalanin, Arginin, Cystein, Cystin als Ausgangsprodukt verwendet wird oder als Zwischenprodukt intermediär gebildet wird.

8. Das Verfahren nach Anspruch 6 oder 7, wobei eine Methioninhydantoin und Wasser enthaltende Lösung mit der Aminosäure unter basischen Bedingungen umgesetzt wird, oder eine das Hydantoin der Aminosäure ausgewählt aus der Gruppe Lysin, Threonin, Tryptophan, Histidin, Valin, Leucin, Isoleucin, Phenylalanin, Arginin, Cystein, Cystin und Wasser enthaltende Lösung mit Methionin unter basischen Bedingungen umgesetzt wird.

9. Das Verfahren nach einem der Ansprüche 6 bis 8, wobei der pH-Wert der das Harnstoffderivat enthaltenden Lösung auf 7 bis 14 eingestellt wird und/oder die Umsetzung bei einer Temperatur von 30 bis 200°C durchgeführt wird und/oder die Umsetzung bei einem Druck von 2 bis 100 bar, durchgeführt wird.

10. Das Verfahren nach irgend einem der Ansprüche 6 bis 9, wobei die Methioninhydantoin und Wasser enthaltende Lösung oder die das Hydantoin der Aminosäure ausgewählt aus der Gruppe Lysin, Threonin, Tryptophan, Histidin, Valin, Leucin, Isoleucin, Phenylalanin, Arginin, Cystein, Cystin und Wasser enthaltende Lösung zuvor aus einer oder mehrerer der Verbindungen **III, IV** und **V** gebildet worden ist.

11. Das Verfahren nach Anspruch 6, umfassend die folgenden Schritte:
a) Umsetzung des Harnstoffderivates gemäß den Formeln **III, IV** oder **V** mit der Aminosäure zu einem Diketopiperazin **VI** der Formel, 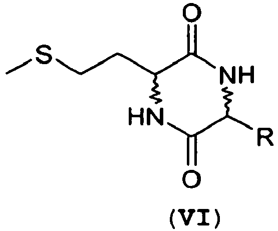 wobei R wie in Anspruch 6 definiert ist.
b) Umsetzung des Diketopiperazins **VI** zu einem Gemisch aus Dipeptiden mit den Formeln DD/LL/DL/LD-**I** und DD/LL/DL/LD-**II**: 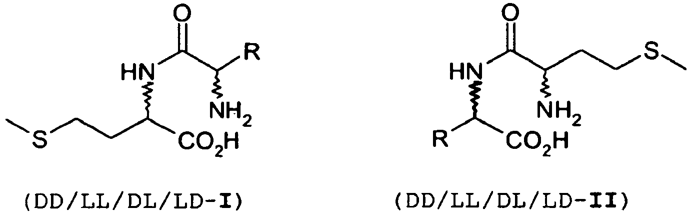 wobei R wie in Anspruch 6 definiert ist.

12. Das Verfahren nach Anspruch 11, wobei die Umsetzung des Harnstoffderivates mit der Aminosäure zum Diketopiperazin bei einer Temperatur von 20°C bis 200°C und/oder unter Druck erfolgt, bevorzugt bei einem Druck von 2 bis 90 bar.

13. Das Verfahren nach irgendeinem der Ansprüche 11 bis 12, wobei die Umsetzung des Harnstoffderivates mit der Aminosäure zum Diketopiperazin in Gegenwart einer Base erfolgt, bevorzugt einer Base ausgewählt aus der Gruppe Stickstoff-haltiger Basen, NH₄HCO₃, (NH₄)₂CO₃, KHCO₃, K₂CO₃, NH₄OH/CO₂-Mischung, Carbamatsalze, Alkali- und Erdalkalibasen.

14. Das Verfahren nach irgendeinem der Ansprüche 11 bis 13, wobei die Umsetzung zum Diketopiperazin entweder durch Reaktion des Harnstoffderivates der Formel, 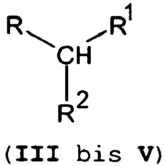 wobei R ein Methionylrest bedeutet, mit einer Aminosäure, ausgewählt aus der Gruppe Lysin, Threonin, Tryptophan, Histidin, Valin, Leucin, Isoleucin, Phenylalanin, Arginin, Cystein oder Cystin, erfolgt,
oder
durch Reaktion des Harnstoffderivates der Formel, 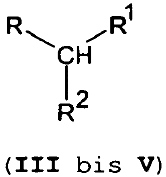 wobei R ein Aminosäurerest ist ausgewählt aus der Gruppe Lysin, Threonin, Tryptophan, Histidin, Valin, Leucin, Isoleucin, Phenylalanin, Arginin, Cystein oder Cystin, mit der Aminosäure Methionin erfolgt.

15. Das Verfahren nach irgendeinem der Ansprüche 11 bis 14, wobei die Umsetzung des Diketopiperazin zu einem Gemisch aus Dipeptiden der Formel **I** und **II** durch saure Hydrolyse erfolgt, bevorzugt in Gegenwart einer Säure ausgewählt aus der Gruppe der Mineralsäuren, HCl, H₂CO₃, CO₂/H₂O, H₂SO₄, Phosphorsäuren, Carbonsäuren und Hydroxycarbonsäuren.

16. Das Verfahren nach irgendeinem der Ansprüche 11 bis 14, wobei die Umsetzung des Diketopiperazin zu einem Gemisch aus Dipeptiden der Formel **I** und **II** durch basische Hydrolyse erfolgt, bevorzugt bei einem pH von 7 bis 14, vorzugsweise unter Verwendung einer Base aus der Gruppe Stickstoff-haltiger Basen, NH₄HCO₃, (NH₄)₂CO₃, NH₄OH/CO₂-Mischung, Carbamatsalze, KHCO₃, K₂CO₃, Carbonate, Alkali- und Erdalkalibasen durchgeführt wird.

17. Das Verfahren nach irgendeinem der Ansprüche 6 bis 16, wobei das Harnstoffderivat **III** bis **V** in der D-, in der L-Konfiguration oder in einer Mischung aus D- und L-Konfiguration vorliegt, bevorzugt in einer Mischung aus D- und L-Konfiguration, wenn das Harnstoffderivat von Methionin (**IIIn** bis **Vn**)abgeleitet ist, oder
wobei das Harnstoffderivat **III** bis **V** in der D-, in der L-Konfiguration oder in einer Mischung aus D- und L-Konfiguration vorliegt, bevorzugt in der L-Konfiguration, wenn das Harnstoffderivat **III** bis **V** von einer Aminosäure abgeleitet ist ausgewählt aus der Gruppe Lysin, Threonin, Tryptophan, Histidin, Valin, Leucin, Isoleucin, Phenylalanin, Arginin, Cystein, Cystin.

18. Ein Verfahren zur Isolation des Diastereomerengemisches der Dipeptide der Formel **I** und **II** durch Kristallisation aus basischen Reaktionslösungen, die nach Anspruch 16 erhalten wurden vorzugsweise dadurch, dass die Lösung mit einer Säure auf einen pH-Wert von 2 bis 10, besonders bevorzugt auf einen pH-Wert von 3 bis 9, ganz besonders bevorzugt auf den entsprechenden isoelektrischen Punkt des jeweiligen Dipeptids der Formel **I** bzw. **II** eingestellt wird, und die pH-Einstellung bevorzugt mit einer Säure erfolgt, ausgewählt aus der Gruppe der Mineralsäuren, HCl, H₂CO₃, CO₂/H₂O, H₂SO₄, Phosphorsäuren, Carbonsäuren und Hydroxycarbonsäuren.

19. Ein Verfahren zur Isolation des Diastereomerengemisches der Dipeptide der Formel **I** und **II** durch Kristallisation aus sauren Reaktionslösungen, die nach Anspruch 15 erhalten wurden, vorzugsweise dadurch, dass die Lösung durch Zugabe einer Base auf einen pH-Wert von 2 bis 10, besonders bevorzugt auf einen pH-Wert von 3 bis 9, ganz besonders bevorzugt auf den entsprechenden isoelektrischen Punkt des jeweiligen Dipeptids der Formel **I** bzw. **II** eingestellt wird, wobei die Base bevorzugt ausgewählt ist aus der Gruppe NH₄HCO₃, (NH₄)₂CO₃, Stickstoff-haltige Basen, NH₄OH, Carbamatsalze, KHCO₃, K₂CO₃, Carbonate, Alkali-und Erdalkalibasen.

20. Verwendung der Verbindungen **I** und **II** gemäß Anspruch 6 als Futtermitteladditiv für Nutztiere, bevorzugt für Geflügel, Schweine, Wiederkäuer, Süß- oder Salzwasserfische, Krustentiere oder Haustiere.

## Claims

1. Feed additive containing dipeptides or salts thereof, **characterized in that** one amino acid residue of the dipeptide is a DL-methionyl residue and the other amino acid residue of the dipeptide is an amino acid in the L-configuration selected from the group comprising lysine, threonine, tryptophan, histidine, valine, leucine, isoleucine, phenylalanine, arginine, cysteine and cystine.

2. Feed additive according to Claim 1 containing dipeptides of general formula DL-methionyl-L-EAA and/or L-EAA-DL-methionine, **characterized in that** L-EAA is an amino acid in the L-configuration selected from the group comprising lysine, threonine, tryptophan, histidine, valine, leucine, isoleucine, phenylalanine, arginine, cysteine and cystine.

3. Feed mixture containing a feed additive according to Claim 1 or 2.

4. Feed mixture according to Claim 3, containing DL-methionyl-L-EAA and/or L-EAA-DL-methionine alone as D-methionyl-L-EAA, L-methionyl-L-EAA, L-EAA-D-methionine or L-EAA-L-methionine, as a mixture with one another or also as a mixture with D-methionyl-D-EAA, L-methionyl-D-EAA, D-EAA-D-methionine or D-EAA-L-methionine, preferably in each case additionally mixed with DL-methionine, preferably with a proportion of DL-methionine from 0.01 to 90 wt.%, preferably from 0.1 to 50 wt.%, especially preferably from 1 to 30 wt.%, preferably in each case additionally mixed with an L-EAA such as for example L-lysine, preferably with a proportion of L-EAA from 0.01 to 90 wt.%, preferably from 0.1 to 50 wt.%, especially preferably from 1 to 30 wt.%.

5. Dipeptide or a salt thereof of general formula DL-methionyl-DL-EAA or DL-EAA-DL-methionine, **characterized in that** EAA is an amino acid, preferably in the L-configuration selected from the group comprising lysine, threonine, tryptophan, histidine, valine, leucine, isoleucine, phenylalanine, arginine, cysteine and cystine.

6. Method of production of a dipeptide containing only one methionyl residue according to the formula DD/LL/DL/LD-**I** or DD/LL/DL/LD-**II**: 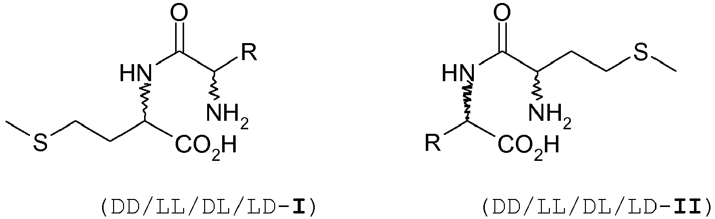 by reacting an amino acid with a urea derivative of general formula **III** to **V,** 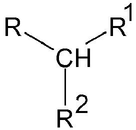 (**III** to **V**)
where R is defined as follows:
| | | |
|---|---|---|
| **Ia** to **Va:** | R = 1-methylethyl- | (valine) |
| **Ib** to **Vb:** | R = 2-methylpropyl- | (leucine) |
| **Ic** to **Vc:** | R = (1*S*)-1-methylpropyl- | (isoleucine) |
| **Id** to **Vd:** | R = (1*R*)-1-hydroxyethyl- | (threonine) |
| **Ie** to **Ve:** | R = 4-aminobutyl- | (lysine) |
| **If** to **Vf:** | R = 3-[(aminoiminomethyl)-amino]propyl- | (arginine) |
| **Ig** to **Vg:** | R = benzyl-(phenylalanine) | |
| **Ih** to **Vh:** | R = (1*H*-imidazol-4-yl)methyl- | (histidine) |
| **Ij** to **Vj:** | R = (1*H*-indol-3-yl)methyl-(try | yptophan) |
| **Ik** to **Vk:** | R = -CH₂-SH | (cysteine) |
| **Im** to **Vm:** | R = -CH₂-S-S-CH₂-C(H)NH₂-COOH | (cystine) |
| **IIIn** to **Vn:** | R = -CH₂-CH₂-S-CH₃ | (methionine) |
with the residues R¹ and R² in the urea derivatives **III, IV** and **V** being defined as follows:
where
**IIIa-n: R¹** = COOH, **R²** = NHCONH₂
**IVa-n: R¹** = CONH₂, **R²** = NHCONH₂
**Va-n: R¹**-**R²** = -CONHCONH-
and
where R either denotes a methionyl residue and the added amino acid is selected from the group comprising lysine, threonine, tryptophan, histidine, valine, leucine, isoleucine, phenylalanine, arginine, cysteine and cystine
or
the added amino acid is methionine and R is an amino acid residue selected from the group comprising lysine, threonine, tryptophan, histidine, valine, leucine, isoleucine, phenylalanine, arginine, cysteine and cystine.

7. Method according to Claim 6, **characterized in that** methionine hydantoin or the hydantoin of an amino acid selected from the group comprising lysine, threonine, tryptophan, histidine, valine, leucine, isoleucine, phenylalanine, arginine, cysteine, cystine is used as starting product or is formed as an intermediate.

8. Method according to Claim 6 or 7, **characterized in that** a solution containing methionine hydantoin and water is reacted with the amino acid under basic conditions, or a solution containing the hydantoin of the amino acid selected from the group comprising lysine, threonine, tryptophan, histidine, valine, leucine, isoleucine, phenylalanine, arginine, cysteine, cystine and water is reacted with methionine under basic conditions.

9. Method according to one of Claims 6 to 8, **characterized in that** the pH value of the solution containing the urea derivative is adjusted to 7 to 14 and/or the reaction is carried out at a temperature of 30 to 200°C and/or the reaction is carried out at a pressure of 2 to 100 bar.

10. Method according to any one of Claims 6 to 9, **characterized in that** the solution containing methionine hydantoin and water or the solution containing the hydantoin of the amino acid selected from the group comprising lysine, threonine, tryptophan, histidine, valine, leucine, isoleucine, phenylalanine, arginine, cysteine, cystine and water was formed beforehand from one or more of the compounds III, IV and V.

11. Method according to Claim 6, comprising the following steps:
a) Reaction of the urea derivative according to formulae III, IV or V with the amino acid to a diketopiperazine VI of formula, 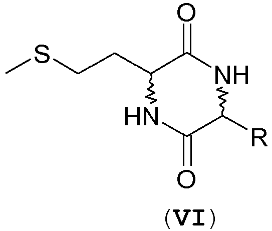 where R is defined as in Claim 6.
b) Reaction of the diketopiperazine VI to a mixture of dipeptides with the formulae DD/LL/DL/LD-I and DD/LL/DL/LD-II: 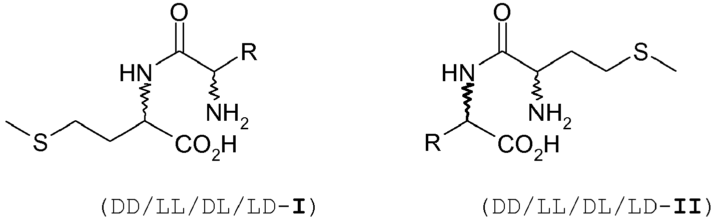 where R is defined as in Claim 6.

12. Method according to Claim 11, **characterized in that** the reaction of the urea derivative with the amino acid to the diketopiperazine takes place at a temperature from 20°C to 200°C and/or under pressure, preferably at a pressure from 2 to 90 bar.

13. Method according to any one of Claims 11 to 12, **characterized in that** the reaction of the urea derivative with the amino acid to the diketopiperazine takes place in the presence of a base, preferably a base selected from the group comprising nitrogen-containing bases, NH₄HCO₃, (NH₄)₂CO₃, KHCO₃, K₂CO₃, NH₄OH/CO₂ mixture, carbamate salts, alkali and alkaline-earth bases.

14. Method according to any one of Claims 11 to 13, **characterized in that** the reaction to the diketopiperazine takes place either by reaction of the urea derivative of formula, 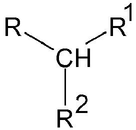 (**III** to **V**)
where R denotes a methionyl residue, with an amino acid selected from the group comprising lysine, threonine, tryptophan, histidine, valine, leucine, isoleucine, phenylalanine, arginine, cysteine or cystine,
or
by reaction of the urea derivative of formula, 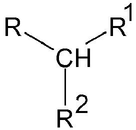 (**III** to **V**)
where R is an amino acid residue selected from the group comprising lysine, threonine, tryptophan, histidine, valine, leucine, isoleucine, phenylalanine, arginine, cysteine or cystine, with the amino acid methionine.

15. Method according to any one of Claims 11 to 14, **characterized in that** the reaction of the diketopiperazine to a mixture of dipeptides of formula **I** and **II** takes place by acid hydrolysis, preferably in the presence of an acid selected from the group comprising the mineral acids, HCl, H₂CO₃, CO₂/H₂O, H₂SO₄, phosphoric acids, carboxylic acids and hydroxycarboxylic acids.

16. Method according to any one of Claims 11 to 14, **characterized in that** the reaction of the diketopiperazine to a mixture of dipeptides of formula **I** and **II** takes place by basic hydrolysis, preferably at a pH from 7 to 14, and preferably is carried out using a base from the group comprising nitrogen-containing bases, NH₄HCO₃, (NH₄)₂CO₃, NH₄OH/CO₂ mixture, carbamate salts, KHCO₃, K₂CO₃, carbonates, alkali and alkaline-earth bases.

17. Method according to any one of Claims 6 to 16, **characterized in that** the urea derivative **III** to **V** is in the D-configuration, in the L-configuration or in a mixture of D- and L-configuration, preferably in a mixture of D- and L-configuration, if the urea derivative is derived from methionine (**IIIn** to **Vn**)**,** or
**characterized in that** the urea derivative **III** to **V** is in the D-configuration, in the L-configuration or in a mixture of D- and L-configuration, preferably in the L-configuration, if the urea derivative **III** to **V** is derived from an amino acid selected from the group comprising lysine, threonine, tryptophan, histidine, valine, leucine, isoleucine, phenylalanine, arginine, cysteine, cystine.

18. Method of isolation of the diastereomeric mixture of the dipeptides of formula **I** and **II** by crystallization from basic reaction solutions that were obtained according to Claim 16, preferably in that the solution is adjusted with an acid to a pH value from 2 to 10, especially preferably to a pH value from 3 to 9, quite especially preferably to the corresponding isoelectric point of the respective dipeptide of formula **I** or **II,** and the adjustment of pH preferably takes place with an acid selected from the group comprising the mineral acids, HCl, H₂CO₃, CO₂/H₂O, H₂SO₄, phosphoric acids, carboxylic acids and hydroxycarboxylic acids.

19. Method of isolation of the diastereomeric mixture of the dipeptides of formula **I** and **II** by crystallization from acidic reaction solutions that were obtained according to Claim 15, preferably in that the solution is adjusted by adding a base to a pH value from 2 to 10, especially preferably to a pH value from 3 to 9, quite especially preferably to the corresponding isoelectric point of the respective dipeptide of formula **I** or **II, characterized in that** the base is preferably selected from the group comprising NH₄HCO₃, (NH₄)₂CO₃, nitrogen-containing bases, NH₄OH, carbamate salts, KHCO₃, K₂CO₃, carbonates, alkali and alkaline-earth bases.

20. Use of the compounds **I** and **II** according to Claim 6 as feed additive for useful animals, preferably for poultry, pigs, ruminants, fresh-water or seawater fishes, Crustacea or pets.

## Revendications

1. Additif pour l'alimentation animale, contenant des dipeptides ou leurs sels, un résidu acide aminé du dipeptide étant un résidu DL-méthionyle et l'autre résidu acide aminé du dipeptide étant un acide aminé en la configuration L, choisi dans le groupe constitué par la lysine, la thréonine, le tryptophane, l'histidine, la valine, la leucine, l'isoleucine, la phénylalanine, l'arginine, la cystéine et la cystine.

2. Additif pour l'alimentation animale selon la revendication 1, contenant des dipeptides de formule générale DL-méthionyl-L-EAA et/ou L-EAA-DL-méthionine, L-EAA étant un acide aminé en la configuration L, choisi dans le groupe constitué par la lysine, la thréonine, le tryptophane, l'histidine, la valine, la leucine, l'isoleucine, la phénylalanine, l'arginine, la cystéine et la cystine.

3. Composition d'aliment pour animaux, contenant un additif pour l'alimentation animale selon la revendication 1 ou 2.

4. Composition d'aliment pour animaux selon la revendication 3, contenant du DL-méthionyl-L-EAA et/ou de la L-EAA-DL-méthionine seuls sous forme de D-méthionyl-L-EAA, L-méthionyl-L-EAA, L-EAA-D-méthionine ou L-EAA-L-méthionine, en mélange entre eux ou bien en mélange avec D-méthionyl-D-EAA, L-méthionyl-D-EAA, D-EAA-D-méthionine ou D-EAA-L-méthionine, de préférence dans chaque cas en plus en mélange avec de la DL-méthionine, de préférence avec une teneur en DL-méthionine de 0,01 à 90 % en poids, de préférence de 0,1 à 50 % en poids, de façon particulièrement préférée de 1 à 30 % en poids, de préférence dans chaque cas en mélange avec un L-EAA comme par exemple la L-lysine, de préférence avec une teneur en L-EAA de 0,01 à 90 % en poids, de préférence de 0,1 à 50 % en poids, de façon particulièrement préférée de 1 à 30 % en poids.

5. Dipeptide ou sel d'un tel dipeptide, de formule générale DL-méthionyl-DL-EAA ou DL-EAA-DL-méthionine, EAA étant un acide aminé de préférence en la configuration L, choisi dans le groupe constitué par la lysine, la thréonine, le tryptophane, l'histidine, la valine, la leucine, l'isoleucine, la phénylalanine, l'arginine, la cystéine et la cystine.

6. Procédé pour la préparation d'un dipeptide contenant seulement un résidu méthionyle selon la formule DD/LL/DL/LD-**I** ou DD/LL/DL/LD-**II** : 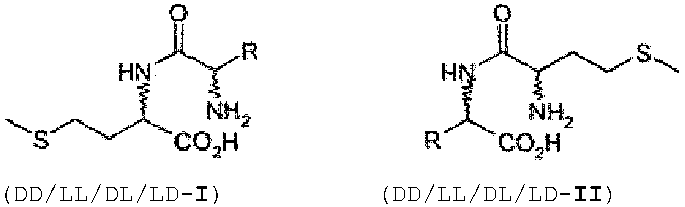 par mise en réaction d'un acide aminé avec un dérivé d'urée de formule générale **III** à **V,** 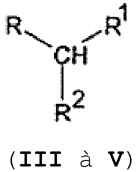 R étant défini comme suit :
| | | |
|---|---|---|
| **Ia** à **Va :** | R = 1-méthyléthyl- | (valine) |
| **Ib** à **Vb :** | R = 2-méthylpropyl- | (leucine) |
| **Ic** à **Vc :** | R = (1*S*)-1-méthylpropyl- | (isoleucine) |
| **Id** à **Vd :** | R = (1*R*)-1-hydroxyéthyl- | (thréonine) |
| **Ie** à **Ve :** | R = 4-aminobutyl- | (lysine) |
| **If** à **Vf :** | R = 3-[amino-iminométhyl)-amino]propyl- | (arginine) |
| **Ig** à **Vg :** | R = benzyl- | (phénylalanine) |
| **Ih** à **Vh :** | R = (1*H*-imidazol-4-yl)-méthyl- | (histidine) |
| **Ij** à **Vj :** | R = (1*H*-indol-3-yl)méthyl- | (tryptophane) |
| **Ik** à **Vk :** | R = -CH₂-SH | (cystéine) |
| **Im** à **Vm :** | R = -CH₂-S-S-CH₂-C(H)NH₂-COOH | (cystine) |
| **IIIn** à **Vn :** | R = -CH₂-CH₂-S-CH₃ | (méthionine) |
les radicaux R¹ et R² dans les dérivés d'urée **III, IV** et **V** étant définis comme suit :
**IIIa-n : R¹** = COOH, **R² =** NHCONH₂
**IVa-n : = R¹ =** CONH₂, **R²** = NHCONH₂
**Va-n : R¹-R² =** -CONHCONH-
soit R représentant un résidu méthionyle et l'acide aminé ajouté étant choisi dans le groupe constitué par la lysine, la thréonine, le tryptophane, l'histidine, la valine, la leucine, l'isoleucine, la phénylalanine, l'arginine, la cystéine et la cystine
soit
l'acide aminé ajouté étant la méthionine et R étant un résidu acide aminé choisi dans le groupe constitué par la lysine, la thréonine, le tryptophane, l'histidine, la valine, la leucine, l'isoleucine, la phénylalanine, l'arginine, la cystéine et la cystine.

7. Procédé selon la revendication 6, dans lequel l'hydantoïne de méthionine ou l'hydantoïne d'un acide aminé choisi dans le groupe constitué par la lysine, la thréonine, le tryptophane, l'histidine, la valine, la leucine, l'isoleucine, la phénylalanine, l'arginine, la cystéine, la cystine est utilisée comme produit de départ ou formée temporairement en tant que produit intermédiaire.

8. Procédé selon la revendication 6 ou 7, dans lequel on fait réagir avec l'acide aminé, dans des conditions basiques, une solution contenant de l'hydantoïne de méthionine et de l'eau, ou on fait réagir avec de la méthionine, dans des conditions basiques, une solution contenant l'hydantoïne de l'acide aminé choisi dans le groupe constitué par la lysine, la thréonine, le tryptophane, l'histidine, la valine, la leucine, l'isoleucine, la phénylalanine, l'arginine, la cystéine, la cystine et de l'eau.

9. Procédé selon l'une quelconque des revendications 6 à 8, dans lequel on ajuste à une valeur de 7 à 14 le pH de la solution contenant le dérivé d'urée et/ou on effectue la réaction à une température de 30 à 200 °C et/ou on effectue la réaction sous une pression de 2 à 100 bars.

10. Procédé selon l'une quelconque des revendications 6 à 9, dans lequel la solution contenant de l'hydantoïne de méthionine et de l'eau ou la solution contenant l'hydantoïne de l'acide aminé choisi dans le groupe constitué par la lysine, la thréonine, le tryptophane, l'histidine, la valine, la leucine, l'isoleucine, la phénylalanine, l'arginine, la cystéine, la cystine et de l'eau a été formée au préalable à partir d'un ou plusieurs des composés **III, IV** et **V.**

11. Procédé selon la revendication 6, comprenant les étapes suivantes :
a) mise en réaction du dérivé d'urée selon les formules **III, IV** ou **V** avec l'acide aminé, pour l'obtention d'une dicétopipérazine **VI** de formule 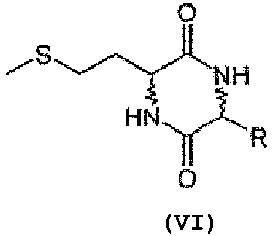 dans laquelle R est tel que défini dans la revendication 6,
b) conversion de la dicétopipérazine **VI** en un mélange de dipeptides de formules DD/LL/DL/LD-**I** ou DD/LL/DL/LD-**II** : 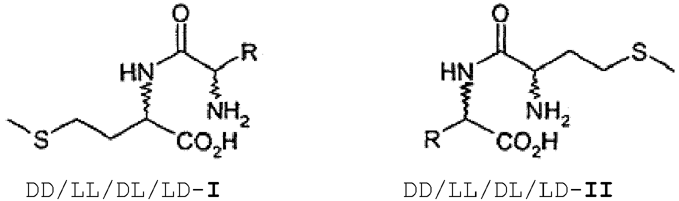 R étant tel que défini dans la revendication 6.

12. Procédé selon la revendication 11, dans lequel la réaction du dérivé d'urée avec l'acide aminé, conduisant à la dicétopipérazine, s'effectue à une température de 20 °C à 200 °C et/ou sous pression, de préférence sous une pression de 2 à 90 bars.

13. Procédé selon l'une quelconque des revendications 11 et 12, dans lequel la réaction du dérivé d'urée avec l'acide aminé, conduisant à la dicétopipérazine, s'effectue en présence d'une base, de préférence d'une base choisie dans le groupe constitué par des bases azotées, NH₄HCO₃, (NH₄)₂CO₃, KHCO₃, K₂CO₃, un mélange de NH₄OH/CO₂, des sels carbamate, des bases alcalines et alcalino-terreuses.

14. Procédé selon l'une quelconque des revendications 11 à 13, dans lequel la réaction conduisant à la dicétopipérazine s'effectue soit par la réaction du dérivé d'urée de formule 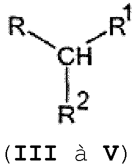 où R représente un résidu méthionyle, avec un acide aminé choisi dans le groupe constitué par la lysine, la thréonine, le tryptophane, l'histidine, la valine, la leucine, l'isoleucine, la phénylalanine, l'arginine, la cystéine et la cystine,
soit
par la réaction du dérivé d'urée de formule 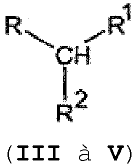 où R représente un résidu acide aminé choisi dans le groupe constitué par la lysine, la thréonine, le tryptophane, l'histidine, la valine, la leucine, l'isoleucine, la phénylalanine, l'arginine, la cystéine et la cystine, avec l'acide aminé méthionine.

15. Procédé selon l'une quelconque des revendications 11 à 14, dans lequel la conversion de la dicétopipérazine en un mélange de dipeptides de formules **I** et **II** s'effectue par hydrolyse acide, de préférence en présence d'un acide choisi dans le groupe des acides minéraux, HCl, H₂CO₃, CO₂/H₂O, H₂SO₄, les acides phosphoriques, les acides carboxyliques et les acides hydroxycarboxyliques.

16. Procédé selon l'une quelconque des revendications 11 à 14, dans lequel la conversion de la dicétopipérazine en un mélange de dipeptides de formules **I** et **II** s'effectue par hydrolyse basique, de préférence à un pH de 7 à 14, de préférence avec utilisation d'une base choisie dans le groupe constitué par des bases azotées, NH₄HCO₃, (NH₄)₂CO₃, un mélange de NH₄OH/CO₂, des sels carbamate, KHCO₃, K₂CO₃, des carbonates, des bases alcalines et alcalino-terreuses.

17. Procédé selon l'une quelconque des revendications 6 à 16, dans lequel le dérivé d'urée **III** à **V** se trouve en la configuration D, en la configuration L ou en un mélange des configurations D et L, de préférence en un mélange des configurations D et L, lorsque le dérivé d'urée est dérivé de méthionine (**IIIn** à **Vn),** ou
dans lequel le dérivé d'urée **III** à **V** se trouve en la configuration D, en la configuration L ou en un mélange des configurations D et L, de préférence en la configuration L, lorsque le dérivé d'urée **III** à **V** est dérivé d'un acide aminé choisi dans le groupe constitué par la lysine, la thréonine, le tryptophane, l'histidine, la valine, la leucine, l'isoleucine, la phénylalanine, l'arginine, la cystéine, la cystine.

18. Procédé pour l'isolement du mélange de diastéréoisomère des dipeptides de formules **I** et **II** par cristallisation à partir de solutions réactionnelles basiques qui ont été obtenues selon la revendication 16, de préférence par ajustement avec un acide de la solution à un pH de 2 à 10, de façon particulièrement préférée à un pH de 3 à 9, de façon tout particulièrement préférée au point isoélectrique correspondant du dipeptide respectif de formule **I** ou II, et l'ajustement du pH s'effectue de préférence à l'aide d'un acide choisi dans le groupe des acides minéraux, HCl, H₂CO₃, CO₂/H₂O, H₂SO₄, les acides phosphoriques, les acides carboxyliques et les hydroxycarboxyliques.

19. Procédé pour l'isolement du mélange de diastéréoisomère des dipeptides de formules **I** et **II** par cristallisation à partir de solutions réactionnelles acides qui ont été obtenues selon la revendication 15, de préférence par ajustement de la solution à un pH de 2 à 10, de façon particulièrement préférée à un pH de 3 à 9, de façon tout particulièrement préférée au point isoélectrique correspondant du dipeptide respectif de formule **I** ou **II,** par addition d'une base, la base étant de préférence choisie dans le groupe constitué par NH₄HCO₃, (NH₄)₂CO₃, des bases azotées, NH₄OH, des sels carbamate, KHCO₃, K₂CO₃, des carbonates, des bases alcalines et alcalino-terreuses.

20. Utilisation des composés **I** et **II** selon la revendication 6, en tant qu'additif pour l'alimentation animale pour des animaux utiles, de préférence des volailles, des porcins, des ruminants, des poissons d'eau douce ou salée, des crustacés ou des animaux de compagnie.
